# EUROPÄISCHE PATENTSCHRIFT

(11) **EP 2 926 505 B1**
(45) Veröffentlichungstag und Bekanntmachung des Hinweises auf die Patenterteilung: **07.08.2019**
(21) Anmeldenummer: 13831958.7
(22) Anmeldetag: 26.11.2013
(51) Int. Cl.: H04L 12/40, H04J 3/06

(54) **SCHNITTSTELLENVORRICHTUNG UND VERFAHREN ZUM AUSTAUSCHEN VON NUTZDATEN**
INTERFACE DEVICE AND METHOD FOR EXCHANGING USEFUL DATA
DISPOSITIF D'INTERFACE ET PROCÉDÉ D'ÉCHANGE DE DONNÉES UTILES

(30) Priorität: 29.11.2012 DE 102012023395
(43) Veröffentlichungstag der Anmeldung: 07.10.2015
(73) Patentinhaber: Airbus Defence and Space GmbH, 85521 Ottobrunn (DE)
(72) Erfinder: HARTLMÜLLER, Peter, 80995 München (DE); PLANKL, Helmut, 85055 Ingolstadt (DE); SCHULTE, Christoph, 59755 Arnsberg (DE)
(74) Vertreter: LKGLOBAL Lorenz & Kopf PartG mbB Patentanwälte
(86) Internationale Anmeldenummer: PCT/DE2013/000704
(87) Internationale Veröffentlichungsnummer: WO 2014/082619

(56) Entgegenhaltungen:
- EP-A2- 1 265 160
- US-A- 6 161 160
- US-A1- 2006 120 498
- US-A1- 2009 260 041
- US-B1- 6 539 488
- AHLEM MIFDAOUI ET AL: "Real-time characteristics of Switched Ethernet for 1553B-Embedded Applications: Simulation and Analysis", INDUSTRIAL EMBEDDED SYSTEMS, 2007. SIES '07. INTERNATIONAL SYMPOS IUM ON, IEEE, PI, 1. Juli 2007 (2007-07-01), Seiten 33-40, XP031131497, ISBN: 978-1-4244-0839-9 in der Anmeldung erwähnt

## Beschreibung

### Feld der Erfindung

Die vorliegende Erfindung betrifft das technische Gebiet der Luft- und Raumfahrttechnik. Insbesondere betrifft die vorliegende Erfindung eine Schnittstellenvorrichtung zum Austauschen von unterschiedlichen zeitkritischen Nutzdaten, eine Avionikkomponente, ein Kollisionsvermeidungssystem, ein Verfahren zum Austauschen von unterschiedlichen zeitkritischen Nutzdaten und ein Speichermedium.

### Hintergrund der Erfindung

Hoch agile Flugzeuge wie Militärflugzeuge bewegen sich mit sehr hohen Geschwindigkeiten. Ohne technische Komponenten, die die Fluglage regeln und die Piloten unterstützen, dass sie mit einer geringen Reaktionszeit auf Veränderungen reagieren können, ist es nahezu unmöglich ein stabiles und ökologischen Fliegen zu ermöglichen. Von Avionikkomponenten werden hierzu während des Fluges laufend Fluglage- und Umgebungsparameter ermittelt und zusammen mit den Steuervorgaben des Piloten vom Flight Control System in Regelvorgaben gewandelt oder auf Anzeigeeinrichtungen im Cockpit in aufbereiteter Form angezeigt. Für die Flugunterstützung werden an die Avionikkomponenten und insbesondere an den Verbund verschiedener Avionikkomponenten strenge Zeitanforderungen gestellt, insbesondere was die Latenz- und Zykluszeiten im Regelkreis beim Abfragen und Verteilen von Messgrößen und Steuervorgaben innerhalb des Flugregelsystems betrifft.

Ein Beispiel für einen Verbund von Avionikkomponenten, der ein Flight Control System bildet, mag ein GPS-System sein, das zusammen mit den Luftdaten (Drücke, Temperaturen und Winkel) und verschiedenen Trägheitssensoren anhand der Steuervorgaben des Piloten in den Auswerterechnern des Flight Control System ständig die neuen Stellgrößen für die verschiedenen Aktuatoren errechnet. Andere Beispiele sind die Signalvernetzung in einem Radarsystem, die Ansteuerung des Fahrwerks oder aber auch ein verteiltes Klimagerät für die Kabine mit seinen verteilten Sensoren oder Aktuatoren zur Temperatur und Druckregelung.

Diese beschriebene hohe Anforderung an das Antwortverhalten der Avionikomponenten, das mit einer sehr schnellen Antwortzeit bzw. Reaktionszeit der einzelnen Avionikkomponenten verbunden ist, wird unter dem Begriff Echtzeitfähigkeit zusammengefasst. Systeme, die gewissen Zeitanforderungen entsprechen, insbesondere die nach Absetzen eines Kommandos oder einer Nachricht garantieren innerhalb einer bestimmten Zeitspanne zu antworten, werden als Echtzeitsysteme oder echtzeitfähige Systeme bezeichnet.

Wie bereits beschrieben kann es sich bei Avioniksystemen um verteilte Echtzeitsysteme handeln, deren Komponenten an unterschiedlichen Stellen eines Flugzeuges positioniert sind. Durch den Einbau der Komponenten an unterschiedlichen Orten wird ein Netzwerk oder ein Übertragungsmedium benötigt, um die Avionikkomponenten zu einem Gesamtsystem zusammenzufügen. Aufgrund von erhöhten Robustheitsanforderungen insbesondere auf der physikalischen Schicht eines Netzwerkprotokolls beim Einsatz im Flugzeugbau kann zumeist nicht auf Standard-Netzwerkkomponenten zurückgegriffen werden, die meist wegen der einfacheren Verwaltung und des einfacheren Designs des Netzwerkes Kollisionen in ihren Konzepten vorsehen und damit das Verhalten des Gesamtsystems nicht deterministisch machen

Die Produktionskosten von Standard-Netzkomponenten mögen jedoch aufgrund wesentlich höherer Stückzahlen und geringerer Echtzeitanforderungen geringer sein, als die von in Avioniksystemen zur Sicherung des Echtzeitverhaltens zu verwendenden Netzwerkkomponenten und insbesondere deren physikalische Layer. Es wäre beispielsweise wünschenswert, Ethernetkomponenten für die Übertragung zu verwenden. Jedoch sieht eine auf Ethernet IEEE 802.3 (Institute of Electrical and Electronics Engineers) basierende Infrastruktur gerade Kollisionen bei einem gemeinsamen Netzwerkzugriff unterschiedlicher Komponenten vor. Ethernet stützt sich primär auf das Beheben von Kollisionen anstatt, dass es vorgesehen wäre Kollisionen zu vermeiden.

Netzwerksysteme, welche den Determinismus, der von Avioniksystemen gefordert ist, auf dem physikalischen Layer und auf höheren Layern einhalten können, sind beispielsweise das drahtgebundene MILBUS-, das EFABUS-(European Fighter Aircraft Bus Protocol) Protokoll oder das EFEx (EFABus Express) Protokoll auf Basis eines Glasfasernetzes.

Neben den hohen Kosten haben die für Avionikkomponenten eingesetzten Netzwerkinfrastrukturen den Nachteil, dass sie für manche zukünftige Konzepte neuer Avionikanwendungen oder mögliche zukünftige Avionikanwendungen zu langsam sind. So mag beispielsweise das MIL-STD-1553B Protokoll eine Übertragunsrate von 1 Mbit/s liefern können, was im Vergleich zu anderen kommerziellen Netzwerken als "langsam" erscheint, aber wegen der hohen Datensicherheit und des Determinismus trotzdem immer noch bevorzugt wird.

Aus dem Artikel Wang et al. "A Hard Real-Time Communication Control Protocol Based on the Ethernet" Proceedings 7th Australasin Conference on Parallel and Real-Time Systems (Part 2000), Seiten 161 bis 170, Sydney, Australien, November 2000, Springer Verlag, ISBN 962-430-134-4 ist bekannt, ein Ethernetbasiertes Kommunikationsprotokoll, das sog. Real-Time Communication Control (RTCC) Protokoll, auf einem Ethernet MAC (Medium Access Control) Protokoll zu betreiben.

Der Artikel A. Mifdaoui, et al., "Real-Time characteristics of Switched Ethernet for "1553B"-Embedded Applications: Simulation and Analysis", 1-4244-0840-7/07, IEEE 2007, analysiert einen Echtzeitverkehr in Analogie zu dem MIL-STD-1553B Datenbus in einem Militärflugzeug, wobei die Traffic Shaping-Methoden First-Come First-Served (FCFS), Static Priority (SP) und Weighted Fair Queueing (WFQ) genutzt werden.

Die Patentschrift US 6,539,488B1 offenbart eine herkömmliche Schnittstellenvorrichtung zum Datenaustausch zwischen einer Hosteinrichtung und einem geteiltem Medium.

Es mag seitens einer Vielzahl existierender Avionik-Anwendungen der Bedarf nach einem Determinismus bei der Kommunikation bestehen.

### Zusammenfassung der Erfindung

Gemäß einem Aspekt der vorliegenden Erfindung werden eine Schnittstellenvorrichtung zum Austauschen von unterschiedlichen zeitkritischen Nutzdaten, eine Avionikkomponente, ein Kollisionsvermeidungssystem, ein Verfahren zum Austauschen von unterschiedlichen zeitkritischen Nutzdaten und ein Speichermedium bereitgestellt. Das Speichermedium mag von einem Computer lesbar sein. Eine Schnittstellenvorrichtung mag für jeden Teilnehmer eines Kommunikationssystems bereitgestellt sein.

Die Erfindung ist in den unabhängigen Patentansprüchen angegeben. Weitere Aspekte der Erfindung ergeben sich aus den Merkmalen der abhängigen Patentansprüche.

Gemäß einem Aspekt der vorliegenden Erfindung mag das Kommunikationssystem logisch eine Bus-Topologie aufweisen, physikalisch mag jedoch eine andere Topologie verwendet werden, wie z.B. eine Sterntopologie oder eine Baumtopologie.

Mittels der Erfindung mag es nicht nur möglich sein, bei Neuinstallationen von Avioniksystemen in Flugzeugen auf Standard Netzwerkkomponenten zurückzugreifen sondern auch Avionikkomponenten miteinander zu verbinden und dabei auf eine bereits vorhandene Netzwerkstruktur unabhängig von dem darauf eingesetzten Protokoll aufzusetzen.

Gemäß einem Aspekt der vorliegenden Erfindung wird eine Schnittstellenvorrichtung zum Austauschen von unterschiedlichen zeitkritischen Nutzdaten zwischen einer Hosteinrichtung und einem geteilten Medium bereitgestellt. Die Schnittstellenvorrichtung weist eine erste Schnittstelle zum Austauschen der unterschiedlichen zeitkritischen Nutzdaten mit der Hosteinrichtung und eine zweite Schnittstelle zum Austauschen der unterschiedlichen zeitkritischen Nutzdaten mit dem geteilten Medium auf. Darüber hinaus weist die Schnittstellenvorrichtung eine Ressourcenverwaltungseinrichtung auf. In einem Beispiel mag die Kombination aus einer Schnittstellenvorrichtung und einer Hosteinrichtung und/oder die Schnittstellenvorrichtung alleine als Teilnehmer bezeichnet werden.

Die erste Schnittstelle arbeitet mit einem ersten Takt und die zweite Schnittstelle arbeitet mit einem zweiten Takt, der sich von dem ersten Takt unterscheiden kann. Der erste Takt kann also gleich dem zweiten Takt sein oder beide Takte können verschieden sein. Die Hosteinrichtung mag bei der Verwendung von unterschiedlichen Takten also asynchron zu den verbleibenden Komponenten der Schnittstelleneinrichtung arbeiten. In einem Beispiel mag die zweite Schnittstelle mit unterschiedlichen Takten für das Empfangen und Senden von Signalen arbeiten, so dass die zweite Schnittstelle beispielsweise mit dem zweiten Takt Signale sendet und mit einem dritten Takt Signale empfängt. Die Sendetaktdomain und die Empfangstaktdomain mag in diesem Fall mit unterschiedlichen Takten arbeiten.

Ferner weist die Schnittstellenvorrichtung eine Resourcenverwaltungseinrichtung und eine Zwischenspeichereinrichtung auf. Die erste Schnittstelle und die zweite Schnittstelle sind mit der Zwischenspeichereinrichtung verbunden. Über die Zwischenspeichereinrichtung kann der Austausch der unterschiedlichen zeitkritischen Nutzdaten zwischen der ersten Schnittstelle und der zweiten Schnittstelle ermöglicht werden.

Die Ressourcenverwaltungseinrichtung ist so eingerichtet, dass sie den Austausch der unterschiedlichen zeitkritischen Nutzdaten zwischen der ersten Schnittstelle und der zweiten Schnittstelle derart steuern kann, dass Kollisionen der unterschiedlichen zeitkritischen Nutzdaten innerhalb der Schnittstellenvorrichtung und/oder auf dem geteilten Medium vermieden werden. Das Vermeiden der Kollisionen der unterschiedlichen zeitkritischen Nutzdaten gewährleistet ein deterministisches Verhalten beim Austauschen der unterschiedlichen zeitkritischen Nutzdaten. Darüber hinaus ist die Ressourcenverwaltungseinrichtung eingerichtet, die Zwischenspeichereinrichtung derart anzusteuern, dass die unterschiedlichen zeitkritischen Nutzdaten mit Hilfe der Zwischenspeichereinrichtung derart zwischengespeichert werden können, dass ein Taktunterschied zwischen dem ersten Takt und dem zweiten Takt ausgeglichen wird.

Beispiele von unterschiedlichen Nutzdaten können gegenläufige Datenströme oder sich zeitlich hintereinander in gleicher Richtung ausbreitende Datenströme sein. In einem Beispiel mag es sich bei den unterschiedlichen zeitkritischen Nutzdaten um Nutzdaten handeln, welche im Wesentlichen gleichzeitig in zwei unterschiedlichen Übertragungsrichtungen übertragen werden. Das im Wesentlichen gleichzeitige Übertragen in unterschiedliche Richtungen mag als bidirektionales Übertragen bezeichnet werden. Neben dem Verhindern von Kollisionen dieser Nutzdaten, die sich in unterschiedliche Übertragungsrichtungen ausbreitenden, mögen auch Kollisionen von unterschiedlichen Nutzdaten, die sich in die gleiche Übertragungsrichtung bewegen jedoch zeitlich hintereinander ablaufen, vermieden werden. In anderen Worten mag eine zeitliche Reihenfolge oder ein zeitlicher Determinismus der Nutzdaten eingehalten werden. Ein gegenseitiges Überholen von Nutzdaten innerhalb der Schnittstellenvorrichtung mag durch Zugriffsregeln auf den Zwischenspeicher vermieden werden. Die Einhaltung der Zugriffsregeln mag durch die Resourcenverwaltungseinrichtung oder von Teilen der Resourcenverwaltungseinrichtung überwacht werden. In einem Beispiel mag die Resourcenverwaltungseinrichtung eine Finite State Machine (FSM) oder eine sequentielle eindimensionale FSM aufweisen. Eine FSM mag durch ihre Zustände und Zustandswechsel beschrieben sein. Bei einer eindimensionalen und sequentiellen FSM mögen die meisten Zustandswechsel der FSM statisch sein. Der Status, den die FSM beispielsweise zu einem Zeitpunkt t1 einnimmt mag im Wesentlichen einzig eine Funktion des zuvor eingenommenen Status zu einem Zeitpunkt t0 sein und nicht von anderen Parametern abhängig. Wenn ein Signalfolgeplan, ein Layout oder ein Controlpath einer solchen FSM grafisch dargestellt würde, dann würde er wenige Abzweigungen aufweisen und somit im Wesentlichen eindimensional sein. Die einzelnen Stati werden sequentiell, nacheinander duchgetaktet und in der durch den Controlpath vorgegebenen Reihenfolge eingenommen. Durchtakten mag einen Vorgang bezeichnen, bei dem schrittweise von einem Zustand in den nächsten gesprungen wird.

In einem Beispiel mögen die unterschiedlichen zeitkritischen Nutzdaten unter Berücksichtigung ihrer Zeitvorgaben so in der Zwischenspeichereinrichtung zeitlich und örtlich arrangiert werden, dass sie sich nicht gegenseitig blockieren. In einem anderen Beispiel mag für das Arrangieren im Wesentlichen lediglich eine Register-Logik genutzt werden, um den geforderten Determinismus sicherzustellen. In einem weiteren Beispiel mag die Resourcenverwaltungseinrichtung mit der ersten Schnittstelle und/oder mit der Zwischenspeichereinrichtung verbunden sein. Die Resourcenverwaltungseinrichtung mag mittels einer Steuerlogik oder Register-Logik realisiert sein. Die Resourcenverwaltungseinrichtung, insbesondere die Steuerlogik, kann auch als ein Zwischenspeicher genutzt werden. Die Steuerlogik kann auch als eine Koppelmatrix oder als Switch realisiert sein.

Das Ausgleichen der unterschiedlichen Takte mag es ermöglichen, dass eine Vielzahl von Schnittstelleneinrichtungen, die an dem selben Medium betrieben werden, synchron arbeiten, jedoch die jeweiligen Hosteinrichtungen mit unterschiedlichen Takten arbeiten können und somit unterschiedliche Avionikanwendungen ausführen können.

Gemäß einem weiteren Aspekt der Erfindung wird eine Avionikkomponente beschrieben, die eine Hosteinrichtung, eine Medienverbindeeinrichtung oder einen Netzwerkcontroller und die erfindungsgemäße Schnittstellenvorrichtung aufweist. Die Hosteinrichtung ist zum Ausführen einer Avionikanwendung eingerichtet, welche Nutzdaten generiert und/oder auswertet. Die Hosteinrichtung ist zum Austauschen der Nutzdaten mit der Schnittstellenvorrichtung verbunden, wobei die Schnittstellenvorrichtung auch zum Austauschen der Nutzdaten mit der Medienverbindeeinrichtung verbunden ist.

Die Hosteinrichtung mag eine Avionikanwendung steuern, welche sich nicht um die Art und Weise der Datenübertragung kümmert. Beispielsweise mag eine Avionikanwendung den Schichten 4 bis 7 des OSI-Modells (Open Systems Interconnection Reference Model) zugeordnet sein. Das Zusammenwirken der einzelnen verteilten Echtzeit-Anwendung mag zu einem Gesamtsystem führen, das echtzeitfähig ist. Dieses Gesamtsystem mag Aufgaben erfüllen, die zum Betreiben eines Flugzeuges nötig sind. Beispielsweise mögen die Avionikkomponenten im Verbund oder das Avionik-Gesamtsystem Aufgaben erfüllen, die die Navigation, die Steuerung von Klimageräten und/oder die Geschwindigkeitsmessung unterstützen. Dieses Zusammenwirken verschiedener Echtzeit-Anwendungen mag als verteilte Echtzeit-Anwendung bezeichnet werden.

Die Medienverbindeeinrichtung mag eine Verbindung zwischen der Schnittstellenvorrichtung und einem physikalischen, geteilten Medium herstellen. Innerhalb der Medienverbindeeinrichtung können beispielsweise Signalpegel hergestellt werden, welche es erlauben von der Hosteinrichtung erzeugte Daten auf dem physikalischen Medium zu übertragen. Die von der Hosteinrichtung erzeugten Daten werden über die Schnittstellenvorrichtung an die Medienverbindeeinrichtung herantransportiert. Während diesem Transport mögen die Nutzdaten schon so mit Zusatzinformationen wie einem Übertragungsrahmen versehen werden, dass die Medienverbindeeinrichtung die gelieferten Nutzdaten im Wesentlichen nur noch in Signalpegel wandeln muss. Oftmals mag die Medienverbindeeinrichtung als MAU (Medium Attachment Unit) eingerichtet sein. Die Medienverbindungseinrichtung mag einen Netzwerkcontroller aufweisen. Ferner mag die Medienverbindungseinrichtung in einem Beispiel eine medienunabhängige Schnittstelle (Media Independent Interface) aufweisen, beispielsweise MII oder GMII (Gigabit MII), über die sie die Nutzdaten empfangen und/oder senden kann.

Gemäß noch einem anderen Aspekt der vorliegenden Erfindung wird ein Kollisionsvermeidungssystem beschrieben, welches zumindest zwei Schnittstellenvorrichtungen und zumindest zwei Medienverbindeeinrichtungen aufweist. Die Medienverbindeeinrichtungen verbinden die zumindest zwei Schnittstellenvorrichtungen über ein geteiltes Medium und arbeiten jeweils mit einem Kollisionserkennungsprotokoll. Die zumindest zwei Schnittstellenvorrichtungen nutzen ein Befehls/Antwort Protokoll und überwachen mittels einer Zeitüberwachungseinrichtung das Zeitverhalten des Befehls/Antwort Protokolls derart, dass das Zeitverhalten des Befehls/Antwort Protokolls eingehalten wird, um Kollisionen des Kollisionserkennungsprotokolls zu vermeiden.

Für die Überwachung des Zeitverhaltens des Befehls/Antwort Protokolls (Command/Response Protokoll) mag eine zentrale Steuereinrichtung, ein Dirigent oder ein Buscontroller verwendet werden, der vorschreibt, zu welchen Zeitpunkten einzelne Aktionen auf dem geteilten Medium stattfinden sollen. Diese zentrale Steuereinrichtung mag dafür sorgen, dass nicht mehr als ein einziger Teilnehmer auf das geteilte Medium zugreift, beispielsweise dadurch, dass Nachrichten, die aufgrund eines zu schnellen Durchlaufs durch die Schnittstellenvorrichtung zu früh vorhanden sind zurückgehalten werden bis der Datentransfer vom Buscontroller angefordert wurde.

Gemäß einem anderen Aspekt der vorliegenden Erfindung wird ein Verfahren zum Austauschen von unterschiedlichen zeitkritischen Nutzdaten zwischen einer Hosteinrichtung und einem geteilten Medium beschrieben. Dieses Verfahren weist den Schritt des Betreibens einer ersten Schnittstelle einer Schnittstellenvorrichtung mit einem ersten Takt und das Betreiben einer zweiten Schnittstelle der Schnittstellenvorrichtung mit einem zweiten Takt auf, wobei sich der erste Takt vom zweiten Takt unterscheiden kann. In einem Beispiel mag der erste Takt und der zweite Takt im Wesentlichen gleich sei. In einem anderen Beispiel mag der erste Takt und der zweite Takt unterschiedlich sein. Ferner sieht das Verfahren das Verbinden der ersten Schnittstelle und der zweiten Schnittstelle mit einer Zwischenspeichereinrichtung vor und das Austauschen der unterschiedlichen zeitkritischen Nutzdaten zwischen der ersten Schnittstelle und der zweiten Schnittstelle über die Zwischenspeichereinrichtung. Auch steuert das Verfahren den Austausch der unterschiedlichen zeitkritischen Nutzdaten zwischen der ersten Schnittstelle und der zweiten Schnittstelle derart, dass Kollisionen der unterschiedlichen zeitkritischen Nutzdaten innerhalb der Schnittstellenvorrichtung und/oder Kollisionen auf einem an der Schnittstellenvorrichtung angeschlossenen geteilten Medium vermieden werden, um ein deterministisches Verhalten beim Austauschen der unterschiedlichen zeitkritischen Nutzdaten zu ermöglichen. Schließlich ist in dem Verfahren noch das Zwischenspeichern der unterschiedlichen zeitkritischen Nutzdaten vorgesehen, so dass durch das Zwischenspeichern ein Taktunterschied zwischen dem ersten Takt und dem zweiten Takt ausgeglichen wird.

Gemäß einem anderen Aspekt wird ein Speichermedium beschrieben, in dem ein Programm gespeichert ist, das, wenn es von einem Prozessor ausgeführt wird, das Verfahren zum Austauschen von unterschiedlichen zeitkritischen Nutzdaten ausführt.

Als ein computerlesbares Speichermedium mag eine Floppy Disk, eine Festplatte, ein USB (Universal Serial Bus) Speichergerät, ein RAM (Random Access Memory), ein ROM (Read Only Memory) oder ein EPROM (Erasable Programmable Read Only Memory) aufweisen. Als ein computerlesbares Speichermedium mag auch ein Kommunikationsnetz angesehen werden, wie z.B. das Internet, welches das Herunterladen eines Programm Codes erlaubt.

Die Schnittstellenvorrichtungen mögen im Wesentlichen dafür sorgen, dass das Verhalten eines eingesetzten Netzwerkes, eines Gesamtsystems oder Mediums im Wesentlichen den gleichen Grad an Determinismus implementiert, wie die Systeme, Schnittstellenvorrichtungen, Avioniksysteme, Hosteinrichtungen oder Teilnehmer selbst, um das harte Echtzeitverhalten des Gesamtsystems nicht zu gefährden. Das mag bedeuten, dass bei einem verteilten Echtzeitsystem Reaktionszeiten für eine Kommunikation von einer zentralen Steuereinheit eines Avioniksystems zu einem entfernten Sensor oder Aktuator des Avioniksystems und/oder zurück innerhalb eines fest vorgegebenen oder deterministisch vorgegebenen Zeitintervalls liegen sollten und die Einhaltung des Zeitintervalls für die entsprechende Kommunikation sichergestellt wird. Würde es zu einer Verzögerung kommen, könnte das Gesamtsystem in einen instabilen Zustand geraten, da beispielsweise zu einer bestimmten Zeit benötigte Informationen nicht vorhanden sind.

Zur Gewährleistung dieses hohen Grads an Determinismus mag in der Avionik bei dem Einsatz von verteilten Systemen ein Netzwerktransfer durch eine zentrale Kommunikationseinheit gesteuert werden, dem sog. Bus Controller (BC). Dieser soll den Überblick über die Belegung des Übertragungsmediums behalten und verhindern, dass mehrere der verteilten Komponenten unkontrolliert und gleichzeitig auf die gemeinsam genutzte Netzinfrastruktur zugreifen. Ein gleichzeitiges Zugreifen auf die gemeinsam genutzte Infrastruktur könnte zu Kollisionen führen. Zwar können solche Kollisionen aufgehoben werden, beispielsweise bei CSMA/CD (Carrier Sense Multiple Access/Collision Detection), jedoch mag das Gesamtsystem hierbei Zeit zum Beseitigen der Konflikte verlieren und somit auch den deterministischen Charakter verlieren. Ein BC kann mit einer zentralen Komponente eines Avioniksystems auf einer gemeinsamen Einrichtung untergebracht sein. Kann aber auch als separate Einrichtung realisiert sein, die sich im Wesentlichen ausschließlich um die Zuteilung des Übertragungsmediums kümmern mag.

Der zeitliche Ablauf einer zentralen Steuereinheit mag vorgegeben sein. Das Vorgeben des zeitlichen Ablaufs mag zu einem statischen Verhalten der zentralen Steuereinheit führen und das statische Verhalten mag der zentralen Steuereinheit und/oder dem Gesamtsystem einen deterministischen Charakter verleihen. D. h. durch Zuteilungen, die beim Design eines Netzwerks unter Berücksichtigung von Signallaufzeiten festgelegt werden, kann vorherbestimmt werden, zu welcher Zeit welche Komponente die gemeinsame Netzinfrastruktur nutzen kann. Es kann auch gewährleistet werden, dass es zu keinen unvorhergesehenen und zusätzlichen Verzögerungen kommt. Gewisse Verzögerungen können jedoch zugelassen werden und bereits beim Design des Netzwerksystems einbezogen werden, solange sie deterministisch sind, also immer wieder in der selben Art und Weise mit gleichen Eigenschaften auftreten. Solche zugelassenen Verzögerungen mögen beispielsweise die Verzögerung für das Durchführen von Rechenoperationen innerhalb der Systemkomponenten, die Laufzeit innerhalb eines Systems oder die Laufzeiten auf dem Medium sein. Die Systemkomponenten und das Medium mögen das Netzwerk bilden.

Avioniksysteme, insbesondere die Software der Avioniksysteme, also beispielsweise eine Navigationssoftware, mag auf diesem Ansatz basieren und mag sich darauf verlassen, dass die für den Transport der Daten verantwortlichen Systeme eine vorgegebene Reaktionszeit verantworten oder einhalten können. So kann im Falle eines GPS oder Radarsystems eine zentrale Navigationssoftware vorgeben, zu welchen Zeitpunkten aktuelle Positionsdaten eines GPS-Empfängers gelesen werden sollen.

Um diesen Determinismus sicherzustellen, der von Avionikkomponenten oder Avioniksystemen gefordert wird, mögen für die Netzwerke spezielle Layer von Netzwerkprotokollen zum Einsatz kommen, beispielsweise die physikalischen Layer auf Schicht 1 des OSI-Netzwerkmodells, die speziell auf die Avionikanforderungen ausgelegt sind. Die Layer mögen als Baugruppen realisiert sein. Eine sorgfältige Ausgestaltung von Layer 1 mag eine Voraussetzung für die Signalintegrität in rauen Umgebungen sein, z.B. beim Vorliegen von Strahlung oder zum Erfüllen von EMV (Elektromagnetische Verträglichkeit) Vorgaben in Flugzeugen. Da Layer 1 Übertragungsfehler vermeidet, mag seine anwendungsgerechte Gestaltung eine notwendige, aber keine hinreichende Bedingung für den geforderten Determinismus sein.

Ein Determinismus mag sich somit im Wesentlichen nur realisieren lassen, wenn höhere Schichten des Netzwerkprotokolls Kollisionen vermeiden. Der zeitliche Determinismus der Übertragung kann durch eine spezifische Gestaltung der höheren Schichten, wie z.B. der Media Access Control Schicht oder der Applikations Schicht oder der Baugruppen, die sie realisieren, gewährleistet werden.

Seitdem die Standards EFABUS und EFEx einsatzfähig wurden, mag es Ethernet Technologien basierend auf dem Protokoll IEEE 802.3 geben, welche sich durch ausreichende Robustheit gegen elektromagnetische Feldeinwirkungen auszeichnen. Die Einsatzfähigkeit der Ethernet Technologie und die damit ausreichende Robustheit hat sich bei Experimenten mit AFDX Netzen (Avionics Full Duplex Switched (X) Ethernet) gezeigt, die auch eine Ethernet Technologie nutzen. AFDX Netze und/oder AFDX Komponenten müssen jedoch angepasst werden, um sie zu im Wesentlichen vollständig deterministischen Komponenten zu machen. Als Access Point oder Schnittstelle für die physikalische Schicht (Physical Layer) des IEEE 802.3 oder Ethernet ist ein medienunabhängiges Interface (MII, Media Independent Interface) bzw. das GMII (Gigabit MII) vorgesehen.

Auf den vorgenannten Schichten des Ethernets mag ein Befehls/Antwort Protokoll oder Command/Response Protokoll aufgesetzt werden. Bei dem Aufsetzen des Befehls/Antwort Protokolls auf Ethernet mögen nicht einzelne Protokollschichten ersetzt werden. Sondern das Ethernet Protokoll mag mit Elementen des Befehls/Antwort Protokolls angereicht werden. Das Ethernet Protokoll mag im Wesentlichen den Schichten 1 bis 2 und das Befehls/Antwort Protokoll mag den Schichten 1 bis 4 des OSI Modells zuzuordnen sein. Insbesondere mag gemäß einem Aspekt der Erfindung das Ethernet Protokoll IEEE 802.3 exklusiv für die Realisierung der Funktionen der Schicht 1 eingesetzt werden, während das Befehls/Antwort Protokoll im Wesentlichen exklusiv für die Schicht 2 eingesetzt werden mag. Oder in anderen Worten, mag in einer Schnittstellenvorrichtung und/oder ein einem Gesamtsystem gemäß der Erfindung ein Ethernet Protokoll realisiert werden, bei dem die Funktionalität der Schicht 2 durch ein Befehls/Antwort Protokoll ersetzt oder angereichert worden ist. Somit kann die von einem möglicherweise bereits existierenden physikalischen Medium bereitgestellte Schicht 1 genutzt werden und durch den Austausch der Schicht 2 in Kombination mit dem Einhalten eines internen Determinismus der Schnittstellenvorrichtung an die Anforderungen zum Betrieb in einem Flugzeug angepasst werden. Die Trennung der Schicht 1 und Schicht 2 mag anhand des Aufbaues eines von der Schnittstellenvorrichtung erzeugten Übertragungsrahmens ersichtlich sein. Zur Überprüfung der Erzeugung eines erfindungsgemäßen Übertragungsrahmens mag ein Protokollanalyzer nutzbar sein. In einem Beispiel mag auch AFDX durch das Anpassen der Schicht 2 mit einem Befehls/Antwort Protokoll und mit dem Sicherstellen eines internen deterministischen Zeitverhaltens mittels der Schnittstellenvorrichtung echtzeitfähig gemacht werden. Es mag also im Wesentlichen das Befehls/Antwort-Protokoll für die Schicht 2 verwendet werden. In einem Beispiel mag jedoch in dem Befehls/Antwort-Protokoll die Prüfsumme, insbesondere das Prüfsummenverfahren, verwendet werden, die/das der Definition für die Prüfsumme/für das Prüfsummenverfahren der Ethernet Schicht 2 entspricht. Durch die Benutzung der Prüfsumme entsprechend der Definition für die Schicht 2 des Ethernets kann die Kompatibilität mit anderen Ethernet Geräten gewährleistet werden, wie z.B. mit einem Switch, der den Ethernet Standard implementiert.

Das Befehls/Antwort Protokoll mag mittels eines FPGAs (Field Programmable Gate Array), also mit Register Logik und Speicher Logik und insbesondere unter Nutzung der Logikbausteine und Speicherbausteine des FPGAs derart implementiert werden, dass die zeitlichen Anforderungen an die Antwortzeit erfüllt werden können, bis zu der, nach dem Absetzen eines Kommandos oder Befehls eine Antwort zurückkommt. Ein Implementieren des Befehls/Antwort Protokolls auf Basis eines FPGAs kann minimale Verarbeitungslatenzen und einen maximalen Durchsatz von Daten durch das FPGA garantieren. In anderen Worten mag durch das Ausschalten von Störgrößen, indem das FPGA speziell auf das Befehls/Antwort Protokoll zugeschnitten ist, ein unvorhersagbares Stören der Abarbeitung des Befehls/Antwort Protokolls verhindert werden. Folglich mag ein deterministisches Verhalten der Schnittstellenvorrichtung realisierbar sein. Die Register Logik und/oder Speicher Logik mag während des Betriebes von äußeren Einflüssen, wie Interrupts, auf das FPGA abgeblockt sein.

Betriebsstörungen, wie beispielsweise der Ausfall einer Komponente, insbesondere eines Kabels oder eines Gerätes, können durch das Vorsehen von Redundanzen vermindert werden. Solche Betriebsstörungen haben jedoch im Wesentlichen keinen Einfluss auf das Zeitverhalten der Übertragung sondern auf die Betriebsfähigkeit des Systems an sich und führen möglicherweise sogar zu einem vollständigen Betriebsausfall. Diese Betriebsstörungen mögen im Wesentlichen nicht während eines Betriebs abblockbar sein, jedoch können ihre Auswirkungen reduziert werden. Für die Herstellung einer Redundanz mögen sowohl das Kommunikationsmedium als auch der Initiator der Bustransaktionen (BC) gedoppelt oder vervielfacht werden, so dass im Fehlerfall umgeschaltet werden kann. Im Folgenden mögen gedoppelte Komponenten angenommen werden, die mit A und B bezeichnet werden. Ein Fehlerfall kann beispielsweise ein Kabelbruch oder ein Geräteausfall sein. Tritt ein solcher Fehlerfall in einem redundanten System auf kann auf den noch funktionsfähigen Bus A oder Bus B und/oder den Bus Controller (BC) A bzw. BC B umgeschaltet werden, falls das Kommunikationsmedium in Form eines ersten Bus A und eines zweiten Bus B gedoppelt ist, sowie ein weiterer Bus Controller B (Alternate Bus Controller B) neben dem ersten BC A vorgesehen ist. Ein gedoppelter Bus mag als dual redundanter Bus bezeichnet werden, wenn der Datenstom nur auf einem Bus erfolgt oder als Duplex Bus bezeichnet werden, wenn der Datenstrom gleichzeitig auf beiden erfolgt. Auch eine dreifache oder vierfache Redundanz des Busses ist möglich und wird als Triple bzw. Quadruplex Bus bezeichnet. Der Datenstrom wird in diesen Fällen in der Regel gleichzeitig auf allen vorhandenen Buszweigen (Lanes) verteilt.

Ein solcher beschriebener Fehlerfall kann zwar auch den Determinismus des Gesamtsystems beeinflussen, mag jedoch nicht vermeidbar sein, wie das Abblocken von äußeren Einflüssen, beispielsweise das Auftreten von Verzögerungen unvorhersehbarer Dauer. Jedoch mögen sich in einem deterministisch aufgebauten System Ausfälle, wie ein Kabelbruch in einem Datenbus, schnell und im Wesentlichen eindeutig erkennen lassen. Denn in einem Fehlerfall wird unmittelbar nach einer fest vorgegebenen Zeit ohne Datenempfang ein Zeitüberwachungssystem einen Alarm erzeugen, beispielsweise einen Time Out. Der Alarm kann schnell erzeugt werden, da wegen des Abblockens von anderen äußeren Einflüssen sofort auf den jeweiligen Fehlerort über das entsprechend zugeordnete Zeitüberwachungssystem und den Grund des Fehlers geschlossen werden kann. Da auf diese Weise beispielsweise ein Übertragungsfehler im Wesentlichen eindeutig erkannt wird, können sofort Redundanzmaßnahmen aktiviert werden, wie das Umschalten auf eine alternative Busleitung oder auf ein alternatives Gerät.

Systeme, die nicht deterministisch aufgebaut sind können nicht so schnell die Fehlersituation eingrenzen, da ein eindeutiges Kriterium fehlt.

Der Buscontroller arbeitet zyklisch gemäß dem Befehls/Antwort Protokoll eine Busliste oder einen Ablaufplan ab, welche/welcher regelt, wann welche Nutzdaten zwischen welchen Teilnehmern ausgetauscht werden. Dieser Ablaufplan mag als "Fahrplan für die Nutzdaten" gesehen werden.

Der Buscontroller, der die Befehle des Befehls/Antwort Protokoll auf den Bus sendet, mag im Fall eines Fehlers nach der Fehlererkennung die Fehlerbehebung steuern, indem er entweder auf eine alternative Busliste für das Befehls/Antwort Protokoll umschaltet oder einzelne Parameter der Busliste nach vorgegebenen Algorithmen derart ändert, dass er im Fehlerfall redundant vorhandene Systeme nutzt. Durch das Ansprechen der redundanten Geräte kann sowohl zwischen Busleitungen A und B als auch zwischen ganzen Geräten umgeschaltet werden. Der Buscontroller (BC) wird hierzu auch Systeme, die als dauerhaft defekt erkannt worden sind, aus der Busliste nehmen, so dass durch einen sinnlosen Nutzungsversuch defekter Komponenten keine weitere Zeit mehr verschwendet wird. In anderen Worten stellt die Busliste bzw. das Busprotokoll den Ablaufplan dar und der Buscontroller kann auf eine alternative Busliste umschalten oder einzelne Parameter der vorhandenen Busliste nach vorgegebenen Kriterien ändern. So kann in einem Beispiel ein Gerät zusätzlich angesprochen werden oder aus der Kommunikation ausgenommen werden, indem es in dem Ablaufplan hinzugefügt bzw. aus dem Ablaufplan herausgenommen wird. Wird jedoch an dem Ablaufplan nichts geändert und soll alternativ statt einem bisher eingesetzten Gerät ein bislang nicht benutztes gleichwertiges Gerät verwendet werden, so mag die Adresse in einer bestehenden Busliste geändert werden.

Alternativ zu der Realisierung der Schnittstellenvorrichtung mittels eines FPGAs mag die Schnittstellenvorrichtung mittels eines ASICs (Application Specific Integrated Circuit) realisiert werden. Die Schnittstellenvorrichtung kann aber auch, statt mittels Hardware, mittels einer im Wesentlichen softwarebasierten Lösung bereitgestellt werden, welche durch das individuelle Zuteilen von Ressourcen für die Abarbeitung des Befehls/Antwort Protokolls das Einhalten des zeitlichen Determinismus gewährleisten kann. Bei der softwarebasierten Lösung mag im Wesentlichen ein auf einem Prozessor ablaufender Programmcode die Steuerung von Hardwarekomponenten übernehmen. Auch bei der softwarebasierten Lösung mag ein äußerer Einfluss, wie das Auftreten eines Interrupts, durch entsprechende Vorkehrungen abgeblockt werden. Ein Interrupt mag beispielsweise von einer Netzwerkkomponente an die Schnittstellenvorrichtung "von Außen" herangeführt werden. Mittels einer Abblockvorrichtung, die beispielsweise die Ressourcenzuteilung regeln mag, mag jedoch dieser äußere Einfluss von der Nachrichtenübertragung ferngehalten werden. Die Nachrichtenübertragung mag durch das Umbelegen von Registern und das Verschieben von Zeigern erfolgen und im Wesentlichen nicht von dem Interrupt beeinflusst werden.

Eine beliebige Kombination von Bestandteilen der Hardware Lösung und der Software Lösung mag möglich sein.

Die Nutzung von Ethernet als darunterliegende Basis für ein Befehls/Antwort-Verfahren, wie beispielsweise für das Protokoll MIL-STD-1553B oder EFEx, mag transparent für die Avionikanwendungen sein, wenn trotz Nutzung einer auf Ethernet-basierenden Netzinfrastruktur, insbesondere der physikalischen Schicht der Netzinfrastruktur bis zu dem GMII oder MII, in höheren Schichten das originale Zeitverhalten der bisher verwendeten Befehls/Antwort Netzwerke gewährleistet werden kann. Durch diese Maßnahmen kann beispielsweise eine Avionikanwendung oder eine Hosteinrichtung nicht feststellen, dass das Übertragungssystem ausgetauscht worden ist. Das originale Zeitverhalten mag im Wesentlichen von dem MIL-STD-1553B oder EFEX Standard vorgegeben sein und das Einhalten des Zeitverhaltens mag durch die beschriebene Art der Realisierung der Schnittstellenvorrichtung sichergestellt werden.

Ein zu beachtender Parameter zur Bestimmung der Eignung einer Übertragungsinfrastruktur oder eines geteilten Mediums mag die Response Time, die Antwortzeit oder die Reaktionszeit sein, innerhalb welcher eine Komponente nach einer Aufforderung oder nach einem Befehl einer zentralen Einheit, beispielsweise eines Buscontrollers, ein Datum auf das Medium legen muss.

Bei der Nutzung eines FPGAs für die Realisierung der Schnittstellenvorrichtung mag die Durchlaufzeit innerhalb des FPGAs, also die Summe der Zeit für den Durchlauf der Nachricht durch das FPGA von der ersten Schnittstelle zu der zweiten Schnittstelle oder von dem Buscontroller zu der zweiten Schnittstelle, beispielsweise in Form einer Anfrage, und wieder zurück, beispielsweise in Form einer Antwort, und/oder die Bearbeitungszeit in einer Hosteinrichtung, sehr gering im Verhältnis zu einer originalen erwarteten Antwortzeit sein. Im Fall, dass die originale Antwortzeit durch den MIL-STD-1553B oder durch den EFEx Standard vorgegeben ist, mag sich die Durchlaufzeit in der Schnittstellenvorrichtung im Bereich von Nanosekunden (ns) bewegen, während der zu ersetzende Standard eine Antwort innerhalb einer Größenordnung von Mikrosekunden (µs) erwartet. Dies zeigt, dass mittels der beschriebenen Schnittstellenvorrichtung in einen Zeitbereich vorgedrungen werden kann, der unter dem Zeitbereich liegt, welcher oftmals als deterministisch bezeichnet wird und in der Größenordnung von Millisekunden (ms, also in der Größnordnung von 1x10⁻³ s) liegen mag. Es kann also auch vorkommen, dass Antworten vor dem erwarteten Zeitpunkt zur Verfügung stehen. Trotzdem soll das vorgegebene Timing eingehalten werden. Die Schnittstellenvorrichtung mag also für eine Datenübertragung zu einem vorgesehen Zeitpunkt eingerichtet sein, der mit einer Genauigkeit in der Größenordnung von einigen µs bestimmbar ist, der also in der Größenordnung von 1x10⁻⁶ s genau bestimmbar ist. Damit mag die Größenordnung für das Antwortverhalten der Schnittstellenvorrichtung im Bereich des MILBUS- oder EFEx-Standards liegen.

Bei dem Einsatz von AFDX mag sich im Wesentlichen nur eine Wahrscheinlichkeit festlegen lassen mit der zu einem vorgesehen Zeitpunkt Daten übertragen werden und diese Wahrscheinlichkeit mag lediglich im Bereich von ms bestimmbar sein. Das Festlegen lediglich einer Wahrscheinlichkeit statt vorherbestimmter Antwortzeiten mag jedoch nicht die Kriterien für einen Determinismus erfüllen.

Bei dem Einsatz eines Ethernet Protokolls ohne weitere Mechanismen treten Kollisionen auf, die zu Aussetzern oder Wartezeiten bis zu mehreren Sekunden führen können und daher für das Einhalten eines Determinismus nicht nutzbar sind.

Die Schnittstellenvorrichtung mag zum Einhalten der Antwortzeiten eine Zeitüberwachungseinrichtung aufweisen, die eingerichtet ist, vorhandene zeitkritische Nutzdaten solange in der Schnittstellenvorrichtung zurückzuhalten, bis die Übertragung in dem Zeitablaufplan vorgesehen ist, der die Übertragung auf dem Medium steuert. Der Ablaufplan mag sicherstellen, dass die Antwort zu dem Zeitpunkt bereitgestellt wird, zu dem sie von einer anfragenenden Vorrichtung erwartet wird. Die Zeitüberwachungseinrichtung mag also sicherstellen, dass aufgrund der schnellen Verarbeitung innerhalb der Schnittstellenvorrichtung zeitkritische Nutzdaten nicht zu früh auf dem Medium verteilt werden. Durch dieses Zurückhalten der Antwort mag auch sichergestellt werden, dass die Teilnehmer synchron arbeiten, welche mit dem Medium verbunden sind. In anderen Worten mag die Zeitüberwachungseinrichtung eine Einheit sein, die zur im Wesentlichen genauen Abmessung der Antwortzeit vorgesehen ist. In einem Beispiel mag die Schnittstellenvorrichtung während dem Ankommen von Nutzdaten einer Avionikkomponente an ihrer ersten Schnittstelle die Zeitüberwachungseinrichtung starten. Dazu mag die Schnittstellenvorrichtung eines ersten Teilnehmers eingerichtet sein, das Vorliegen von Nutzdaten an der ersten Schnittstelle zu erkennen. Die Schnittstellenvorrichtung mag außerdem eingerichtet sein, nach oder während des Empfangens eines entsprechenden Befehls von einem BC die Verarbeitung der Nutzdaten, insbesondere den Transport der Nutzdaten von der ersten Schnittstelle des ersten Teilnehmers zu der ersten Schnittstelle eines zweiten Teilnehmers durchzuführen. Danach kann die Schnittstellenvorrichtung des zweiten Teilnehmers die Antwort über die zweite Schnittstelle des zweiten Teilnehmers an das Medium ausgeben, wobei die Schnittstellenvorrichtung des zweiten Teilnehmers sicherstellen mag, dass eine vorgesehene Antwortzeit erreicht ist, bevor sie die Antwort an das Medium weitergibt. Die zu den Nutzdaten gehörende Antwort oder Response bereitgestellt von der zweiten Schnittstelle des zweiten Teilnehmers wird an der zweiten Schnittstelle des ersten Teilnehmers erkannt und an die erste Schnittstelle weitergeleitet. Bei den Nutzdaten kann es sich um zeitkritische Nutzdaten handeln, die als Antwort auf Befehle in unterschiedliche Richtungen übertragen werden. Die Befehle können von einem BC erzeugt werden, der sich beispielsweise auch auf der Schnittstellenvorrichtung befindet. Der Transport der Nutzdaten mag mittels RTs organisiert werden. In einem anderen Beispiel mag ein Befehl von einer Avionikkomponente zu einer anderen transportiert werden. In noch einem anderen Beispiel mag ein empfangener Befehl im Befehls/Antwort Protokoll innerhalb der Schnittstellenvorrichtung verarbeitet werden. Diese für die Verarbeitung bestimmten Befehle werden nicht an die erste Schnittstelle oder an die Hostseite innerhalb der Schnittstellenvorrichtung weitergeben. Diese erste Schnittstelle oder die Hostseite innerhalb der Schnittstellenvorrichtung weiß nicht wann, welcher Befehl an der zweiten Schnittstelle, auf dem Medium oder auf der Busseite ankommt, arbeitet also unabhängig von der zweiten Schnittstelle.

Sowohl Befehle als auch Antworten können bei MILBUS Nutzdaten enthalten, die in unterschiedliche Richtungen übertragen werden. Befehle kommen jedoch im Wesentlichen nur vom Buscontroller. Nutzdaten jedoch können sowohl vom Buscontroller oder von einem Teilnehmer oder Host kommen. Wenn die Nutzdaten vom Buscontroller kommen, sind sie an den Befehl angehängt. Wenn die Nutzdaten von den Teilnehmern kommen sind sie in den Antworten der einzelnen Teilnehmern enthalten. Empfänger von Nutzdaten können der Buscontroller oder andere Teilnehmer sein. Sowohl ein Receive - Befehl als auch die Antwort auf einen Transmit - Befehl kann daher Nutzdaten enthalten.

Die Zeitüberwachungseinrichtung kann in einem Beispiel als Stoppuhr oder Timer realisiert sein. Die Zeitüberwachungseinrichtung mag einen Zähler aufweisen, der hochgezählt oder herunter gezählt wird, bis ein Schwellwert erreicht wird, der der vorgegebenen Antwortzeit entspricht. Erst bei im Wesentlichen exaktem Erreichen des Schwellwerts mag die Antwort an das Medium zur Verteilung übergeben werden.

Die Schnittstellenvorrichtung mag zur Durchführung der Zeitüberwachung eingerichtet sein. Einerseits mag sie zum Abblocken von unvorhersehbaren Ereignissen eingerichtet sein, die zu einer unvorhersehbaren Verzögerung - ggf. über die Größenordnung von µs hinaus - führen könnten. Andererseits mag die Schnittstellenvorrichtung und insbesondere die Zeitüberwachungseinrichtung auch zur Überwachung der Mindestzeitvorgaben eingerichtet sein, so dass ein zu frühes Bereitstellen von Nachrichten verhindert wird. In einem Beispiel mag die Schnittstellenvorrichtung zum Überwachen einer unteren und einer oberen Grenze einer Reaktionszeit eingerichtet sein.

Die Zeitüberwachungseinrichtung mag ein Teil der Ressourcenverwaltungseinrichtung sein.

Durch das Nutzbarmachen einer vorhandenen physikalischen Netzwerkinfrastruktur, eines geteilten Mediums und insbesondere des Ethernets können die Bandbreiten und Kostenvorteile dieser Technologien genutzt werden. So haben beispielsweise viele Avionikkomponenten oder Avionikanwendungen für Administrationszwecke bereits Ethernetanschlüsse auf den Avionikboards implementiert, welche die spezifische Avionikfunktionalität gewährleistet. Eine solche bereits vorhandene Komponente kann mit Hilfe der erfindungsgemäßen Schnittstellenvorrichtung genutzt werden, die insbesondere für die Überwachung des Zeitverhaltens oder des Determinismus sorgt, ohne Einbußen der Echtzeitfähigkeit hinnehmen zu müssen. In einem Beispiel mag eine existierende MIL-STD-1553B Infrastruktur durch Austauschen der Medienanpassungseinrichtung und dem Vorsehen einer Schnittstellenvorrichtung in eine Ethernet basierte Infrastruktur gewandelt werden.

Eine Avionikkomponente mag auf einem Systemboard oder einer Systemleiterplatte implementiert sein. Dieses Systemboard mag in einem Beispiel als Einschubkarte ausgebildet sein. Dieses Systemboard mag den Ethernetanschluss bereits vorsehen. In einem Ausführungsbeispiel der Erfindung mag ein solcher Konfigurationsport als Medienverbindeeinrichtung oder Anschluss für ein geteiltes Medium genutzt werden, um darüber die zeitkritischen Daten zu übertragen. Das Nutzen der bereits vorhandenen Komponente kann zur Kostenersparnis und Gewichtseinsparung beitragen.

Das Austauschen eines MIL-STD-1553B- oder EFEx-Anschlusses gegen ein gemeinsam genutztes Übertragungsmedium, beispielsweise einen Ethernetanschluss, sollte aus Sicht des Anwenders einen geringen Portierungsaufwand darstellen. Jedoch mag durch Anwendung eines kommerziell verfügbaren physikalischen Übertragungsmediums, insbesondere eines verfügbaren Physical Layer, eine Reduktion der Kosten erreichbar sein. Für kommerziell verfügbare physikalische Übertragungskomponenten sind auch geringere Einschränkungen bei dem Vertrieb, beispielsweise durch Exportbeschränkungen zu erwarten, wie sie bei EFABUS oder EFEx bestehen, da beispielsweise Ethernetkomponenten ITAR-frei (International Traffic in Arms Regulations) sind.

EFABUS und EFEx Netzwerke werden mit 20 Mbit/s betrieben und können damit limitierte Übertragungsraten herkömmlicher MIL-STD-1553B Protokolle kompensieren. Bei EFABUS Systemen werden zusätzlich zu metallischen Leitern Glasfaserleitungen genutzt, welche sehr teuer sind und einen hohen Aufwand bei der Verlegung darstellen. Um den MILBUS, d. h. ein System, welches nach dem MIL-STD-1553B Protokoll arbeitet, mit einer höheren Taktung zu betreiben, kann eine neue Verkabelung vorgesehen werden, die jedoch wieder speziell auf den MILBUS ausgelegt ist und daher teuer ist. Andererseits können besondere Übertragungstechniken genutzt werden, beispielsweise Verfahren des Frequenzmultiplex, wie sie aus der DSL (Digital Subscriber Line)-Technologie bekannt sind, um Datenraten von ca. 20 bis 200 Mbit/s auf dem MILBUS zu nutzen. Davor waren 5 Mbit/s mit neuer Verkabelung erreicht. Wegen der hohen Komplexität mögen solche Systeme vom Markt wenig akzeptiert werden.

Außerdem mögen sämtliche nur auf den Flugzeugeinsatz konzipierte Systeme u.a. auch aufgrund geringerer Stückzahlen einen Kostennachteil gegenüber weit verfügbaren Massenprodukten wie Ethernetkomponenten haben, welche als COTS (Commercial off-the-shelf) Netzwerktechnologien günstig angeboten werden.

Die beschriebene Schnittstellenvorrichtung entweder Hardware-basiert auf FPGA oder ASIC oder mittels Softwareanpassungen und dediziertem Ressourcenzuteilen mag es ermöglichen, dass kostengünstige COTS-Produkte, wie beispielsweise Ethernetkomponenten, ein deterministisches oder echtzeitfähiges Übertragungsverhalten den Avioniksystemen zur Verfügung stellen können. Außerdem existieren Erfahrungen, um die physikalische Schicht des Ethernets resistent gegenüber parasitären elektrischen und magnetischen Feldeinwirkungen zu machen, so dass auch Störfestigkeitsanforderungen beim Einsatz von Ethernet Komponenten keine Einschränkungen bedeuten mögen. Erfahrungen mit der Ethernettechnologie konnten beispielsweise auch bei AFDX gemacht werden. AFDX basiert auch auf einer Ethernettechnologie, wobei jedoch jeder anzusprechenden Komponente eine bestimmte Bandbreite reserviert werden mag und für AFDX ein sehr komplizierter Switch eingesetzt werden mag.

Als MILBUS mag ein Bussystem bezeichnet werden, welches auf den internationalen vom US-DOD (Department of Defense) veröffentlichten Standard MIL-STD-1553B mit in Notice 2 veröffentlichten Ergänzungen basiert. In Europa wird MILBUS auch häufig als STANAG 3838 bezeichnet.

Als EFABUS mag ein Übertragungssystem bezeichnet werden, welches in den ersten Serienlosen des Eurofighter verwendet wird und auf dem internationalen Standard STANAG-3910 basiert. EFEx (EFABUS-Express) ist eine Weiterentwicklung des EFABUS Protokolls mit Anpassungen und Optimierungen für die weiteren Serienlose des Eurofighter, bei dem aber eine gegenüber dem EFABUS unveränderte Hardware weiter genutzt werden kann. Das EFABUS-Protokoll bzw. das EFEx Protokoll nutzen neben einer höheren Datenrate gegenüber dem MILBUS, die bei 20 Mbit/s statt 1 Mbit/s liegt, auch einen größeren Adressraum bzw. eine größere Datenblockgröße als der MILBUS. Die Avionikkomponenten oder Teilnehmer, die bei einem MILBUS-System vorgesehen sind, sind in einem Netzabschnitt ein einziger Buscontroller (BC) und 31 Remote Terminals (RT). Optional ist ein Busmonitor oder Diagnosesystem (MON) vorgesehen. Es wird eine Broadcastadresse verwendet (RT 31). Jeder Teilnehmer eines MILBUS-Systems weist einen Sende- (TX) und Empfangsbereich (RX) mit je maximal 30 Subadressen mit je maximal 32 Datenworten à 16 Bit auf.

EFABUS oder EFEx weist als aktive Teilnehmer einen BC (Buscontroller) und weitere bis zu 30 RTs (Remote Terminals) auf. EFABUS und EFEx nutzt eine Broadcastadresse (RT 31) und optional einen Monitor (MON).

Aus Redundanzgründen ist meist ein RT dafür vorgesehen bei Ausfall des Buscontrollers dessen Funktion mit zu übernehmen - deswegen ist für einen BC auch eine individuelle RT-Adresse vergeben. Je Teilnehmer gibt es einen Sende-(TX) und Empfangsbereich (RX) mit je maximal bis zu 255 Subadressen mit je maximal 4096 Datenworten.

Daher kann es sein, dass der auf einem FPGA vorhandene Speicher nicht ausreicht und auf einen Erweiterungsspeicher zurückgegriffen werden muss. Eine Subadresse kann genutzt werden, um innerhalb eines Terminals auf den Bus, d.h. innerhalb einer physikalischen Einheit oder innerhalb einer Schnittstellenvorrichtung, verschiedene Ressourcen wie Speicherbereiche oder Funktionsgruppen anzusprechen.

Eine Ressourcenverwaltungseinrichtung mag vorhandene Ressourcen, beispielsweise die Komponenten eines FPGAs, wie die Speicher oder SteuerLogik, derart einsetzen oder auch zu Modulen kombinieren, dass die von ihnen geforderten Aufgaben erfüllt werden können. Die Ressourcenverwaltungseinrichtung mag eine Vielzahl von unterschiedlichen Ressourcen verwalten. Eine Ressourcenverwaltungseinrichtung mag als Finite State Machine (FSM) realisiert sein und so ein Schaltwerk bilden, das Daten zwischen den verschiedenen Speichereinrichtungen verschiebt. Dieses Verschieben mag auch als Durchtakten bezeichnet werden und mag von der FSM aktiv gesteuert sein. Das Verschieben mag zustandsgesteuert erfolgen. Die FSM implementieret die Logik, die steuert, wann, was, woher und wohin transferiert wird. Sollte an dieser Logik etwas geändert werden, dann müsste die FSM in ihrer Struktur oder Schaltung verändert werden. Die festverdrahtete Logik mag für das Einhalten des Determinismus dienlich sein. Das Verschieben mag nach einem fest vorgegebenen Timing, Ablaufplan oder Zeitplan erfolgen.

Die Zwischenspeichereinrichtung mag eine aus mehreren Einzelspeichermodulen zusammengesetzte Speichereinrichtung sein. Die einzelnen Speichermodule können zu Unterspeichern der Zwischenspeichereinrichtung kombiniert werden, um Speicher mit bestimmten Eigenschaften bereitstellen zu können. So können beispielsweise durch das Zusammenfassen unterschiedliche Speichermodule verschiedene Speichergrößen hergestellt werden, die auf die zu verarbeitenden Paketgrößen zugeschnitten sind. Andererseits können die Speicher aber auch in verschiedenen Modi, also beispielsweise als Single Port, Dual Port oder Multi Port Speicher genutzt werden oder als asynchrone und synchrone Speicher.

Als ein asynchron genutzter Speicher mag ein Dual Port Speicher bezeichnet werden, der zwei Schnittstellen, zwei Ports oder zwei Interfaces aufweist, welche mit unterschiedlichen Takten betrieben werden. Beispielsweise kann eine Schnittstelle des asynchronen Speichers genutzt werden, um Daten, z.B. Nutzdaten oder Nachrichten, in den Speicher mit einer ersten Taktfrequenz zu schreiben und die zweite Schnittstelle kann genutzt werden, um die eingeschriebenen Daten mit einer zweiten Taktrate auszulesen. Wenn die zweite Taktrate höher als die erste Taktrate ist, kann der Speicher schneller gelesen als beschrieben werden. Umgekehrt, wenn die zweite Taktrate geringer als die erste Taktrate ist, kann der Speicher langsamer gelesen als beschrieben werden.

Bei gleichzeitigem Lesen und Schreiben der gleichen Nachricht könnte außerdem die Konsistenz des gelesenen Datums gefährdet werden. In einem Beispiel mag, um die Konsistenzgefährdung eines gelesenen Datums zu vermeiden, ein Wechselpuffer genutzt werden.

Es kann ferner die Situation entstehen, dass das Timing des Befehls/Antwort Protokolls einen Datentransfer auch dann fordert, wenn gerade die Speicher durch einen andern Zugriff belegt sind. Um diesen Transfer durchführen zu können, kann ausgenutzt werden, dass die Durchlaufzeit in der Schnittstelleneinrichtung der Signalaufbereitung in der Hosteinrichtung im Bereich von ns liegt gegenüber Antwortzeit auf dem Medium, die im Bereich von µs liegt und damit langsamer ist.

Durch die Verwendung unterschiedlicher Taktraten können Kollisionen beim Lesen und Schreiben von Daten auftreten. Um derartige Kollisionen zu vermeiden, mag mittels eines Signalaustausches zwischen der ersten und zweiten Schnittstelle des Speichers signalisiert werden, wann welcher Zugriff erfolgen kann. Dieser Signalaustausch wird von der Resourcenverwaltungseinrichtung gesteuert und überwacht.

Gemäß einem anderen Aspekt der Erfindung mag die Schnittstellenvorrichtung weiter eine Zeitüberwachungseinrichtung aufweisen, wobei die Zeitüberwachungseinrichtung eingerichtet ist, das Zeitverhalten eines Befehls/Antwort Protokolls so zu überwachen, dass das Zeitverhalten des Befehls/Antwort Protokolls eingehalten wird.

Die Zeitüberwachungseinrichtung mag Vorgaben einhalten, die von einem Buscontroller gemacht werden.

Gemäß einem weiteren Aspekt der vorliegenden Erfindung weist die erste Schnittstelle oder die erste Schnittstelleneinrichtung einen Nutzdatenspeicher auf. Auch die zweite Schnittstelle oder die zweite Schnittstelleneinrichtung kann einen Speicher aufweisen, den Übertragungsspeicher. Der Übertragungsspeicher kann als Übertragungsregister ausgebildet sein.

Der Nutzdatenspeicher kann als ein Speicher realisiert sein, auf den sowohl von der Schnittstellenvorrichtung oder von dem FPGA aus zugegriffen werden kann als auch von einer außerhalb des FPGAs gelegenen Komponente, beispielsweise von einer Hosteinrichtung. Über den Nutzdatenspeicher kann folglich ein Datenaustausch zwischen der Hosteinrichtung und der Schnittstellenvorrichtung erfolgen, so dass über den Nutzdatenspeicher Nutzdaten von der Schnittstellenvorrichtung gelesen oder geschrieben werden können. Die Schnittstellenvorrichtung mag den Zugriff von einer weiteren außerhalb der Schnittstellenvorrichtung gelegenen Komponente ermöglichen, beispielsweise von dem geteilten Medium. Hierbei verwaltet und segmentiert die FPGA Logik der Schnittstellenvorrichtung die Zugriffe so, dass die Echtzeitfähigkeit der Schnittstellenvorrichtung als auch der externen Komponente mit unterschiedlichen Echtzeitanforderungen gewährleistet werden. Der Zugriff von der Hosteinrichtung oder von anderen externen Komponenten mag so segmentiert werden, dass die Summe aus der Zugriffszeit eines Segmentes und der Verarbeitungszeit auf der Medium-Seite oder Ethernet Seite noch eindeutig innerhalb der maximalen Antwortzeit liegt. Eine solche externe Komponente kann auch ein Mediencontroller oder ein Ethernetcontroller sein. Die externe Komponente wird durch diese Zugriffsmöglichkeit auch von der zweiten Schnittstelle aus zugänglich. Über den Übertragungsspeicher lassen sich folglich Daten zwischen der Schnittstellenvorrichtung und einem geteilten Medium austauschen, insbesondere zwischen der zweiten Schnittstelle und einem Netzwerkcontroller.

Während zur Sicherstellung der Echtzeitfähigkeit im Wesentlichen äußere Einflüsse abgeblockt werden, mag der Nutzdatenspeicher und/oder der Übertragungsspeicher im Wesentlichen die einzige Schnittstelle nach außen sein, über die eine Kommunikation in den Außenbereich der Schnittstellenvorrichtung zugelassen wird.

Über den Nutzdatenspeicher und/oder den Übertragungsspeicher bekommt die Schnittstellenvorrichtung die externen Zugriffe mit und sie nutzt die davon hervorgerufenen Ereignisse. Die Zugriffe gehen nicht ungeachtet an der Schnittstellenvorrichtung vorbei. Vielmehr verwaltet die Schnittstellenvorrichtung die externen Zugriffe, beispielsweise indem die Zeitüberwachungseinrichtung initiiert wird, mit der das korrekte Timing sichergestellt wird. Auch mag so eine Klassifizierung von ankommenden Nutzdaten angestoßen oder getriggert werden.

Eine harte Echtzeitbedingung (hard Real-time) mag bedeuten, dass im Wesentlichen genau festgelegte Zeitmarken für den Protokollablauf und das Zeitverhalten existieren. Bei einem Ablauf eines Timers oder bei einem Alarm einer Zeitüberwachungseinrichtung aufgrund der Tatsache, dass zu einem bestimmten Zeitpunkt Daten erwartet werden aber nicht vorhanden sind, können im Wesentlichen sofort die Redundanzmechanismen aktiviert werden.

Ein Datenaustausch zwischen den Schnittstellen kann auch im Wesentlichen virtuell erfolgen, indem beispielsweise Zeiger auf Speicherbereiche der Daten und nicht die Daten selbst ausgetauscht werden. Da beim Austauschen von Daten die Daten oftmals kopiert werden, kann der direkte Datenaustausch durch Kopieren zu Verzögerungen führen, die durch den Austausch der Zeiger oder Adressen der Daten reduziert werden können. Diese Verzögerungen könnten auch unvorhersehbar sein und den Determinismus stören.

Über den Nutzdatenspeicher und den Übertragungsspeicher lässt sich somit der Nutzdatenaustausch zwischen einer außerhalb der Schnittstellenvorrichtung gelegenen Avionikkomponente oder deren Hostcontroller und dem ebenfalls außerhalb der Schnittstellenvorrichtung gelegenen Medium erreichen. Die Avionikkomponente oder deren Hostcontroller und die Schnittstellenvorrichtung können in einem Beispiel auf einem gemeinsamen Board untergebracht sein.

Gemäß einem weiteren Aspekt der vorliegenden Erfindung mag die Ressourcenverwaltungseinrichtung eingerichtet sein, zumindest einen Teil der Zwischenspeichereinrichtung als einen First-In First-Out (FIFO) Speicher anzusteuern.

Einzelne Speicherkomponenten, die den Zwischenspeicher bilden, können in verschiedenen Modi angesteuert werden. Durch das Kombinieren mehrerer Basis-Speicherbausteine können verschiedene Speicher Typen wie beispielsweise Single Port Speicher, die nur eine einzige Schnittstelle zum Lesen und Schreiben von Daten aufweisen, aber auch Dual Port- oder Multi Port Speicher mit mehreren Schnittstellen realisiert werden. Ein FIFO-Speicher mag ein Dual Port Speicher mit zwei Schnittstellen sein. In anderen Worten mag jeder Speicher ein physikalischer Single Port Speicher oder ein Single Port Speichermodul sein. Der unterschiedliche Typ eines Speichers mag sich aus der gewählten Ansteuerung des Single Port Speichermoduls ergeben. Eine Gruppe von Typen mag verschiedenen "Teilnehmer" oder verschiedenen Nutzern des Speichers ein paralleles Zugreifen ermöglicht. Um parallele Zugriffe zu ermöglichen kann das Single Port Speichermodul entweder geometrisch oder zeitlich gemultiplexed werden. Die Anordnung von Speichermodulen und die Speicheransteuerung kann neben einfachen Single-Port Speichern auch die Realisierung von Dual Port Speichern oder Multi Port Speichern ermöglichen. Beim Einsetzen von Multiplexverfahren mag jedoch die Zugriffskapazität pro Port entsprechend reduziert werden.

Gemäß einem weiteren Aspekt der vorliegenden Erfindung mag der FIFO-Speicher ein Block-RAM aufweisen.

Ein Block-RAM mag eine Basis-Komponente eines FPGAs sein und somit in einer großen Anzahl auf einem FPGA vorhanden sein. Block-RAMs lassen sich zu beliebigen größeren und beliebig betriebenen Speichergruppen zusammenfassen.

Gemäß einem anderen Aspekt der vorliegenden Erfindung mögen zumindest zwei Speicher aus der Gruppe der Speicher, welche aus dem Zwischenspeicher, dem Nutzdatenspeicher und dem Übertragungsspeicher bestehet, Teilbereiche eines gemeinsamen Speichers sein.

Neben der Möglichkeit den Zwischenspeicher aus vielen kleinen Speicherkomponenten zusammenzustellen, mag auch die Möglichkeit bestehen, einen großen vorhandenen Speicher in kleinere Speicherbereiche aufzuteilen, so dass beispielsweise anhand der Adressierung festgelegt werden kann, für welche Aufgaben welcher Speicherbereich zur Verfügung steht.

Gemäß einem anderen Aspekt der vorliegenden Erfindung mag der gemeinsame Speicher einen Zusatzspeicher aufweisen, der mittels einer Speicherverwaltungseinrichtung mit dem gemeinsamen Speicher verbunden ist.

Mittels den auf einem FPGA vorhandenen Speicherkomponenten mögen sich nicht beliebig große Speichergrößen herstellen lassen, beispielsweise könnte im Falle einer Adressierung eines Befehls/Antwort Protokolls nach dem EFEx-Standard mit 255 Subadressen, wobei für jede Subadresse maximal 4096 Datenworte vorgesehen sind, der auf dem FPGA alleine verfügbare Speicher nicht ausreichen, um alle Datenworte unterzubringen. In so einem Fall könnte auf externe Speicher zurückgegriffen werden, beispielsweise auf einen zusätzlichen DDR (Double Data Rate) Speicher. Ein solcher zusätzlicher Speicher mag mit einer Speicherverwaltungseinrichtung (Memory Access Control Unit) versehen sein, um einen korrekten kollisionsfreien Speicherzugriff zu gewährleisten. Der Zusatzspeicher, beispielsweise ein DDR oder DDR 3 Speicher, mag ein Single Port Speicher sein. Obwohl der Name "Single Port Speicher" suggeriert, dass nur ein einziger Port vorhanden ist, mag ein Single Port Speicher physikalisch einen separaten Schreibe-Port und einen separaten Lese-Port aufweisen, über den jeweils die eigentlichen Nutzdaten ausgetauscht werden. Der Speicher kann bidirektional betrieben werden und beide Ports können als FIFOs implementiert sein, da die Speicher oder die Zwischenspeichereinrichtung mit einem anderen Takt als die Hostlogik betrieben wird. Als Hostlogik mag der Teil der Ressourcenverwaltungseinrichtung bezeichnet werden, der der zweiten Schnittstelle zugewandt ist.

Neben den Nutzdatenports, d.h. dem Port für das Lesen und dem Port für das Schreiben mag ein DDR RAM oder ein DDR3 RAM über einen dritten Port verfügen, um Speicherkommandos abzugeben. Beispielsweise werden beim Schreiben die Daten in das FIFO auf der Schreiben-Seite geschrieben und nach Absetzen des Schreibbefehls samt Parameter über den Port für die Speicherkommandos final in den Speicher übernommen. Folglich können Konflikte durch Kollision beim gleichzeitigen Lesen und Schreiben von verschiedenen Einrichtungen verursacht werden. Die Speicherverwaltungseinrichtung mag derartige Kollisionen vermeiden, indem sie den Zugriff auf den Speicher von beispielsweise Echtzeitkomponenten und Nichtechtzeitkomponenten regeln mag. Der Begriff Echtzeitkomponente mag eine Komponente bezeichnen, die Echtzeitanforderungen erfüllen muss.

Es werden zwei Kategorien von Echtzeitanforderungen unterschieden.

Eine erste Kategorie bezeichnet die weichen Echtzeitanforderungen. Weiche Echtzeitanforderungen (Soft Real Time) werden charakterisiert mit Zeitlimits, Antwortzeiten oder Deadlines, die hin und wieder nicht eingehalten werden dürfen und dabei keine systematischen Fehler verursachen. So stellt beispielsweise ein Livevideostream eine Anwendung mit weichen Echtzeit-Anforderungen dar, da das Nichteinhalten einer Deadline, welches sich beispielsweise in dem Verwerfen eines Bildes bemerkbar macht, Auswirkungen hat, diese aber nicht schwerwiegend sind.

Eine zweite Kategorie bezeichnet die harten Echtzeianforderungen. Harte Echtzeitanforderungen (Hard Real-Time) sind Systeme, bei denen Deadlines vorgegeben sind, deren einmaliges Nichteinhalten bereits als Fehler erkannt werden. Eine Folge oder Häufung von Fehlern kann zu kritischen Fehlern oder sogar zu katastrophalen Systemfehlern führen. Es mag bei harten Echtzeitanforderungen erforderlich sein sicher zu stellen, dass die Echtzeitanforderungen erfüllt werden bzw. dass durch vorgesehene Redundanzmahnahmen sofort wieder Echtzeitanforderungen hergestellt werden. Ein Beispiel für ein System mit harten Echtzeitanforderungen ist die Regelung für die Flugzeugstabilität, bei der es bei Nichteinhaltung der Zeitvorgaben insbesondere im Zusammenwirken mit anderen Faktoren zu kritischen Situationen und auch zu Unfällen kommen kann.

Bei derartigen sicherheitskritischen Systemen können Redundanzen triplex oder sogar quadruplex ausgelegt sein. In solchen Systemen mögen im Wesentlichen alle Komponenten, also beispielsweise alle Geräte, alle Busse und alle Buscontroller entsprechend des Grades der Redundanz dreifach bzw. vierfach vorhanden sein. Die mehrfach vorhandenen Komponenten können zudem parallel und synchron betrieben werden. Im Fehlerfall, also bei Nichteinhaltung der Zeitanforderungen, werden sofort Daten der fehlerfrei arbeitenden Systeme verwendet.

Bei weniger sicherheitskritischen Systemen werden duale Redundanzen verwendet. Wenn ein Fehler erfolgt ist, wird beim nächsten Mal, beispielsweise bei der nächsten Datenübertragung nach dem Feststellen eines Fehlers, in der Regel der alternative Bus benutzt. Bei wichtigen Geräten mag auch im Fall der weniger sicherheitskritischen Systeme im Wesentlichen alles doppelt vorhanden sein. Die doppelt vorhandenen Komponenten werden dabei entweder parallel oder alternativ betrieben. Ferner können zur Erhöhung der Ausfallsicherheit auch alternative Datenquellen genutzt werden. Beispielsweise kann eine Höheninformation aus dem Luftdruck errechnet werden, aus einem GPS ausgelesen oder von einem Radarhöhenmesser abgeleitet werden. Das Befehls/Antwort Protokoll ermöglicht es dem Buscontroller zudem schnell auf eine Fehlersituation zu reagieren, indem er sofort die Busliste an die neue Situation anpasst, entweder durch das Ändern der Busliste oder durch das Ändern der Adressierung.

Gemäß einem anderen Aspekt der vorliegenden Erfindung mag die Ressourcenverwaltungseinrichtung eingerichtet sein, den Austausch der unterschiedlichen zeitkritischen Nutzdaten zwischen der ersten Schnittstelle und der zweiten Schnittstelle durch das Verwalten eines Zeigers auf die erste Schnittstelle und/oder auf die zweite Schnittstelle zu steuern.

Das Verwalten eines Zeigers kann beispielsweise über eine Software erfolgen. Zwischen den beiden Schnittstellen ausgetauschte Daten müssen nicht mehr kopiert werden, sondern lediglich die Adressen der Daten werden weitergegeben, an denen Daten zur Verfügung zu stellen sind bzw. abzuholen sind. Der Transport der zeitkritischen Nutzdaten durch die Schnittstellenvorrichtung mag durch das Austauschen der Zeiger schnell vonstatten gehen. In anderen Worten mag ein virtueller Transport der Daten durch die Schnittstellenvorrichtung erfolgen, da die Nutzdaten selbst an einem im Wesentlichen festen Speicherort bleiben. In einem Beispiel mag, während der Zeiger durch die einzelnen Stufen der Schnittstellenvorrichtung transportiert wird, lediglich die Rahmenstruktur um die Daten herum gebaut werden und/oder entfernt werden. Kollisionen der Zeiger untereinander sind jedoch zu vermeiden. Ein Zeiger auf eine Schnittstelle mag mit einem Zeiger auf eine mit einer Schnittstelle verbundenen Speichereinrichtung oder einen mit einer Schnittstelle verbundenen Speicherbereich einer Speichereinrichtung gleichzusetzen sein.

Gemäß noch einem anderen Aspekt der vorliegenden Erfindung weist die Ressourcenverwaltungseinrichtung eine Ereignisauswerteeinrichtung auf, welche ein Ereignis an der ersten Schnittstelle und/oder ein Ereignis an der zweiten Schnittstelle erkennen kann und zumindest einen Teil einer Ressource exklusiv für das Austauschen von unterschiedlichen zeitkritischen Nutzdaten oder mit ihnen verbundener Zeiger zuweisen kann.

Eine Ressource mag beispielsweise eine Komponente einer Schnittstellenvorrichtung, eine Komponente eines Mikrocontrollerboards oder eine Komponente einer Avionikkomponente sein. Ein Ereignis kann das Bereitstellen eines Signals von der Hosteinrichtung oder eines Signals von dem geteilten Medium sein, mit dem der Host und/oder das geteilte Medium signalisiert, dass Daten bereitgestellt werden. Ein Ereignis kann aber auch das Versenden einer Nachricht über die erste Schnittstelle oder die zweite Schnittstelle sein. Wenn ein Ereignis auftritt kann das Ereignis beispielsweise als ein Interrupt auf einer speziell für Interrupts vorgesehenen Datenleitung signalisiert werden. Ein solcher Interrupt oder ein solches Ereignissignal kann ausgewertet werden und bei Vorliegen von entsprechenden Bedingungen, wie beispielsweise dem Vorliegen von Daten in einem Speicher, mag eine Ressource individuell für das Verarbeiten dieser Daten bereitgestellt werden. Das individuelle, exklusive oder dedizierte Bereitstellen der Ressource mag verhindern, dass diese Ressource von anderen Ereignissen oder anderen Ressourcen bei seiner Verarbeitung unterbrochen wird. Das Verhindern des Unterbrechens oder das Abblocken von anderen Systemunterbrechungen mag ein schnelles und kollisionsfreies Verarbeiten der Daten mit Hilfe der zugeteilten und abgeordneten Ressource sicherstellen, unabhängig von dem Zustand der übrigen Ressourcen. Es mag also zumindest für die Zeitdauer der Verarbeitung einer Nutzdatenübertragung aus einer Avionikkomponente mit mehreren Ressourcen eine Aufteilung in zumindest zwei separate Systeme entstehen, die im Wesentlichen völlig entkoppelt voneinander arbeiten. Nach dem Durchführen der Nutzdatenübertragung können die blockierten Ressourcen für andere Aufgaben genutzt werden, beispielsweise um wieder die Abarbeitung einer Avionikanwendung zu unterstützen. Durch das im Wesentlichen völlige zeitlich begrenzte Entkoppeln der zumindest Systeme mag sich das dedizierte Bereitstellen der Ressourcen von einer Multitasking Lösung unterscheiden, bei der kein echtes Entkoppeln stattfinden mag. Durch das Bereithalten dedizierter Ressourcen kann gewährleistet werden, dass die Ressourcen innerhalb von Zeitspannen, die von der Hardware vorgegeben werden, zur Behandlung des Ereignisses zur Verfügung stehen. Insbesondere wird ein durch eine Software-Komponente (z.B. Scheduler innerhalb eines Betriebssystems) induzierter Indeterminismus vermieden.

Gemäß einem anderen Aspekt der vorliegenden Erfindung mag die Ressourcenverwaltungseinrichtung eingerichtet sein, zumindest eine Funktion eines Befehls/Antwort Protokolls zu erfüllen. Die Funktion mag aus einer Gruppe von Funktionen eines Befehls/Antwort Protokolls ausgewählt werden. Diese Gruppe mag aus dem Abarbeiten einer Busliste, dem Erkennen einer Befehlsnachricht, dem Erkennen einer Präambel (Preamble) in einem Datenpaket, dem Auswerten einer Präambel eines Datenpakets, dem Erzeugen einer Präambel eines Datenpakets, dem Erzeugen einer Statusnachricht (Antwortnachricht), dem Erzeugen einer Datennachricht, dem Erzeugen eines Typenfeldes und dem Überwachen des geteilten Mediums bestehen.

Die Ressourcenverwaltungseinrichtung mag die unterschiedlichen Funktionen eines Befehls/Antwort Protokolls beispielsweise mit Hilfe von FSMs (Finite State Machines) realisieren. Für das Erfüllen dieser Funktionen mag die Ressourcenverwaltungseinrichtung in mehrere Untergruppen oder Submodule zerlegt sein, die für das Durchführen einer spezifischen Aufgabe zugeschnitten sind. Jedes dieser Submodule mag wiederum als eine FSM oder als System Logik realisiert sein. Einzelne FSMs mögen unabhängig voneinander ablaufen und lediglich über den Austausch von Signalen kommunizieren und sich im Wesentlichen lediglich über den Austausch von Signalen gegenseitig beeinflussen. Durch ein solches Entkoppeln der Submodule mag ein hoher Grad an Parallelität der Verarbeitung erreichbar sein. Ferner mag durch das Zusammenspiel mehrerer Submodule der Ressourcenverwaltungseinrichtung das Befehls/Antwort Protokoll insbesondere ein Datenformat gemäß dem Befehls/Antwort Protokoll analysiert oder erstellt werden können. Auf diese Art und Weise können beispielsweise Befehle (Commands), Statusmeldungen oder Antworten (Response) mittels der Schnittstellenvorrichtung so angepasst werden, dass ein Übertragen über den geteilten Bus mittels Senden und Empfangen möglich ist.

Die Hosteinrichtung und/oder die Avionikanwendung mögen/mag im Wesentlichen keine Kenntnis darüber haben, dass zur Sicherstellung der Zeitanforderungen ein Befehls/Antwort Protokoll genutzt wird.

In einem verteilten echtzeitkritischen System, wie einer Vielzahl von Schnittstellenvorrichtungen, die über das Medium verbunden sind, mag das Übertragungsprotokoll so ausgestaltet werden, dass die zeitlichen Anforderungen des kritischsten Teilnehmers erfüllt werden können.

Der kritischste Teilnehmer oder die kritischste Avionikkomponente, z.B. eine Temperraturregelung oder ein Navigationssystem, mag die Avionikkomponente sein, die zur Sicherstellung der Regelkreisstabilität die höchste echtzeitkritische Anforderung vorgibt. Eine echtzeitkritische Anforderung mag beispielsweise die Periodendauer eines Zeitzykluses sein, in dem dieser echtzeitkrische Teilnehmer agieren muss, also beispielsweise Daten liefern oder empfangen muss. Hierbei kann beispielsweise die Temperaturregelung der Kabine geringere Anforderungen haben als die vernetzten Systeme des Flight Control Systems. Nicht alle Teilnehmer mögen zwangsläufig echtzeitkritisch sein oder die gleiche Kritikalität haben. Aber im Befehls/Antwort Protokoll mögen alle Daten der Teilnehmer unabhängig von den tatsächlichen Echtzeitanforderungen des Teilnehmers im Wesentlichen entsprechend ihrer zeitlichen Anforderungen behandelt werden. Wann und wie oft die Daten einzelner Teilnehmer übertragen werden lässt sich für das Unterscheiden der zeitlichen Anforderungen anhand der Busliste konfigurieren, beispielsweise anhand der Aufrufhäufigkeit. Die Busliste stellt für die Unterscheidung der zeitlichen Anforderungen auch sicher, dass ein unkritisches Gerät nicht so oft aufgefordert wird seine Daten zu senden bzw. nicht so oft neue Daten erhält und damit den Bus nicht unnötig lange belegt. Auch kann durch die Möglichkeit die Busliste zu modifizieren sichergestellt werden, dass ein defektes Gerät nicht mehr weiter angesprochen wird und stattdessen in diesem Zeitfenster Daten redundanter Systeme abgefragt werden.

In anderen Worten mag das bedeuten, dass eine Hosteinrichtung oder eine Avionikanwendung die zeitliche Anforderung für die Bereitstellung oder den Empfang der zeitkritischen Nutzdaten fordert. Aufgrund der unterschiedlichen Verarbeitungszeiten, z.B. in der Größenordnung von ns für die Durchlaufzeit in der Schnittstelleneinrichtung und für die Signalaufbereitung in der Hosteinrichtung, gegenüber µs für die Antwortzeit auf dem Medium, mag jedoch das Einhalten der Echtzeitanforderungen durch die Hosteinrichtung im Wesentlichen sichergestellt werden. Deshalb mag in einem Fall die Schnittstellenvorrichtung so eingerichtet sein, die Zeitanforderungen einzuhalten, beispielsweise durch das zurückhalten von vorzeitig verfügbaren Nachrichten, bis zu dem Zeitpunkt, an dem sie tatsächlich bei der Abarbeitung der Busliste vom Buscontroller angefordert wurden. Auf diese Weise mag ein bei Ethernet störend auftauchender sog. "Bubbling Ideot" vermeidbar sein, ein Gerät also, das durch einen Defekt oder einer falschen Konfiguration seine Daten viel zu oft oder gar ununterbrochen sendet, und damit den gesamten Busablauf stört. Das Befehls/Antwort Protokoll mag nämlich dafür sorgen, dass ein potentieller "Bubbling Ideot" Teilnehmer oder ein Bubbling Idiot Teilnehmer seine Daten nicht ohne Aufforderung vom Buscontroller sendet.

Aber auch in einem anderen Fall mag eine Situation erkannt werden, in der durch Störungen oder unvorhersehbare Verzögerungen die Datenübertragung über eine maximale Zeitvorgabe hinaus nicht rechtzeitig erfolgt und es kann bei Bedarf mit dem entsprechenden Einleiten von Redundanzmaßnahmen reagiert werden, noch bevor es zu einer kritischen Situationen kommt.

Die Verarbeitung der Daten in den unterschiedlichen Hosteinrichtungen mag auch im Wesentlichen unabhängig oder asynchron voneinander erfolgen. Es kann sogar vorkommen, dass die Verarbeitung und Bereitstellung der Daten in der Hosteinrichtung so vorzeitig erfolgt, dass ein unkontrolliertes Versenden über das Medium die Echtzeitanforderungen des Gesamtsystems stören könnte. Die Hostseite mag in einem Beispiel schneller arbeiten als die Mediumseite. Die Schnittstellenvorrichtung mag die unterschiedlichen Verarbeitungszeiten der Hostseite und der Medienseite so anpassen, dass sich die von der Hosteinrichtung bereitgestellten und/oder angeforderten Daten in das Übertragungsschema des Gesamtsystems einfügen und eine Datenübertragung nicht willkürlich erfolgt. Die unterschiedlichen Verarbeitungszeiten auf der Hostseite und der Medienseite mag in einem Beispiel von unterschiedlichen Takten herrühren, mit denen die beiden Seiten betrieben werden. Die Schnittstellenvorrichtung mag daher so eingerichtet sein, dass sie neben der Formatanpassung an das Übertragungsprotokoll, beispielsweise an das Befehls/Antwort Protokoll, auch eine Taktanpassung vornimmt und ggf. zu früh bereitgestellte Daten zurück hält. Somit mag sich die Schnittstellenvorrichtung auch um das Synchronisieren der an einem Medium betriebenen Anwendungen kümmern.

Gemäß einem anderen Aspekt der vorliegenden Erfindung mag die Schnittstellenvorrichtung eine Umschalteinrichtung aufweisen, wobei die Umschalteinrichtung eingerichtet ist, die Ressourcenverwaltungseinrichtung so einzustellen, dass sie zumindest eine Komponente eines Befehls/Antwort Protokolls abarbeiten kann. Die Komponente mag dabei ausgewählt sein aus der Gruppe möglicher Komponenten oder aus der Gruppe möglicher Rollen eines Befehls/Antwort Protokolls, wobei die Gruppe aus einem Bus Controller (BC), einem Remote Terminal (RT) und einem Bus Monitor (MON) besteht.

Mittels der Umschalteinrichtung kann somit eine Schnittstellenvorrichtung, eine Software oder ein FPGA geschaffen werden, welche(s) je nach geplantem Einsatz eingestellt werden kann und eine spezifische Funktion erfüllen kann. Es ist auch möglich, dass beliebige Kombinationen der Komponenten eines Befehls/Antwort Protokolls auf einer einzigen Schnittstellenvorrichtung realisiert sind. Ferner mag eine Simulation eines vollständigen Avioniknetzes mit einer einzigen Schnittstellenvorrichtung möglich sein. Beispielsweise mag es möglich sein, eine Vielzahl von Remote Terminals mittels einer einzigen Schnittstellenvorrichtung zu simulieren, welche auch untereinander Daten austauschen können und zusätzlich auch noch den Bus Controller und/oder den Bus Monitor aufweisen können. Welche Einheiten oder RTs Daten zu welchem Zeitpunkt austauschen dürfen mag von dem BC bestimmt werden.

Gemäß noch einem anderen Aspekt der vorliegenden Erfindung ist die Ressourcenverwaltungseinrichtung eingerichtet, zumindest ein Befehls/Antwort Protokoll ausgewählt aus der Protokollfamilie MILBUS-Protokoll, MIL-STD-1553B, EFABUS- (European Fighter Aircraft Bus) und EFEx (EFABUS Express) zu realisieren.

Gemäß noch einem anderen Aspekt der vorliegenden Erfindung arbeiten die erste Schnittstelle und die zweite Schnittstelle unabhängig voneinander.

In anderen Worten arbeiten die erste und die zweite Schnittstelle asynchron. Es ist folglich keine direkte Abstimmung zwischen der ersten und der zweiten Schnittstelle nötig, so dass die erste Schnittstelle nicht echtzeitkritische Anforderungen erfüllen kann, während die zweite Schnittstelle echtzeitkritische Anforderungen erfüllt oder umgekehrt.

Gemäß einem weiteren Aspekt der Erfindung wird ein Flugzeug mit einem Netzwerk beschrieben, welches eine Avionikkomponente und/oder eine Schnittstellenvorrichtung gemäß vorliegender Erfindung aufweist.

Gemäß einem weiteren Aspekt der Erfindung wird eine Datenstruktur zur Informationsübertragung angegeben, welche entsprechend einer Wertigkeit angeordnete Bits aufweist, wobei die drei niederwertigsten Bits eine Unterscheidung des Typs der mit der Datenstruktur zu übertragenden Daten ermöglichen, wobei es möglich ist zumindest einen Befehl, ein Nutzdatum und eine Statusinformation zu unterscheiden.

Die Erkennung unterschiedlicher Datentypen, beispielsweise von Befehlen, Daten oder Status, mag mit Hilfe einer Präambel erfolgen. In einem Beispiel mag die Länge und die Bedeutung der Bits, die nach den ersten drei niederwertigsten Bits angeordnet sind, den Bits entsprechender Wertigkeit eines Datenformats für einen Befehl, ein Nutzdatum und eine Statusinformation eines Befehls/Antwort Protokolls entsprechen. So mag eine Präambel, ein Typidentifier oder ein Befehls/Antwort Header mit den Bitwerten 001, 010 bzw. 100 für die Unterscheidung eines Befehls (Command), von Daten (Data) bzw. eines Statuswortes (Status Word) eingesetzt werden. Durch die Verwendung der Präambel erfolgt die Erkennung des Types durch die Verwendung regulärer Datenbits und es mag eine Identifizierung des Typs durch eigene physikalische Zustände oder Spannungspegel vermieden werden. Daher mag eine Verwendung einer Präambel, für deren Erkennung im Wesentlichen keine speziellen Pegel oder Zustände ausgewertet werden müssen, den Einsatz von Ethernet COTS Komponenten ermöglichen, die solche Zustände nicht erstellen und diese oftmals auch nicht ohne weiteres störsicher übertragen können. COTS Komponenten stellen im Wesentlichen eine einfache und robuste Infrastruktur bereit.

Es mag ein Aspekt der Erfindung sein, dass Daten mittels der Resourcenverwaltungseinrichtung in einer vorgegeben und deterministischen Art und Weise zwischen der ersten Schnittstelle und der zweiten Schnittstelle ausgetauscht werden können. Für diesen Austausch kann die Resourcenverwaltungseinrichtung die Ansteuerung der Zwischenspeichereinrichtung vornehmen. Die gewählte Art der Ansteuerung kann eine Flussrichtung für die Daten und einen zeitlichen Ablaufplan für die Verteilung der Daten vorgeben. Die Resourcenverwaltungseinrichtung mag in Kombination mit der Zwischenspeichereinrichtung ein geschickt angeordnetes Pipelinesystem bilden, welches die beiden Schnittstellen miteinander verbindet. Die Resourcenverwaltungseinrichtung und die Zwischenspeichereinrichtung können beide jeweils mehrere Untersysteme aufweisen. Während dem Austauschen der Daten zwischen den Schnittstellen mögen die Nutzdaten an die Anforderungen der jeweiligen Zielschnittstelle angepasst werden. Beispielsweise mögen die Nutzdaten zum Anpassen an die Zielschnittstelle mit Rahmeninformationen für das Bilden eines Datenpakets versehen werden, von diesen Rahmeninformationen befreit werden oder auch an unterschiedliche Zeitverhalten oder Speicherbreiten angepasst werden.

Die Untersysteme sind über Schnittstellen verbunden, die die Grenzen zwischen den Untersystemen bilden. Die Grenzen der Untersysteme, die Speichergrößen und die Verzahnung der einzelnen Speichereinrichtungen mögen dabei so gewählt sein, dass es im Wesentlichen zu keinen Kollisionen der Nutzdaten kommen kann. Außerdem mag darauf geachtet werden, dass fest zugeordnete Ressourcen den Transport der Nutzdaten organisieren, die nicht von anderen Ereignissen unterbrochen werden können. Zur Kollisionsvermeidung mögen kritische Stellen in den Ausbreitungspfaden der Nutzdaten aufgespürt werden. Kritische Stellen mögen Stellen sein, die zu Engpässen bei der Datenübertragung führen können. Solche Engpässe, die oft auftreten, wenn eine Ressource gemeinsam genutzt wird, können zu Kollisionen führen. Durch das Vorsehen von Zwischenpuffern und/oder eines entsprechenden Zeitverhalten können solche kritischen Stellen entschärft werden.

In dem vorliegenden Text werden Maßnahmen beschrieben, die einen zeitlich deterministischen Empfang und Versand von Daten oder Nachrichten gewährleisten. Insbesondere mag das zeitlich deterministische Empfangen und Versanden von Daten durch das Zusammenwirken von Maßnahmen sicher gestellt werden, wie dem deterministischen Aufbau der Schnittstellenvorrichtung, dem Synchronisieren der Schnittstellenvorrichtungen mit dem Medientakt, durch das Vorgeben eines Ablaufplans und/oder durch das Zurückhalten von Nachrichten bis zur Aufforderung zum Senden durch das vom Buscontroller als zentraler Steuerrechner gesteuerte Befehls/Antwort Protokoll.

Für das Synchronisieren mag der BC mit seinem Ablaufplan sorgen. Die Teilnehmer halten zum Einhalten des Ablaufplans Ihre Daten zurück bis sie per Befehl aufgefordert werden die Daten zu senden.

Durch das Zusammenwirken einer Auswahl der verschiedenen Maßnahmen können Echtzeitbedingungen eingehalten werden. Damit ist sichergestellt, dass keine Kollisionen erfolgen, dass aber auch jeder Teilnehmer seine Daten ausreichend oft überträgt.

Die erfindungsgemäße Schnittstellenvorrichtung mag derart eingerichtet sein, dass im Wesentlichen genau der Zeitpunkt vorgegeben ist, wann eine Botschaft, eine Nachricht oder ein Datum übertragen wird. Die Schnittstellenvorrichtung mag dabei derart aufgebaut sein, dass der Zeitpunkt zu dem die Botschaft übertragen wird oder intern von einem Submodul zum anderen Submodul weitergereicht wird im Wesentlichen nicht von Ereignissen beeinflusst wird, die lokal außerhalb der Schnittstellenvorrichtung liegen und nicht vorhersagbar sind. Der Aufbau der Schnittstellenvorrichtung mag als ein im Wesentlichen autarkes System gewählt sein. Somit mag es möglich sein, bereits bei der Entwicklung der Busliste den Zeitablaufplan, das Scheduling oder das Timing der einzelnen Botschaften vorzugeben. Es mag durch das Befreien von äußeren Einflüssen ein präzises Zeitverhalten der systeminternen Abläufe ermöglicht werden.

Als systeminterne Abläufe mögen die Abläufe bezeichnet werden, die lokal innerhalb der Schnittstellenvorrichtung ablaufen, beispielsweise innerhalb des FPGA oder innerhalb einer Hardwarebaugruppe, die die Schnittstellenvorrichtung realisiert. Das Befreien von äußeren Einflüssen und das feste Vorgeben der systeminternen Abläufe, insbesondere der zeitlichen Abläufe, mag das Verhalten der Schnittstellenvorrichtung berechenbar machen. In anderen Worten mag die Übertragung einer Botschaft von einer Schnittstelle der Schnittstellenvorrichtung zur anderen innerhalb im Wesentlichen derselben Zeit erfolgen. Dieses Zeitverhalten kann unter Laborbedingungen ebenso, wie auch im Wirkbetrieb erreicht werden, da im Wirkbetrieb äußere Einflüsse im Wesentlichen abgeblockt oder nicht zugelassen werden. Durch die im Wege des Abblockens erreichte Berechenbarkeit des Nachrichtendurchlaufs mag ein Determinismus hergestellt werden, der das Echtzeitverhalten eines Gesamtsystems und insbesondere einer Schnittstellenvorrichtung bestimmt. Dabei mag das Sicherstellen des Determinismus beim Durchlaufen der zeitkritischen Nutzdaten durch die Schnittstellenvorrichtung ein Aspekt sein, der zu dem Determinismus des Gesamtsystems beiträgt. Neben dem deterministischen Durchlauf der Nutzdaten mag es auch nötig sein, sicherzustellen, dass auf dem Medium selbst im Wesentlichen keine Kollisionen auftreten. Sollte eine Abweichung von den deterministischen Vorgaben bemerkt werden, so mag dieses Abweichen ein Hinweis auf einen Ausfall einer Komponente sein und nicht auf das Vorliegen lediglich einer nicht eingeplanten Verzögerung. Dieser Ausfall kann dann im Wesentlichen nur durch das zurückgreifen auf redundant vorhandene Komponenten behoben werden.

Der Determinismus einer einzelnen Schnittstellenvorrichtung kann ausgenutzt werden, wenn ein deterministisches Gesamtsystem geschaffen werden soll. Um auch einen Determinismus des Gesamtsystems herzustellen, können mindestens zwei oder eine Vielzahl von einzelnen Schnittstellenvorrichtungen an einem Medium untereinander synchronisiert werden. In diesem Gesamtsystem mögen die einzelnen Schnittstellenvorrichtungen oder die an die Schnittstellenvorrichtungen gekoppelten Komponenten als Teilnehmer bezeichnet werden. Der Determinismus des Gesamtsystems mag folglich durch die Synchronisation der einzelnen Teilnehmer mit Hilfe des Befehls/Antwort Protokolls am Medium erreicht werden. Das Medium selbst an dem die Vielzahl deterministischer Teilnehmer betrieben wird, muss nicht deterministisch sein. Es darf beispielsweise auch ein kollisionsbasiertes Medium zum Einsatz kommen. Mittels des Synchronisierens der Teilnehmer mit dem Medium mag ein synchrones Gesamtsystem geschaffen werden. Durch das Vorgeben der Medienbelegung mittels zumindest eines der Teilnehmer, der als zentraler BC ausgestaltet ist, mag auch das nicht deterministische Medium in ein deterministisches Medium gewandelt werden. Unvorhersehbare Ereignisse mögen somit im Wesentlichen verhindert werden.

Mittels eines derart eingerichteten deterministischen Gesamtsystem mag einem Systementwickler, der das Zusammenwirken einzelner Teilnehmer oder AvionicKomponenten plant, ein Werkzeug an die Hand gegeben werden, mit dem er die Übertragungszeitpunkte einzelner Nachrichten im Wesentlichen genau vorgeben kann. Es kann folglich ein Zyklus geplant werden, in dem beispielsweise festgelegt ist, zu welchem Zeitpunkt ermittelte GPS- oder Radar-Daten an einen zentralen Avionik-PC übertragen werden, ohne dass sich die Daten beim Übertragen gegenseitig stören, obwohl ein einfaches und kostengünstiges Medium wie Ethernet genutzt wird. Für die einzelnen Nachrichten mag jedoch wegen der exklusiven Bandbreitenzuteilung die gesamte Bandbreite des Mediums nutzbar sein.

Somit mögen komplex aufgebaute Komponenten vermieden werden, wie sie bei Traffic Shaping Ansätzen genutzt werden, ähnlich wie bei AFDX. Die geringe Komplexität mag sich positiv auf die Zuverlässigkeit und Wartbarkeit auswirken. Bei Traffic Shaping Ansätzen mag die Bandbreite, mit welcher ein Teilnehmer das Medium belastet, limitiert sein und es mag nötig sein den einzelnen Botschaften eine Priorität für die Übertragung zu vergeben, um zu gewährleisten, dass alle Botschaften, Messages oder Nachrichten innerhalb der vorgegebenen zeitlichen Grenzen übertragen werden können und dass hoch-priore Botschaften eine geringe Verzögerung erfahren. Da hier aber lediglich die Wahrscheinlichkeit erhöht wird jedoch nicht für eine vollständige Vorhersagbarkeit gesorgt ist, können immer noch unvorhersehbare Ereignisse eintreten.

Jedoch mag die Erfindung die Entscheidung, wann eine Botschaft tatsächlich übertragen wird, nicht jedem einzelnen Scheduling-Mechanismus in den einzelnen verteilten Teilnehmern überlassen. Denn durch den deterministischen Aufbau der einzelnen Teilnehmern und durch die Synchronisation der einzelnen Teilnehmer am Medium mag vermieden werden, dass einzelne Teilnehmer unabhängig voneinander agieren und somit äußere Einflüsse auf sich selbst oder andere Teilnehmer verursachen, beispielsweise in der Form von Interrupts oder Kollisionen. Der Zugriff auf das Medium mag nach einem vorgebbaren Zugriffsplan von einer zentralen Einrichtung aus für alle Teilnehmer erfolgen, beispielsweise von einem BC aus.

Das Festlegen des Medienzugriffs und der Verarbeitung der Nachrichten in den einzelnen Schnittstellenvorrichtungen mag selbst bei einem nicht-deterministischen Medium zu einem deterministischen Verhalten des Gesamtsystems führen. Der Einsatz einer erfindungsgemäßen Schnittstelleneinrichtung mag also die Verwendung von nicht-deterministischen Komponenten tolerieren. Die vorhandene Bandbreite des Mediums kann jedem Teilnehmer exklusiv zugeteilt werden, ohne dass die Bandbreite reserviert werden muss und brach liegt, wenn über die reservierte Bandbreite keine Daten ausgetauscht werden.

Der Determinismus mag für die Echtzeitfähigkeit des Gesamtsystems sorgen. Ein System mag als ein echtzeitfähiges System oder Echtzeitsystem bezeichnet werden, wenn eine maximale Reaktionszeit oder eine Antwortzeit fest vorgebbar ist und diese fest vorgegebene Reaktionszeit im Wesentlichen nicht von äußeren Einflüssen während eines regulären Betriebs beeinflusst wird. Die absolute Größe der Reaktionszeit mag von dem System abhängen, für das die Echtzeitfähigkeit hergestellt werden soll und sich beispielsweise für ein Radar System und ein GPS System unterscheiden. Die Reaktionszeit mag die Zeitspanne sein, gemessen vom Aussenden einer Nachricht von einem ersten Teilnehmer bis zu dem Empfangen der Nachricht bei einem zweiten Teilnehmer oder der Zeitspanne vom Aussenden einer Anfrage bis zum Erhalt einer Antwort auf die Anfrage.

Die Reaktionszeit kann zumindest eine Zeitpanne aufweisen ausgewählt aus der Gruppe der Laufzeit einer Nachricht auf dem Medium, der Verarbeitungszeit innerhalb der Schnittstellenvorrichtung, der Durchlaufzeit einer Nachricht durch die Schnittstellenvorrichtung, der Durchlaufzeiten einer Nachricht von einer der beiden Schnittstellen zu dem BC und der Durchlaufzeit einer Nachricht von einer der beiden Schnittstellen zu dem RT.

Ein echtzeitfähiges System mag einen deterministischen Aufbau des Systems und insbesondere der Systemkomponenten voraussetzen. Unter Determinismus mag auch das Ausschalten oder Abblocken von unvorhersehbaren Ereignissen verstanden werden, die, wenn sie auftreten, ein vorherberechnetes Zeitverhalten verändern könnten. Ein Echtzeitverhalten eines Systems mag erreichbar sein, wenn das Zeitverhalten des Systems im Wesentlichen immer gleich ist oder ein Maximalwert für die Variation der Zeitdauer einzelner Verarbeitungsschritte vorgegeben ist.

Zur Darstellung der Anforderungen an ein Echtzeitverhalten mag in einem Beispiel eine Avionikkomponente als eine Zentrale eines Flight Control Systems ausgebildet sein. Das Flight Control System steuert oder regelt Avionikkomponenten, die für das Flugverhalten des Flugzeugs wichtig sind und damit hohe Vorgaben an das Zeitverhalten haben. Für das Steuern oder Regeln der Avionikkomponenten berechnet das Flight Control System regelmäßig Steuervorgaben oder Regelvorgaben. Diese Berechnung und Verteilung der Regelvorgaben muss in Echtzeit erfolgen. Für das Erreichen eines Echtzeitverhalten mag es beispielweise erforderlich sein, in der Zentrale des Flight Control System innerhalb der Zeit, in der ein Flugzeug die Flugstrecke entsprechend der Länge des Flugzeuges zurücklegt, mindestens einmal eine Regelvorgabe für die an die Zentrale angeschlossenen Avioniksysteme oder Avioniksubsysteme neu zu berechnen und an diese zu verteilen. Innerhalb dieser Zeitdauer müssen somit im Wesentlichen alle Laufzeiten und Bearbeitungszeiten ablaufen und keine unvorhersehbaren Ereignisse sollten diese Zeitdauer verzögern. Das Beispiel zeigt, dass das Flight Control System ein System mit hohen Echtzeitanforderungen ist. Bei anderen Avioniksystemen, beispielsweise der Klimasteuerung, mögen weniger kritische Anforderungen gelten, einerseits betreffend die Laufzeit andererseits bezüglich des Auftretens von Störungen. Jedoch mögen Maximalwerte für den Einfluss von Störungen vorgebbar sein, die dann aufgrund des Determinismus nicht überschritten werden.

Es soll angemerkt werden, dass unterschiedliche Aspekte der Erfindung mit Bezug auf unterschiedliche Gegenstände beschrieben wurden. Insbesondere wurden einige Aspekte mit Bezug auf Vorrichtungsansprüche beschrieben, wohingegen andere Aspekte in Bezug auf Verfahrensansprüche beschrieben wurden. Ein Fachmann kann jedoch der vorangehenden Beschreibung und der folgenden Beschreibung entnehmen, dass, außer es wird anders beschrieben, zusätzlich zu jeder Kombination von Merkmalen, die zu einer Kategorie von Gegenständen gehört, auch jede Kombination zwischen Merkmalen als von diesem Text offenbart angesehen wird, die sich auf unterschiedliche Kategorien von Gegenständen bezieht. Insbesondere sollen Kombinationen zwischen Merkmalen von Vorrichtungsansprüchen und Merkmalen von Verfahrensansprüchen offenbart sein.

### Kurze Beschreibung der Figuren

Nachfolgend wird anhand der beigefügten Zeichnungen näher auf Ausführungsbeispiele der Erfindung eingegangen. Es zeigen:
Fig. 1 ein Blockschaltbild eines Avioniknetzwerks gemäß einem exemplarischen Ausführungsbeispiel der vorliegenden Erfindung.
Fig. 2 ein Blockschaltbild einer Schnittstellenvorrichtung, welche als Buscontroller und/oder als Remote Terminal konfiguriert sein kann gemäß einem exemplarischen Ausführungsbeispiel der vorliegenden Erfindung.
Fig. 3 ein detailliertes Blockdiagramm eines Submoduls für ein Remote Terminal gemäß einem exemplarischen Ausführungsbeispiel der vorliegenden Erfindung.
Fig. 4 ein detailliertes Blockdiagramm eines Buscontrollersubmoduls gemäß einem exemplarischen Ausführungsbeispiel der vorliegenden Erfindung.
Fig. 5 den Sendeteil eines Seriell-Parallel-Wandlers als detailliertes Blockschaltbild gemäß einem exemplarischen Ausführungsbeispiel der vorliegenden Erfindung.
Fig. 6 ein detailliertes Blockdiagramm eines Sendepuffers gemäß einem exemplarischen Ausführungsbeispiel der vorliegenden Erfindung.
Fig. 7 ein vergrößertes Blockdiagramm eines Sende-/Empfangspuffers gemäß einem exemplarischen Ausführungsbeispiel der vorliegenden Erfindung.
Fig. 8 ein Blockdiagramm für eine Speicherzugangs-Steuereinrichtung gemäß einem exemplarischen Ausführungsbeispiel der vorliegenden Erfindung.
Fig. 9 ein Blockdiagramm einer Protokoll-Verarbeitungseinrichtung mit einem Loopbackpuffer gemäß einem exemplarischen Ausführungsbeispiel der vorliegenden Erfindung.
Fig. 10 ein Blockdiagramm einer Schnittstellenvorrichtung mit einer Ereignisauswerteeinrichtung gemäß einem exemplarischen Ausführungsbeispiel der vorliegenden Erfindung.
Fig. 11 die Struktur von drei Nachrichtentypen eines Befehls/Antwort Protokolls gemäß einem exemplarischen Ausführungsbeispiel der vorliegenden Erfindung
Fig. 12 ein Flussdiagramm für ein Verfahren zum Austauschen von Nutzdaten gemäß einem exemplarischen Ausführungsbeispiel der vorliegenden Erfindung.

### Detaillierte Beschreibung von Ausführungsbeispielen

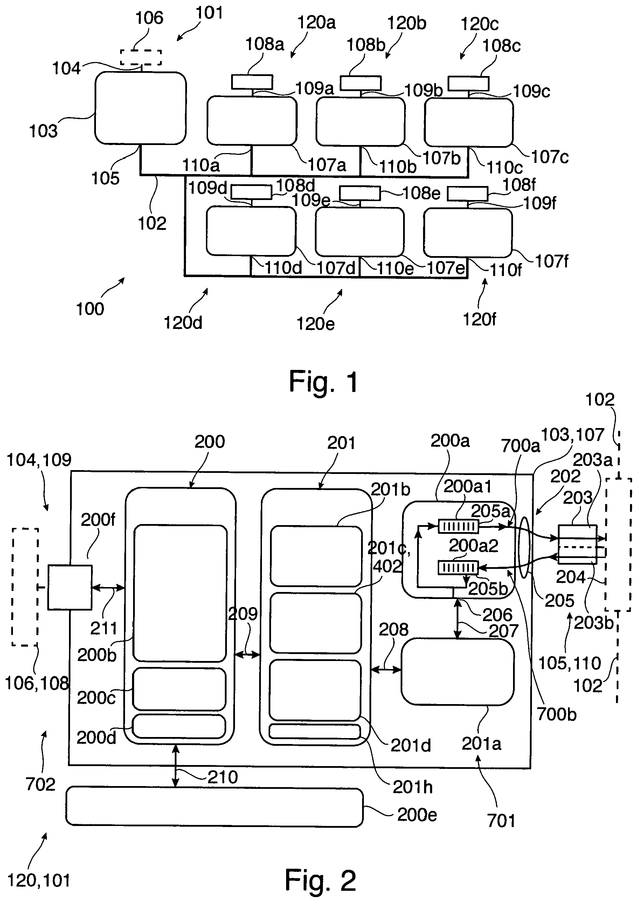

Die Darstellungen in den Figuren sind schematisch und nicht maßstäblich. In der folgenden Beschreibung der Fig. 1 bis Fig. 12 werden die gleichen Bezugsziffern für gleiche oder sich entsprechende Elemente verwendet.

Fig. 1 zeigt ein Blockschaltbild eines Avioniknetzwerks 100 gemäß einem exemplarischen Ausführungsbeispiel der vorliegenden Erfindung. Das Avioniknetzwerk 100 weist die Avionikkomponenten 101, 120a, 120b, 120c, 120d, 120e, 120f auf, welche entlang des geteilten Mediums 102 angeordnet sind. Die Avionikkomponenten 101, 120a, 120b, 120c, 120d, 120e,120f können auch als Teilnehmer 101, 120a, 120b, 120c, 120d, 120e und 120f bezeichnet werden. Bei dem Avionknetzwerk 100 handelt es sich um eine heterogene Netzwerkstruktur, welche zumindest zwei unterschiedlich konfigurierte Schnittstellenvorrichtungen, den Buscontroller (BC) 103 und das Remote Terminal (RT) 120a, 120b, 120c, 120d, 120e, 120f aufweist. Es kann ein weiterer Typ von Netzwerkkomponenten eingesetzt werden, ein Busmonitor, der allerdings in Fig. 1 nicht dargestellt ist. Die Bezeichnungen der verschiedenen Typen BC, RT oder Busmonitor bestimmt sich nach einer entsprechenden Funktionalität, die die jeweilige Netzkomponente im Befehls/Antwort Protokoll einnimmt.

Die Avionikkomponente 101 am linken Ende des gemeinsam genutzten Mediums 102 oder des geteilten Mediums 102, insbesondere des Flugzeugbus 102, weist die Schnittstellenvorrichtung 103 mit der ersten Schnittstelle 104 und der zweiten Schnittstelle 105 auf. Optional kann die Avionikkomponente 101 eine Hostingeinrichtung 106 aufweisen, die u.a. für die Ausführung einer Avionikanwendung verantwortlich ist. In der zentralen Avionikkomponente 101 am Kopf des Busses 102 ist die Schnittstellenvorrichtung 103 als der BC 103 oder Dirigent 103 konfiguriert. Diese zentrale Avionikkomponente 101 kann entweder lediglich zum Steuern des Busses 102 und/oder der übrigen Avionikkomponenten 120a, 120b, 120c, 120d, 120e und 120f genutzt werden oder aber gleichzeitig noch eine Avionikanwendung ausführen, beispielsweise als Zentrale eines Flight Control Systems. Eine solche Avionikanwendung ist durch die Hosteinrichtung 106 angedeutet. Auf der Hosteinrichtung 106 läuft eine Avioniksoftware, die die Avionikfunktion der Avionikkomponente realisiert. Diese zentrale Avionikanwendung oder die zentrale Avionikfunktion, die sich für die Übertragung von erzeugten oder zu empfangenden Daten auf eine Schnittstellenvorrichtung 103 verlässt, kann eine zentrale Auswertefunkton für Daten sein, die von anderen Avionikkomponenten 120a, 120b, 120c, 120d, 120e und 120f bereitgestellt werden. Um an die Daten zu kommen, findet ein Austausch zwischen der zentralen Avionikkomponente 101 und der entsprechenden anderen Avionikkomponente statt. Für diesen Datenaustausch mit den übrigen Avionikkomponenten 120a, 120b, 120c, 120d, 120e, 120f, bedient sich die Avionikkomponente 101 der Schnittstellenvorrichtung 103, welche einen Austausch der Daten zwischen der ersten Schnittstelle 104 und der zweiten Schnittstelle 105 gewährleistet und auch die Übertragung über das Medium 102 organisiert.

Die zusätzlichen Avionikkomponenten 120a, 120b, 120c, 120d, 120e, 120f weisen ebenfalls Schnittstellenvorrichtungen 107a, 107b, 107c, 107d, 107e, 107f auf, die als RT konfiguriert sind. Diese als RT konfigurierten Schnittstellenvorrichtungen 107a, 107b, 107c, 107d, 107e, 107f verbinden das gemeinsame geteilte Medium 102, den Flugzeugbus 102 mit den Hosteinrichtungen 108a, 108b, 108c, 108d, 108e, 108f. Um Daten austauschen zu können werden mindestens zwei als RT konfigurierte Schnittstellenvorrichtungen und zugehörige Avionikkomponenten benötigt und zusätzlich eine als BC konfigurierte Schnittstellenvorrichtung 103. Ein BC kann selbst keine Nutzdaten austauschen. Es kann jedoch eine einzige Schnittstellenvorrichtung sowohl als BC als auch mit angekoppelten RT konfiguriert sein.

In einem Beispiel kann der BC selber Daten senden oder empfangen. In einem anderen Beispiel sendet der BC im Wesentlichen nur Befehle und das im BC mit integrierte RT tauscht die Nutzdaten aus. In diesem Beispiel greifen BC und RT auf ein gemeinsames physikalisches Medium zurück. Zum Nutzdatenaustausch wird in diesem Beispiel das mit dem BC gekoppelte RT aktiviert. Die Schnittstellenvorrichtung und die Hosteinrichtung können auf einem gemeinsamen Systemboard untergebracht sein.

Die Hosteinrichtungen 106, 108a, 108b, 108c, 108d, 108e, 108f sind angepasst um Avionikanwendungen auszuführen und stellen Daten, die die Avionikanwendungen erzeugen oder benötigen, über die ersten Schnittstellen 109a, 109b, 109c, 109d, 109e, 109f an die Schnittstellenvorrichtungen 107a, 107b, 107c, 107d, 107e, 107f zur Verfügung. Die ersten Schnittstellen 109a, 109b, 109c, 109d, 109e, 109f dienen auch dem Bereitstellen von empfangenen Daten an die Hosteinrichtungen 108a, 108b, 108c, 108d, 108e, 108f und damit an die Avionikanwendungen. Folglich arbeiten die ersten Schnittstellen 109a, 109b, 109c, 109d, 109e, 109f sowie die erste Schnittstelle 104 bidirektional. Gleichfalls sind die zweiten Schnittstellen 110a, 110b, 110c, 110d, 110e, 110f als bidirektionale Schnittstellen ausgestaltet und dienen der Kommunikation mit dem Medium 102. Die ersten Schnittstellen 109a, 109b, 109c, 109d, 109e, 109f und die zweiten Schnittstellen 110a, 110b, 110c, 110d, 110e, 110f sind externe Schnittstellen, die in den Außenbereich der Schnittstellenvorrichtung führen.

Da der Datenaustausch über die Schnittstellenvorrichtungen 107a, 107b, 107c, 107d, 107e, 107f bidirektional erfolgt gilt die Beschreibung der Vorgänge die sich in einer Richtung abspielen im Wesentlichen in der anderen Richtung in entsprechend umgekehrter Reihenfolge.

Um Echtzeitbedingungen einzuhalten, die beispielsweise für den Austausch von Daten zwischen der RT-Hosteinrichtung 108c und der RT-Hosteinrichtung 108f vorherrschen sollen, ist bei der Dimensionierung des Netzwerkes 100 und insbesondere bei der Wahl der maximalen Leitungslänge des Mediums 102 darauf zu achten, dass alle bei einer Übertragung zwischen den Hosteinrichtungen 108c, 108f anfallenden Laufzeiten und Latenzzeiten ein deterministisches Maß darstellen und nicht durch unvorhergesehene Ereignisse beeinflusst werden. Als eine Maßnahme, um sicherzustellen, dass ein Netzwerk deterministisch arbeitet, kann bei der Planung darauf geachtet werden, dass ein vorgegebener Maximalwert für eine Signallaufzeit nicht überschritten wird. Werden die Vorgaben eingehalten kann auch die Echtzeitfähigkeit eines Befehls/Antwort Protokolls im Wesentlichen sichergestellt werden. Diese Vorgabe gilt sowohl für den Austausch von Nutzdaten, von Befehlen und von Statusmeldungen. Bei einem MILBUS System 102 beispielsweise muss die Zeit, gemessen von dem Absetzen eines Kommandos in der BC-Hosteinrichtung 106 an die RT-Hosteinrichtung 108c bzw. an die Schnittstellenvorrichtung 107c bis zum Eintreffen deren Antwort in Hosteinrichtung 106 bzw. in der Schnittstellenvorrichtung 103 im Bereich von 4 bis 12 µs liegen. Ähnliche Werte werden mit einem Ethernet Bus 102 als physikalischem Medium erreicht. Damit ist jedoch die Größenordnung der Zeitdauer, die für die Antwortzeiten auf dem Medium 102 vorgesehen ist, größer als die Verarbeitungszeit oder die Durchlaufzeit in einer Schnittstellenvorrichtungen 103, 107a, 107b, 107c, 107d, 107e, 107f und/oder in einer Hosteinrichtungen 108a, 108b, 108c, 108d, 108e, 108f, die im Bereich von ns liegt.

Bei der Dimensionierung des Busses 102 ist insbesondere zu beachten, dass Determinismus, also Voraussagbarkeit der Laufzeiten, nicht mit der Verarbeitungsgeschwindigkeit innerhalb der Schnittstellenvorrichtungen 103, 107a, 107b, 107c, 107d, 107e, 107f gleichzusetzen ist. Determinismus ist im Sinne dieser Anmeldung so zu verstehen, dass verhindert wird, dass ein Austauschvorgang von Nutzdaten oder ein Nutzdatenflusses unvorhergesehen unterbrochen und dadurch verzögert wird. Determinismus soll nicht in erster Linie bedeuten, dass die Verarbeitungsgeschwindigkeit erhöht wird, sondern dass eine vorgegebene Verarbeitungsgeschwindigkeit oder ein vorgegebenes Timing eingehalten wird. Eine mögliche Ursache für Unterbrechungen eines Datenaustauschs können Kollisionen sein, die bei einem gleichzeitigen Zugriff auf das geteilte Medium 102 auftreten können. Wird als geteiltes Medium 102 eine Infrastruktur zusammen mit deren Netzwerkcontrollern eingesetzt, die nach dem IEEE 802.3 (Ethernet-Standard) ausgelegt ist, so sind zusätzliche Maßnahmen vorzusehen, um Kollisionen zu verhindern. Bei Ethernet gibt es zwar eine Kollisionserkennung und Kollisionsauflösung, jedoch keine Kollisionsvermeidung.

Durch eine zusätzliche Absicherung der Übertragung mittels eines Befehls/Antwort Protokolls können Kollisionen vermieden werden indem durch einen zentralen Übertragungszeitplan oder einen zentralen Ablaufplan, der in dem BC 103 gespeichert ist, eine Buszuteilung geregelt wird. In anderen Worten sorgt der zusätzlich eingeführte BC 103 mittels eines vorgegebenen Zeitplans oder Zeitschemas dafür, dass jeweils nur genau eine Avionikkomponente 101, 120a, 120b, 120c, 120d, 120e, 120f mittels eines Befehls, aufgefordert wird an das Medium Daten zu senden, also eine Antwort zu senden. Dadurch wird im Wesentlichen verhindert, dass es zu Kollisionen der ausgetauschten unterschiedlichen zeitkritischen Nutzdaten auf dem geteilten Medium 102 kommt. Dies gilt entsprechend auch bei einem bidirektionalen Austausch der unterschiedlichen zeitkritischen Nutzdaten zwischen der ersten Schnittstelle 104, 109a, 109b, 109c, 109d, 109e, 109f und der zweiten Schnittstelle 105, 110a, 110b, 110c, 110d, 110e, 110f.

Eine Schnittstellenvorrichtung 103, 107a, 107b, 107c, 107d, 107e, 107f, welche so konfiguriert ist, dass sie eine bestimmte Rolle eines Befehls/Antwort Protokolls einnimmt, soll der Einfachheit halber nach dieser Rolle bezeichnet werden. So mag eine Schnittstellenvorrichtung 103 die als BC konfiguriert ist mit BC bezeichnet werden. Eine Schnittstellenvorrichtung 107a, 107b, 107c, 107d, 107e, 107f, die als RT konfiguriert ist, mag auch als RT bezeichnet werden. Gleiches soll für einen Busmonitor gelten. Entsprechend können auch die Avionikkomponenten 101, 120a, 120b, 120c, 120d, 120e, 120f abgekürzt werden. Entsprechende Mischformen sind bei Mischkonfigurationen auch möglich.

Der zentrale Zeitplan des BC 103 wird auch als Busliste oder Ablaufplan bezeichnet. Die Busliste wird in der Regel sequenziell und zyklisch abgearbeitet, kann aber im Bedarfsfall nach vorgegebenen Kriterien geändert werden, um zum Beispiel im Fehlerfall redundante Geräte anzusprechen. Diese vorgegebenen Kriterien können im Buscontroller hinterlegt sein oder aufgrund von Algorithmen bestimmt werden.

In der Busliste sind drei Typen von Nachrichten vorgesehen. Der erste Typ betrifft Befehlsnachrichten oder Command-Nachrichten (Command Message), welche im Wesentlichen ausschließlich von einer als Buscontroller 103 eingerichteten Schnittstellenvorrichtung versendet werden dürfen. Die Flussrichtung einer Befehlsnachricht ist damit immer von einem BC zu einem RT 120a, 120b, 120c, 120d, 120e, 120f.

Der zweite Typ von Nachrichten betrifft Datennachrichten (Data Messages oder Data Nachrichten), welche die eigentlichen Nutzdaten enthalten. Ein Datenaustausch zwischen zwei RTs kann nur erfolgen, nachdem mittels einer Befehls-Nachricht eine Übertragungsverbindung zwischen zwei Avionikkomponenten festgelegt worden ist. Zur Übertragung erstellt eine Quell-Avionikkomponente ein Datenpaket zur Verfügung, welches die Nutzdaten aufweist, und adressiert es an eine Ziel-Avionikkomponente 103, 120a, 120b, 120c, 120d, 120e, 120f. Die Nutzdaten werden in der Regel zwischen den Hosteinrichtungen ausgetauscht, die an den als RT konfigurierten Schnittstellenvorrichtungen angeschlossen sind.

Zur Rückmeldung über Erfolg oder Nichterfolg eines Nachrichtenaustausches sind die so genannten Statusnachrichten (Status Message) vorgesehen, mit denen die Remote Terminals 120a, 120b, 120c, 120d, 120e, 120f den BC 101 über den Status einer Nachrichtenübertragung informieren können. Das Fehlen einer Statusnachricht interpretiert der BC 101 dabei automatisch als Nichterfolg des Nachrichtenaustausches.

Der Einfachheit halber wird im Folgenden lediglich eine BC 101 Komponente und eine RT Komponente 120, 120a, 120b, 120c, 120d, 120e, 120f betrachtet, wobei die Bestandteile der jeweiligen Avionikkomponente durch Weglassen der Buchstaben a, b, c, d, e, f bezeichnet werden soll, ohne jedoch die Gültigkeit der Allgemeinheit für die Vielzahl der Avionikkomponenten einzuschränken. So weist eine RT Avionikkomponente 120 die Hosteinrichtung 108 und die Schnittstellenvorrichtung 107 auf. Eine BC Avionikkomponente 101 weist die Hosteinrichtung 106 und die Schnittstellenvorrichtung 103 auf.

Fig. 2 zeigt ein Blockschaltbild einer Schnittstellenvorrichtung 103, 107, welche als Buscontroller BC und/oder als Remote Terminal RT konfiguriert sein kann, gemäß einem exemplarischen Ausführungsbeispiel der vorliegenden Erfindung. Zum Einstellen des Typs der Schnittstellenvorrichtung als BC, RT oder als Mischbetrieb von BC und einer Vielzahl von RT kann eine Einstelleinrichtung oder Umschalteinrichtung, ein Konfigurationsregister oder ein Umschalter in der Schnittstellenvorrichtung 103, 107 vorgesehen sein. Der Umschalter oder das Konfigurationsregister kann auch über die Haltevorrichtung im Flugzeug aktiviert werden, mit der eine Schnittstellenvorrichtung installiert wird, so dass bei der Montage eines Gerätes in das Flugzeug automatisch die Umschaltung des Types erfolgt. Diese Umschalteinrichtung wird mittels des Registers 200d implementiert. Das Register 200d ist ein Speicherbereich, auf weichen das Hostsystem statische Konfiguration schreiben kann.

Das Blockdiagramm der Schnittstellenvorrichtung 103, 107 zeigt die Aufteilung der Schnittstellenvorrichtung in Untereinheiten oder Subsysteme. Bei der Aufteilung in Subsysteme wurde darauf Rücksicht genommen, dass diese Aufteilung und insbesondere die Schnittstellen zwischen den Subsystemen mit Hardware-Schnittstellen übereinstimmen, die von einer FPGA Hardwaresynthese und Hardwarearchitektur vorgegeben sind. Der Fig. 2 ist zu entnehmen, dass bei der Aufteilung der Schnittstellenvorrichtung 103, 107 in Subsysteme 200, 200a, 200b, 200c, 200d, 201, 201a, 201b, 201c, 201d, 201e, 201f, 201g, 201h darauf geachtet wurde, dass möglichst viele Subsysteme 200, 200a, 200b, 200c, 200d 201, 201a, 201b, 201c, 201d, 201e, 201f, 201g, 201h autonom oder semi-autonom erstellt werden können (BSP Memory Buffers, 200). Solche vorgegebenen oder autonome Subsysteme 200, 200a, 200b, 200c, 200d, 201, 201a, 201b, 201c, 201d, 201e, 201f, 201g, 201h definieren auch ihre Schnittstellen 209, 208, 211, 207 für die angrenzenden Subsystemen 200, 200a, 200b, 200c, 200d, 201, 201a, 201b, 201c, 201d, 201e, 201f, 201g, 201h. Die angrenzenden Subsysteme sind daher nichtautonom erstellt. Die angrenzenden, nicht-autonomen Systeme wurden in Ihrem Umfang meist so konzipiert, dass sie unabhängig und isoliert für sich alleine getestet werden können. Einige dieser Systeme enthalten eine State-Machine. Hierbei enthält jedes Subsystem maximal eine State-Machine.

Bei der Aufteilung in Subsysteme 200a, 200, 200b, 200c, 200d, 200e, 201, 201 a, 201b, 201c, 201d, 201e, 201f, 201g, 201h, ebenso wie bei jedem einzelnen Design eines Subsystems ist berücksichtigt, dass die jeweiligen Echtzeitforderungen der Subsysteme einbezogen wurden. Die Echtzeitanforderungen können berücksichtigt werden, wenn die maximale Taktanzahl und damit die maximale Latenz eines Subsystems wie einer Zwischenspeichereinrichtung 200, 200a, 200b, 200c, 200d, 201e, 201f, 201g, 201h bekannt ist. Echtzeitanforderungen können aber auch berücksichtigt werden, wenn bekannt ist, dass sich ein System im Wesentlichen immer gleich verhält und die benötigte Anzahl an Takten, die vergeht, bis eine Nachricht innerhalb der Schnittstellenvorrichtung 103, 107 verarbeitet worden ist, durch konkrete Messungen ermittelt wird, um das Zeitverhalten des Subsystems zu bestimmen. So kann beispielsweise das Zeitverhalten der Ressourcenverwaltungseinrichtung 201, 201a, 201b, 201c, 201d, 201e, 201f, 201g, 201h, die auch als Control-Logic, 201, 201a, 201b, 201c, 201d, 201e, 201f, 201g, 201h bezeichnet wird, durch Messung ermittelt werden. Beispielsweise sind die Subsysteme so dimensioniert, dass eine pro Subsystem vorgegebene maximale Laufzeit im Wesentlichen nicht überschritten wird. Bei dem Design wurde auch die funktionale Homogenität berücksichtigt, wobei Funktionen und Systemaufgaben, die in einer gemeinsamen Aufgabe zusammengefasst sind, eine gemeinsame Funktionalität darstellen sollen. Funktionale Homogenität bei der Abgrenzung und Aufteilung der Subsysteme bedeutet, dass ein Subsystem möglichst nur eine einzelne FPGA Schaltstruktur verwendet. Ein FPGA verfügt über eine Vielzahl an verschiedenen Strukturen von Ressourcen, welche unterschiedlich effektiv für verschiedene Anwendungen oder Paradigmen instanziiert werden können. Ein Beispiel sind FPGA Strukturen, die für die Anwendung als Massenspeicher genutzt werden können, beispielsweise Block RAMs. Solch eine Struktur des FPGAs wird oftmals exklusiv nur für die Anwendung als Massenspeicher genutzt. Eine Vielzahl von gleichen Strukturen, z.B. Logikstrukturen oder Speicherstrukturen sind in einem FPGA geometrisch nahe bei einander angeordnet. Die Subsysteme in der Fig. 2 werden auf einer viel höheren Abstraktionsebene definiert, als die physikalischen Strukturen. Wird die funktionale Homogenität bei dieser Definition beachtet, dann verlaufen die synthetisierten Grenzen dieser Subsysteme entlang der geometrischen Grenzen gleicher FPGA Ressourcen. Eine gemeinsame Funktionalität führt zu gemeinsamen Realisierungs-Paradigmen, beispielsweise von FSMs oder Speicher Look-up Tables. Dabei ist die Funktionalität der unterschiedlichen Subsysteme beim Design auf verschiedene Einheiten (Entities) verteilt und modularisiert, um einen monolitischen Hardwareblock zu vermeiden. Diese Modularisierung kann die Wiederverwendbarkeit einzelner Module erleichtern und zu guten Syntheseergebnissen führen.

Die Submodule oder Subsysteme 200a, 200, 200b, 200c, 200d, 200e, 201, 201a, 201b, 201c, 201d, 201e, 201f, 201g, 201h werden so auf die Komponenten des FPGAs projiziert, dass Grenzen der Subsystem mit tatsächlich in dem FPGA 103, 107 vorhandenen Schnittstellen zusammenfallen, wie einem Bus oder eine native FIFO Schnittstelle. Diese Projektion maximiert letztendlich die Effizienz des Einsatzes von FPGA Ressourcen. Durch solch eine Projektion kann ausgenutzt werden, dass diese vorgegebenen Schnittstellen hoch performant sind. Außerdem liegen diese Schnittstellen meist zwischen unterschiedlichen FPGA Strukturen und deren direkte Verwendung fördert die Funktionale Homogenität.

Die Fig. 2 zeigt vier Haupt-Subsysteme, nämlich den Empfangs- und Sendepuffer 200a oder Sende- und Empfangspuffer 200a, den Seriell-/Parallel Wandler 201a, den Parallel-/Seriell Wandler 201a, den Sende- / Empfangs UART (Universal Asynchronous Receiver Transmitter) 201a oder den Sende-/Empfangswandler 201a, die Resourcenverwaltungseinrichtung 201 oder die Steuerlogik 201 und die Zwischenspeichereinrichtung 200 oder den Puffer 200.

Mittels dem asynchronen Betrieb des Puffers 200a1 ist es möglich einen Taktunterschied zwischen einer Sendetaktdomain 700a und der Systemtaktdomain 701 auszugleichen. Mittels des asynchronen Betriebs des Puffers 200a2 ist es möglich einen Taktunterschied zwischen einer Empfangstaktdomain 700b und der Systemtaktdomain 701 auszugleichen. Im Modul 200a treffen sich drei Takte, der Takt der Sendetaktdomain, der Takt Empfangstaktdomain und der Takt der Systemtaktdomain. Die Sende- und Empfangstaktdomain sind durch das MII vorgegeben. Jedoch kann ohne der Taktratenanpassung nicht garantiert werden, dass die Takte gleich oder synchron sind. Daher gibt es eine Unterscheidung zwischen Sendetakt und Empfangstakt. Die Sendetaktdomain 700a oder der Sendetaktbereich 700a befindet sich im Bereich der zweiten Schnittstelle 105, 110, insbesondere auf der Seite der medienunabhängigen Schnittstelle 202, beispielsweise einem GMII Interface und dem daran angeschlossenen physikalischen Medium 102. Ebenso befindet sich die Empfangstaktdomain 700b oder der Empfangsbereich 700b im Bereich der zweiten Schnittstelle 105, 110. Die Systemtaktdomain 701 arbeitet mit einem ersten Takt. Die Sendetaktdomain 700a arbeitet mit einem zweiten Takt. Die Empfangstaktdomain 700b arbeitet mit einem dritten Takt. Der zweite Takt und der dritte Takt können in einem Beispiel gleich sein. Insbesondere die Medium Attachment Unit 204 (MAU) befindet sich in der Sendetaktdomain 700a und in der Empfangstaktdomain 700b. In anderen Worten befindet sich der Sendetaktbereich 700a oder die Sendetaktdomain 700a in der Umgebung des Interfaces 205 oder der Ports 205a, 205b des Sende- und Empfangspuffer 200a, welches dem Übertragungsmedium 102 zugewandt ist, während sich die Systemtaktdomain 701 in der Umgebung des Interfaces 206 befindet, welches der Steuerlogik 201 zugewandt ist. Sowohl der Empfangstakt als auch der Sendetakt werden von der physikalischen Schicht (Phy) erzeugt und über separate Verbindungen von der MAU 204 an die Sendetaktdomain 700a bzw. an die Empfangstaktdomain 700b weitergegeben. Weiterhin ist das Register 203 in zwei unterschiedliche Register, das Senderegister 203a und das Empfangsregister 203b aufgeteilt.

In der Richtung zum ersten Interface 104, 109 ab der Schnittstelle 207, welche den Sende- und Empfangspuffer 200a mit dem Sende- und Empfangswandler 201a oder Seriell-/Parallel-Wandler 201a verbindet, liegen die dort befindlichen Komponenten bereits auf der Seite des Systemtakts 701 oder in der Systemtaktdomain 701, welche mit dem ersten Takt betrieben wird. Auch das Interface 206 kennt nur den Systemtakt. Die Grenze der Takte ist 200a1 und 200a2. Die Logik Bausteine 201b, 201c, 201d, 201e, 201f, 201g, 201h, die sich auf der Systemtaktseite befinden und mit dem Systemtaktdomain 701 betrieben werden, werden als Control Logik bezeichnet. Der Seriell-/Parallel-Wandler 201a wird nicht der Control Logik zugeordnet.

Insgesamt wird die Schnittstellenvorrichtung mit vier Takten betrieben, die in vier Taktdomainen eingeteilt sind: Sendetaktdomain 700a, Empfangstaktdomain 700b, Systemtaktdomain 701 und Hosttaktdomain 702. Somit ergibt sich folgende Zuordnung: der erster Takt entspricht dem Systemtakt 701, der zweiter Takt entspricht dem Sendetakt 700a, der dritter Takt entspricht dem Empfangstakt 700b und der vierter Takt entspricht dem Hosttakt 702. Für das System mag der Systemtakt 701 der "wichtigste Takt" oder der maßgebliche Takt sein. D.h., dass die Komponenten und Komponentengruppen 200, 201, 201a und 200a mit diesem Takt betrieben werden. Alle Daten, die von außerhalb der Schnittstellenvorrichtung kommen und außerhalb mit einem anderen Takt betrieben werden, werden sofort in den Systemtakt 701 transferiert, z.B. durch die asynchron arbeitenden Puffer 200a1 und 200a2. Die Systemtaktdomain 701 ist mit den anderen drei Taktdomainen verbunden. Die Hosttaktdomain 702 ist im Wesentlichen vollständig von der Sendetaktdomain 700a und Empfangstaktdomain 700b getrennt.

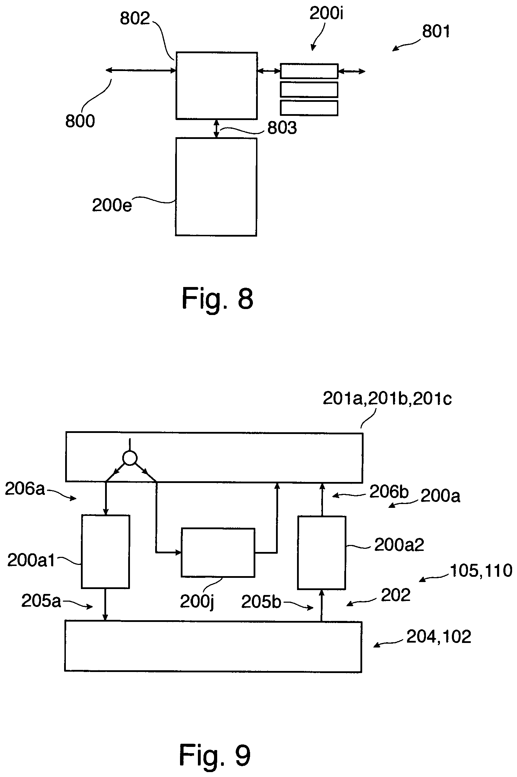

Der Loopbackpuffer, auf den in Fig. 9 näher eingegangen wird und der in Fig. 1 nicht dargestellt ist, verbindet Sendetaktdomain 700a und Empfangstaktdomain 700b. Die Grenzen zwischen unterschiedlichen Taktdomainen bilden immer Puffer 200a1, 200a2, 200. Der Sendepuffer 200a1 bildet die Grenze zwischen der Sendetaktdomain 700a und der Systemtaktdomain 701, der Empfangspuffer 200a2 bildet die Grenze zwischen der Empfangstaktdomain 700b und der Systemtaktdomain 701. Die Zwischenspeichereinrichtung 200, die ebenfalls als Puffer bezeichnet werden kann, bildet die Grenze zwischen der Hosttaktdomain 702, mit der die Hosteinrichtung 106, 108 arbeitet und der Systemtaktdomain 701. Aufgrund der Wahl der strukturellen Lage der Zwischenspeichereinrichtung 200, 200b, 200c, 200d, mag es sich bei der Zwischenspeichereinrichtung auch um eine örtliche Grenze handeln und nicht nur um eine logische Grenze. Folglich stellt der Sende- und Empfangspuffer 200a die Schnittstelle oder Grenze zwischen den beiden unterschiedlichen Takten der ersten Schnittstelle 104, 109 und der zweiten Schnittstelle 105, 110 dar.

Die Daten werden über die medienunabhängige Schnittstelle 202, beispielsweise eine GMII Schnittstelle 202 oder eine MII Schnittstelle 202, zwischen dem Medium 102 und dem Sende- und Empfangspuffer 200a oder Empfangs- und Sendepuffer 200a in der Größe von einzelnen Bytes ausgetauscht. Der Datenbus 105, 110 ist 8 Bit breit. Allerdings müssen gemäß der GMII Spezifikation oder der MII Spezifikation nicht alle Datenleitungen genutzt werden. Werden weniger Datenleitungen und somit weniger Bits genutzt, ist die Taktanpassung auf der physikalischen Schicht im Ethernet einfacher. Wird beispielsweise ein Marvell® Phy eingesetzt, also ein kommerziell erhältlicher integrierter Schaltkreis der Firma Marvell®, der die Funktionalität der physikalischen Schicht (Phy) implementiert, sind bei 100Mbit/s nur 4 Datenleitungen oder 4 bit aktiv. Wie viele Datenleitungen aktiv sind kann durch ein Konfigurationsregister des MII ausgelesen werden. Dieses ist ein statisches Register. Um zwischen, dem 4 Bit Betrieb und dem 8 Bit Betrieb unterscheiden zu können, wird ein Puffer genutzt, der die Outputwordbreite oder Ausgangswortbreite auf die Einstellung im Konfigurationsregister anpasst.

Um jedoch eine übertragene Nachricht (Message), eine Botschaft, ein übertragenes Paket oder ein übertragenes Telegramm auswerten und weiterverarbeiten zu können, welche/welches über die Schnittstelle 205, 105, 110 empfangen wird, werden die an der Schnittstelle 205 bzw. an der zweiten Schnittstelle 105, 110 in serieller Form vorliegenden Daten einschließlich der Nutzdaten in einen breiten Puffer 200a2 geschrieben, dessen Breite so dimensioniert ist, dass es die gesamte Nachricht in voller Länge aufnehmen kann, um diese analysieren zu können. Die Schnittstelle 205 mag im Wesentlichen zwei entgegengesetzte Datenströme 205a, 205b für die Senderichtung bzw. für die Empfangsrichtung zulassen. Dazu mag die Schnittstelle 205 im Wesentlichen zwei Leitungen und/oder zwei Ports aufweisen. Der Puffer 200a1, 200a2 ist größer als ein Ethernetpaket. D.h. er kann im Wesentlichen ein Ethernetpaket aufnehmen und eine nicht näher bestimmte Anzahl an zusätzlichen Daten, um etwas Spielraum oder Toleranz für künftige Erweiterungen zu haben. Die gesamte Nachricht liegt in dem Puffer 200a2.

Während ein Register Zustände über längere Zeit speichert, kann ein Puffer kurzzeitig Daten zwischenspeichern. Daher mag ein Puffer eine höhere Schreibgeschwindigkeit und Lesegeschwindigkeit aufweisen als ein Register. Es wird also nicht die gesamte Nachricht Bit für Bit in ein Schieberegister geschrieben sondern die Nachricht in 8 bit Worten aus dem Empfangspuffer 200a2 mit dem ersten Takt ausgelesen und in 8 bit Worten von der Control Logik 201 verarbeitet. Für die Verarbeitung nach dem Empfangspuffer 200a2 mag im Wesentliche darauf geachtet werden, dass die Dimension des Ausgangs des Empfangspuffers 200a2, der 8 bit breit ist, gut zu den internen Registern der Control Logik passen, die beispielsweise ebenfalls mit einer Breite von 8 Bit arbeiten. Daher ist an der Schnittstelle zwischen den Puffern 200a1, 200a2 und der Control Logic keine Anpassung mehr nötig. Der asynchrone Puffer 200a2 ist eine wünschenswerte Taktgrenze.

Die Ressourcenverwaltungseinrichtung 201, die Steuerlogik 201 oder die Control Logic 201 ist derart eingerichtet, dass sie die Funktionalität eines Befehls/Antwort Protokolls realisiert. Dazu ist die Ressourcenverwaltungseinrichtung 201 als eine Finite State Machine (FSM) mit diversen Submodulen 201b, 201c, 201a, 201d ausgebildet. Insbesondere das Submodul, welches die Funktionalität eines RTs 201 b realisiert bzw. das Submodule, welches die Funktionalität des BCs 201c realisiert, ist als separates Modul ausgebildet, um so das Erweitern bzw. Entfernen von einer Vielzahl von RTs 201b oder BCs 201c je nach Größe des verwendeten FPGAs leicht zu ermöglichen. Folglich weist eine Schnittstellenvorrichtung mindestens eine FSM für einen BC und eine FSM für bis zu 31 RT auf. In dem Submodul für die RTs gibt es eine FSM, die alle aktiven RTs behandelt. Welche RTs auf der jeweiligen Schnittstellenvorrichtung aktiv ist kann durch den Host mittels des Konfigurationsregister 200d gesetzt werden. Eine Einstellung in dem Konfigurationsregister 200d entscheidet dann, welche Funktionalitäten die FSMs stimulieren, also ob BC und/oder RT oder eine Vielzahl von RTs simuliert werden.

Die Ressourcenverwaltungseinrichtung nutzt die Timer 201d und/oder die Zeitüberwachungseinrichtung 201h, um ein korrektes Timing für das Befehls/Antwort Protokoll zu gewährleisten. Beispielsweise ist die Ressourcenverwaltungseinrichtung 201 so eingerichtet, dass sie mit Hilfe ihrer Submodule das Zeitverhalten des MIL-STD-1553B Protokolls realisiert. Die Timer 201d weisen einen hohen Grad an Genauigkeit auf, um das Einhalten des Determinismus zu garantieren. Die Zeitüberwachungseinrichtung 201h kann ein Teil des Timers 201d sein.

Die Zwischenspeichereinrichtung 200 wird genutzt, um im Wesentlichen alle Daten für die Ressourcenverwaltungseinrichtung 201 zu speichern. Hierbei nimmt der Nachrichtenspeicher 200b einen großen Teil des Speichers in Anspruch. Der Nachrichtenspeicher 200b kann in mindestens zwei unterschiedlichen Modi betrieben werden. In dem Empfangsmodus (Receive Mode) ist der Nachrichtenpuffer eingerichtet, eine Nachricht zu speichern, welche über die Speicher/Logik-Schnittstelle 209 von dem Medium 102 ankommt, um so einen Zielspeicher für einen Datentransfer darzustellen. In den Empfangspuffer 200b gelangen Daten, welche über den Bus 102 ankommen und dem Host 106, 108 zur Verfügung stehen.

In einem weiteren Modus, dem Sendemodus (Transmit Mode), wird der Nachrichtenpuffer 200b als Quelle für Daten verwendet, die in Richtung des Mediums 102 geschickt werden sollen. Der Nachrichtenpuffer 200b weist zwei Schnittstellen oder Ports auf und wird als Dual Port Speicher betrieben. Einerseits können Nachrichten zwischen der Hosteinrichtung 106, 108 über den Nutzdatenspeicher 200f über die Interspeicherschnittstelle 211 ausgetauscht werden und andererseits können Daten auch über die Speicher/Logik-Schnittstelle 209 mit dem Medium 102 ausgetauscht werden. Innerhalb des Nachrichtenpuffers 200b sind Speicherbereiche dediziert für das Empfangen und Senden von Daten reserviert.

In einer weiteren exemplarischen Ausführungsform der Erfindung mag der Teil des Nachrichtenpuffers 200b, welcher als Empfangspuffer die vom Bus 102 empfangenen Daten enthält, in die Hosteinrichtung 106, 108 ausgelagert werden. Dies setzt voraus, dass die Schnittstellenvorrichtung 103, 107 selbst aktiv auf die Hosteinrichtung 106, 108 zugreifen und dort Daten ablegen kann. Es kann somit die Anzahl der Lesezyklen verringert werden. Die "Write Posting" Mechanismen von oftmals eingesetzten rechnerinternen Kommunikationssystemen werden somit besser genutzt.

Die Zwischenspeichereinrichtung 200 weist ebenfalls einen Speicherbereich für eine Busliste 200c auf und einen anderen davon getrennten Speicherbereich für ein Steuerregister 200d.

Im Allgemeinen unterscheiden sich ein Speicher und ein Register. Ein Memory, ein Puffer oder ein FIFO werden als Speicher bezeichnet. Speicher werden im FPGA in dieser Implementierung in einem BlockRAM instanziiert. Diese Implementierung oder Instanzierung als BlockRAM kann eine effektive Speicherimplementierung sein. Die Unterscheidung zwischen Puffer und Memory ist nicht exklusiv. Der Nachrichtenspeicher 200b oder das Memory 200b ist ein Puffer, weil er/es auf der Basis der FPGA Ressource eines Dual-Port Block-RAM bereitgestellt wird und die Hosttaktdomain 702 und Systemtaktomain 701 abgrenzt. Es ist gleichzeitig Memory 200b, weil es ein adressierbarer Massenspeicher ist.

Die Begriffe Speicher und Memory können synonym verwendet werden und bilden den Oberbegriff für Register, FIFOs, Puffer oder Block-RAMs, da sowohl Register, FIFO oder Block-RAMs Informationen speichern können.

Wird eine spezifische Funktionalität eines Speichers hervorgehoben, die über das Speichern von Informationen hinausgeht, so werden die Begriffe Register, FIFO, Puffer und Block RAM unterschieden.

Ein Register ist ein spezieller Speicher, der für die Speicherung für genau ein Wort ausgelegt ist und daher keine Adressierung benötigt.

Ein FIFO ist eine Speicherarchitektur, die es erlaubt, auf das, was zuerst in den Speicher geschrieben wurde auch wieder zuerst zuzugreifen. Daher besitzt ein FIFO auch keine Adressierung oder eine Logik, die eine Adressierung ermöglicht. Ein FIFO kann auch Taktdomainen oder Taktdomänen trennen. Z.B. sind 200a1 und 200a2 FIFOs die die Sendetaktdomain und/oder die Empfangstaktdomain von der Systemtaktdomain trennen.

Ein Puffer ist ein Speicher, der temporär Information speichert oder zwischenspeichert. Er kann außerdem unterschiedliche Taktdomainen voneinander trennen, da er mit einem unterschiedlichen Schreibtakt und Lesetakt betrieben werden kann. Ein Betrieb mit unterschiedlichem Schreibtakt und Lesetakt wird asynchroner Betrieb bezeichnet..

Ein Block-RAM ist ein Speicher, welcher im FPGA vorhanden ist und dessen Speichergröße und dessen Zugangsbreite konfiguriert werden kann. Ein Block-RAM basierter Speicher liegt innerhalb des FPGAs oder der Schnittstellenvorrichtung und nicht außerhalb. Ein Block-RAM wird für die Realisierung sämtlicher Speicher auf einem FPGA genutzt.

Im Folgenden soll der Betrieb einer Schnittstellenvorrichtung 103, 107 einmal in dem Betriebsmodus als Remote Terminal (RT) betrachtet werden und einmal als Buscontroller (BC). Hierzu soll für beide Betriebsmodi der Fall des Versendens von Nutzdaten über das Medium 102 dargestellt werden.

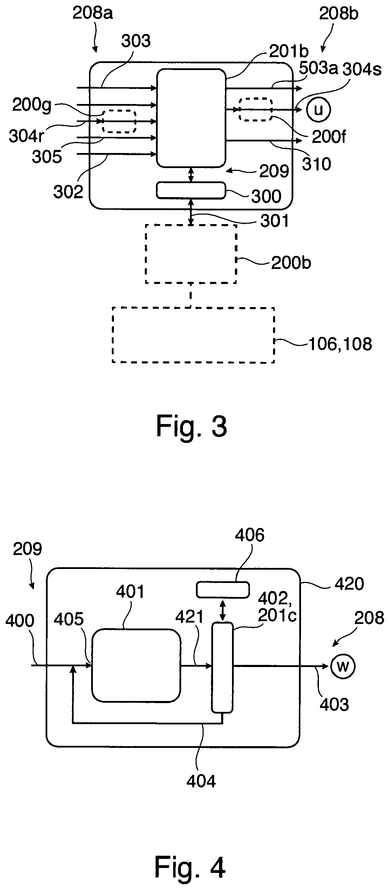

Die Fig. 3 zeigt ein detailliertes Blockdiagramm des Submoduls, welches die Funktionalität eines Remote Terminals 201b realisiert, gemäß einem exemplarischen Ausführungsbeispiel der vorliegenden Erfindung. Die Funktionalität des RTs ist als FSM 201b ausgeführt, die sog. Remote Terminal FSM 201b. Die Remote Terminal FSM 201b dient als Koppelnetz oder Switch zwischen dem Nachrichtenpuffer 200b und dem Übertragungsmedium 102 (in Fig. 3 nicht dargestellt), beispielsweise einem Ethernetbus 102. Das Übertragungsmedium kann über das Empfangsinterface 208a oder das Sendeinterface 208b und den daran angeschlossenen Seriell-/Parallelwandler 201a (nicht gezeigt in Fig. 3) erreicht werden kann. Da der Nachrichtenpuffer 200b mit der Hosteinrichtung 106, 108 verbunden ist, kann die RT FSM als Koppelelement zwischen der Hosteinrichtung 106, 108 und dem Medium 102 aufgefasst werden. Die Remote Terminal FSM 201b verarbeitet Daten, die aus dem Nachrichtenpuffer 200b kommen bzw. in 200b geschrieben werden. Diese durchlaufen aber vorher einen Memorycontroller, der in Fig. 8 beschrieben ist und in Fig. 3 nicht dargestellt ist.

Es ist zu beachten, dass in Fig. 3 zwischen dem Nachrichtenpuffer 200b und der Hosteinrichtung 106, 108 nicht alle tatsächlich vorhandenen Komponenten dargestellt sind.

Der Zugang zu dem Nachrichtenspeicher 200b erfolgt über die Speicherschnittstelle (Memory Interface) 300 und den Speicherzugangslink 301. Über den Konfigurationsport 302, der mit einem in Fig. 3 nicht dargestellten Konfigurationsregister 200d verbunden ist, wird dem Remote Terminal Submodul 201b oder der RT FSM 201b einerseits mitgeteilt, dass es in dem Betriebsmodus RT arbeiten soll. Das Konfigurationsregister 200d kann als Umschalteinrichtung 200d zwischen den verschiedenen Betriebsmodi RT, BC und MON ausgebildet sein. Außerdem wird dem RT Submodul 201b über das Konfigurationsregister 200d die Remote Terminal Adressen mitgeteilt, auf die es zu reagieren hat oder die es beim Kennzeichnen von Nachrichten zu verwenden hat. Über den Konfigurationsport 302 könnte die Resourcenverwaltungseinrichtung 201 auch in den Buscontrollerbetriebsmodus (BC) geschaltet werden indem die BC FSM 201c statt oder zusätzlich zu der RT FSM 201b aktiviert wird. Ferner könnte auch die RT Adresse geändert werden und das Remote Terminal mit jeder beliebigen anderen Adresse betrieben werden. Andere Umschalteeinrichtungen, wie mechanische oder elektronische Schalteinrichtungen sind denkbar.

Wurde eine Schnittstellenvorrichtung 107 über den Konfigurationsport 302 und das zugehörige Konfigurationsregister 200d als RT eingestellt, gibt es vier verschiedene Möglichkeiten, wie die RT FSM 201b auf einen über den Befehlseingang 303 (Command Input) empfangenen Befehl (Command) von einem BC reagieren kann.

Die RT FSM 201b wird einen über die Befehlsleitung 303 ankommenden Befehl ignorieren, wenn diese RT FSM 201b weder als Quell-RT noch als Ziel RT von einem BC aktiviert worden ist. Die Aktivierung könnte auch durch einen BC erfolgen, der sich auf derselben Baugruppe oder auf demselben FPGA wie die RT FSM 201b befindet. Um Konflikte zu vermeiden ist vorgesehen, dass eine RT FSM, die an einer Kommunikation beteiligt sein soll, als Quell-RT oder Ziel-RT geschaltet ist. Durch die Festlegung von Quell-RT und Ziel-RT kann der eigentliche Nachrichtenaustausch ohne Angabe einer Adresse erfolgen. Die verfügbare Bandbreite des Übertragungsmediums kann im Wesentlichen vollständig genutzt werden und auch mehrere Ziel-RTs können die Nachricht erhalten.

Auf den Empfangsmodus wird weiter unten im Text noch eingegangen. Der Vollständigkeit halber seien an dieser Stelle die verschiedenen Betriebsmodi der RT FSM 201b oder des Remote Terminal Submoduls 201b beschrieben.

Wurde die RT FSM 201b durch einen zuvor über die Befehlsleitung 303 empfangenen Befehl mit der entsprechenden RT Adresse als Empfangs-RT oder Ziel-RT aktiviert, so wird die RT FSM 201b warten, dass auf der Empfangsleitung 304r Daten, Nutzdaten oder Datenpakete empfangen werden. Diese Daten wird die RT FSM 201b an die entsprechende Speicherstelle des Empfangspuffers 200b zum Ablegen weiterleiten. Zum Festlegen des Adressbereichs wird mit dem Aktivieren der RT FSM 201b als Empfangs RT der Nachrichtenpuffer 200b, insbesondere die spezifische Adresse, als Empfangspuffer aktiviert.

In einem Sendemodus wurde mit einem zuvor von einem BC empfangenen Befehl die RT FSM 201b als ein Sende-RT oder Quell-RT zum Senden aktiviert, beispielsweise über eine Nachricht auf dem Befehlseingang 303 mit der RT Adresse der RT FSM 201b. In diesem Sendemodus wird die RT FSM 200b Nutzdaten aus dem Nachrichtenpuffer 200b, der für das Senden als Nachrichtenquelle eingestellt ist, auslesen und über die Sendedatenleitung 304s verschicken.

Die RT FSM 201b kann auch gleichzeitig als Sende-RT und Empfangs-RT aktiviert sein und über einen an dem FPGA angeschlossene Loopback-Puffer 200j (nicht dargestellt in Fig. 3), welcher sowohl mit der Sendeleitung 304s als auch der Empfangsleitung 304r verbunden ist, Daten austauschen. Die Sende-RT und Empfangs-RT sind unterschiedliche der Vielzahl von der RT FSM 201b simulierten RTs. Der Loopback-Puffer 200j bewirkt, dass gesendete Nachrichten nicht nur auf den Bus 102, sondern gleichzeitig auch in den eigenen Empfangspuffer 200a2 transferiert werden. Die RT FSM 200b behandelt die rückgekoppelte Nachricht genau wie eine reguläre Nachricht. D.h. auch, dass die RT FSM 200b beim Senden nicht weiß oder wissen muss, dass die Nachricht für sie selbst bestimmt ist.

Das Konfigurations Register 200d hat jeweils ein Flag für eine RT Adresse. Ist dieses Flag aktiviert, dann wird auf Befehle, welche die RT Adresse des Flags betreffen, reagiert. Ist dieses Flag nicht aktiviert, dann wird das Kommando und der Busverkehr bis zum nächsten Kommando ignoriert.

Wie zu sehen ist, wird in Abhängigkeit davon, ob eine Nachricht aus dem Nachrichtenpuffer 200b verschickt werden soll oder von diesem empfangen werden soll oder beides gleichzeitig ein Lesezugriff, ein Schreibzugriff oder ein Lese- und Schreibzugriff auf eine entsprechende Speicheradresse des Nachrichtenpuffers 200b erfolgen. Der gleichzeitige Lese- und Schreibzugriff kann bei einer bidirektionalen Übertragung vorkommen. Das Speicherinterface 300 regelt diesen gleichzeitigen Zugriff, wenn also im gleichen Zeitintervall lesend und schreibend auf diesen Speicher zugegriffen werden soll.

Es wird zunächst gelesen und in einer späteren Phase geschrieben. Aus Sicht des Nachrichtenpuffers 200b mag in dem weiter oben im Text beschriebenen Szenario kein gleichzeitiger Zugriff erfolgen. Ein gleichzeitiger Zugriff erfolgt, wenn seitens der Hosteinrichtung 106, 108 und simultan von der Speicherschnittstelle 300 zugegriffen wird. Das Speicherinterface 300 behandelt immer nur einen Zugriff gleichzeitig, nämlich Lesen oder Schreiben. Das Memory Interface steuert den Memory Access Controller an und ist nicht mit dem Memory Access Controller in der Speicherschnittstelle 210 gleich zu setzen.

Wurde die RT FSM 201b nicht durch einen vorausgegangenen Befehl von der BC aktiviert, so werden sämtliche empfangenen Nachrichten ignoriert oder verworfen.

In dem Ausführungsbeispiel gemäß Fig. 3 sind Datenpuffer 200f, 200g dargestellt. Diese können alternative oder ergänzend zu den Datenpuffern 200a2, 200a1 genutzt werden. Für einen einfachen Aufbau der Schnittstellenvorrichtung, wovon im überwiegenden Teil dieses Textes ausgegangen wird, sind die Datenpuffer nicht vorhanden. Daher sind die Datenpuffer 200f, 200g nur gestrichelt gezeichnet. Um eine Störung oder Kollision zwischen unterschiedlichen zeitkritischen Nutzdaten, insbesondere bei einem im Wesentlichen gleichzeitigen Schreib-/Lesezugriff auf den Nachrichtenpuffer 200b zu verhindern, können die internen Datenpuffer 200f für die Senderichtung und 200g für die Empfangsrichtung in der Sendeleitung 304s bzw. Empfangsleitung 304r vorgesehen sein. Diese Datenpuffer 200f, 200g können zur Realisierung des Echtzeitverhaltens beitragen und eine Kollision durch eine kurzzeitige Zwischenspeicherung von Daten verhindern. Bei einem einfachen Aufbau der Schnittstellenvorrichtung sorgen die die Datenpuffer 200a2, 200a1 im Wesentlichen alleine, ohne zusätzliche hierarchisch angeordnete Datenpuffer 200f, 200g für das Echtzeitverhalten der Schnittstellenvorrichtung. Die einzigen asynchronen Speicher 200a1, 200a2 sind demnach außerhalb von 208 angeordnet.

Die Datenpuffer 200f, 200g sind, falls sie vorhanden sind, als interne FIFO-Puffer realisiert. Da sich die Datenpuffer 200f, 200g innerhalb des FPGAs befinden wird zu deren Realisierung der Speichertyp Block-RAM genutzt. Die Größe dieses FIFOs kann vor der Synthese dynamisch konfiguriert werden. Die Datenpuffer 200f, 200g dienen dazu, Kollisionen beim Speicherzugriff so aufzulösen, dass die Echtzeitfähigkeit der Systemtaktdomain eingehalten wird ohne die Hosttaktdomain 702 im Zugriff verhungern zu lassen. Diese Funktionalität wird in Fig. 8 dargestellt. Die Größe der Datenpuffer 200f, 200g ist konfigurierbar und richtet sich nach der Größe der zu erwartenden Hostzugriffe und Taktdifferenz zwischen Hosttaktdomain 702 und Systemtaktdomain 701. Die Datenpuffer 200f, 200g können ebenfalls Teil des Zwischenspeichers 200 sein.

Das Steuerregister 200d (nicht gezeigt in Fig. 3), welches über den Steuerport 305 an der RT FSM 201b angeschlossen ist, stellt das breiteste Eingangssignal der RT FSM 201b dar. Dieses Steuerregister 200d verbindet das Befehls/Antwort System, welches im Wesentlichen in der Ressourcenverwaltungseinrichtung 201 realisiert ist, mit einer Hosteinrichtung 106, 108 (die Hosteinrichtung ist in Fig. 3 nicht dargestellt) oder einem Hostcontroller 106, 108. Der Configuration Port 302 greift auch auf das Steuerregister 200d zu, so wie Port 305. In einem Beispiel kann das Steuerregister 200d statisch an diesen Port 302 geroutet sein. Der Configuration Port 302 gibt an welche RTs von der RT FSM behandelt werden. Der Configuration Port greift auf das Register 200d zu. Das Register 200d ist relativ breit, um die gesamten aktiven Flags für die RTs abzudecken. Die Flags geben an, welche der Vielzahl von RTs auf der RT FSM aktiviert ist. Dieses Register 200d wird von der Hosteinrichtung 106, 108 gesetzt. Auf dem Weg von der Hosteinrichtung 106, 108 zur RT FSM 201b entstehen die größten Pfade in der FPGA Implementierung, in Bezug auf die geometrische Pfadlänge im FPGA. Zusätzlich zur geometrischen Länge besteht die Verbindung vom Register 200d zum Configuration Port 302 aus 32 parallelen Singalleitungen. Durch die Länge und Breite kann diese Verbindung der kritischste Pfad in der Schnittstellenvorrichtung sein. Ein automatisierter Signalrouting Prozess während der Design Synthese mag darauf ausgelegt sein, das Gesamtsystem nach den kritischsten Pfaden auszulegen. Bei dem Design der Schnittstellenvorrichtung mag darauf zu achten sein, dieses unerwünschte Auslegen nach den kritischsten Pfaden zu verhindern. Denn für die Funktion des Gesamtsystems mag dieser Pfad nicht kritisch sein. Die Signale auf diesem Pfad sind relativ zum Systemtakt statisch und ändern sich relativ zum Systemtakt nur sehr selten oder gar nicht. Um die Kritikalität dieser Signalleitungen zu verringern, können die Signale in einer Ausführungsform der Erfindung durch mehrere Register geleitet werden. Die eingeführten Register verkürzen die Signalleitung. Durch die eingeführten Register werden Wertänderungen in Register 200d erst mit einer Verzögerung zu dem Configuration Port 302 übertragen. Diese Verzögerung ist proportional zu der Anzahl der eingeführten Register und ein Vielfaches des ersten Taktes der Systemtaktdomain. Aufgrund des relativ statischen Charakters der Signale im Register 200d hat diese Verzögerung jedoch im Wesentlichen keinen negativen Effekt. Das Einführen der Register kann in einem Ausführungsbeispiel als eine Maßnahme genutzt werden, um die Schnittstellenvorrichtung auf einer vorgegebenen Plattform zu ermöglichen.

In einem Beispiel beträgt die Speicherbreite des an dem Konfigurationsport 302 angeschlossenen Konfigurationsregisters 200d 32 Bit. Dabei stellt jedes Bit ein mögliches RT dar, welches auf demselben FPGA realisiert ist. Es können folglich bis zu 31 RTs und 1 BC mittels dieses 32 Bit Konfigurationsregister 200d gleichzeitig betrieben werden. Der Empfangsdatenpuffer 200g bzw. der Sendedatenpuffer 200s werden mittels Block-RAM des FPGAs realisiert. Die Datenpuffer 200g, 200f sind 8 Bit breite FIFOs und können somit die Länge eines maximal möglichen Datenpakets (Data Frame) aufnehmen. Dabei beziehen sich die 8 Bit auf die Breite der FIFOs 200g, 200f und nicht auf die Tiefe. Die Breite gibt an wie breit ein Datenwort ist, das während eines Taktes in das FIFO geschrieben bzw. vom FIFO gelesen werden kann. Die Tiefe ist die maximale Anzahl der Worte, die gleichzeitig im FIFO gespeichert werden können. Die Tiefe stellt die Speichergröße dar.

Die RT FSM 201b verarbeitet die Daten mit 8 Bit und gibt daher die Breite der FIFOs 200g, 200f zu 8 Bit vor. Die Datenpuffer 200g, 200f der RT FSM 201 b werden synchron betrieben, da sich sowohl Eingang als auch Ausgang in derselben Taktdomain 701 befinden. Die Datenpuffer 200f, 200g sind als Dual Port Speicher ausgebildet und werden auf jeder Seite mit demselben Takt betrieben. Durch die Speicherlänge dieses Datenpuffers 200g, 200f wird die Burstlänge für einen Speicherzugriff auf den Nachrichtenpuffer 200b festgelegt. Wie zur Wahrung von der Echtzeitfähigkeit auf der Interfaceseite und auf der Hostseite die Memoryzugriffe segmentiert werden wird in Fig. 8 dargestellt. Die Größe eines solchen Zugriffssegmentes ergibt automatisch die Größe eines Memorysegmentes.

Das Speicherinterface 300 ist einfach gehalten, so dass es mit verschiedenen Typen von Nachrichtenspeichern 200b kombiniert und betrieben werden kann. Der bidirektionale Betrieb der Schnittstelle 209 wird mittels jeweils zweier unidirektionalen Datenports je einen für Lesen und einen für Schreiben realisiert. Somit weist die Nachrichtenpufferschnittstelle 209 an dem Nachrichtenspeicher 200b zwei Ports auf. Die Schnittstelle 301 kennt nur einen Port, welcher zum Schreiben und auch zum Lesen benutzt werden kann. Diese Schnittstelle 301 bedient nur die Memoryzugriffe der RT FSM 201b. Die zusätzlichen parallelen Zugriffe der Hosteinrichtung 106, 108 sind in Fig. 3 nicht dargestellt.

Eine zusätzliche oder andere Quelle für das Versenden von Daten - kann der BC 201c, also die zentrale Steuereinrichtung 201c sein. Der BC 201c kann allerdings nur Daten in Form von Befehlen (Commands) verschicken und keine Nutzdaten.

Fig. 4 zeigt ein detailliertes Blockdiagramm eines Buscontrollersubmoduls und insbesondere dessen Rolle bei der Abarbeitung einer Busliste mittels eines Loopback Mechanismus gemäß einem exemplarischen Ausführungsbeispiel der vorliegenden Erfindung. Das Buscontrollersubmoduls 201c, das Buscontroller FMS 201c oder das BC FSM 201c oder BC 201c bildet den Interpreter 201c, 402 für eine Programmsteuereinrichtung 420. Die BC FSM 201c stößt als Koordinator oder Dirigent für den Verkehr auf dem Medium 102 sämtliche Transaktionen an. Außerdem überwacht die BC FSM 201c das Einhalten von Zeitvorgaben oder Deadlines gemäß dem zugestandenen Zeitplan für Datentransfers und sorgt so für das Einhalten des Determinismus. Der BC 201c geht davon aus, dass die Teilnehmer, d.h. andere an dem Medium 102 angeschlossene Schnittstellenvorrichtungen 103, 107 und insbesondere deren RT FSMs 201b, das Timing einhalten. D.h. der BC 201c arbeitet im Zusammenwirken mit dem Loopback FIFO 401 die Busliste ab, unabhängig vom Zustand der betroffenen RTs.

Ein RT 201b, das das Timing nicht einhält wird von dem BC 201c als defekt erkannt. In solch einem Fall wird auf die Redundanzen zurückgegriffen, wenn welche vorgesehen sind.

Zur Überwachung der RT FSMs 201b kann in der BC FSM 201c ein unabhängiger Watchdog integriert sein, der einen Transfer nach Überschreitung der maximalen Transferzeit stoppt, um beispielsweise einen Bubbling Ideot abzuschalten.

Findet die Überwachung innerhalb des RTs 201b statt, ist ebenfalls wie im Falle des BC ein Watchdog vorgesehen und zusätzlich noch ein weiterer Sicherheitsmechanismus, der sicherstellt, dass ein neues Kommando vom BC 201c jeden noch laufenden Datentransfer stoppt, egal auf welchem Bus dieses ankommt. Dazu kann es auch nötig sein, dass eine innerhalb der Schnittstellenvorrichtung zum Einhalten des Timings verzögerte Antwort gestoppt oder verworfen wird.

Der Plan nach dem die BC FSM 201c das geteilte Medium 102 den einzelnen Teilnehmern 101, 120a, 120b, 120c, 120d, 120e, 120f zuteilt, ist in einer Busliste gespeichert, welche die BC FSM 201c über die Eingangsleitung 400 und das Loopback FIFO 401 erhält. Die Eingangsleitung 400 ist ein Teil der Speicher/Logik-Schnittstelle 209, die zwischen der Zwischenspeichereinrichtung 200 und der Ressourcenverwaltungseinrichtung 201 angeordnet ist. Die Elemente der Busliste werden von dem Buslistenspeicher 200c, der in Fig. 4 nicht dargestellt ist, in ein Loopback FIFO 401 geladen. Die Busliste in dem Zwischenspeicher 200, 200c wurde von einem Hostcontroller 106, 108 (nicht gezeigt in Fig. 4) geschrieben. Hierzu wird ein 32 Bit breites Register ausgewertet, welches an der Eingangsleitung 400 angeschlossen ist.

Der Hostcontroller 106, 108 initialisiert die Busliste 200c, indem er die einzelnen Daten sequentiell in das Loopback FIFO 401 schreibt. Immer wenn der Hostcontroller 106, 108 einen neuen Wert in das Register an der Eingangsleitung 400 schreibt, wird dessen Wert in das Loopback FIFO übertragen. Der Inhalt des Loopback FIFOs 401 stellt den Programmcode für die Ablaufsteuerung dar und legt das Timing fest. Es gibt in diesem Programmcode zwei Befehle. Ein erster Befehl betrifft das Senden eines Befehlswortes 1100 (Sende Command Word). Der zweite Befehl betrifft das Warten für eine bestimmte Zeit (Delay). Der Befehl weist das FPGA an eine gewisse Zeit zu warten. Steht ein erster Befehl an, wird ein Befehlswort 1100 oder Command Word 1100 gesendet. Die Parameter für dieses Befehlswort 1100 sind in einem 32bit Register (nicht gezeigt in Fig. 4) an der Eingangsleitung 400 vorhanden. Steht ein zweiter Befehl an, wird der Timer 406 gestartet und abgewartet, bis dieser einen Schwellwert erreicht hat, der ebenfalls im 32bit Word vorhanden ist. Hierdurch werden die Wartezeiten zwischen zwei Befehlsworten 1100 und damit Übertragungssequenzen erzeugt. Nach dem Ausführen eines Befehls, wird das 32Bit Befehlswort vom FIFO Ausgang über die Feedbackleitung 404 in den Eingang 405 geschrieben und somit die gesamte Sequenz wiederholt. Dadurch erreicht man den iterativen Charakter der Busliste. Einzelne Bestandteile der Busliste können nicht on-the-fly verändert werden. Aber die Busliste kann vom Hostcontroller 106, 108 separat geleert oder geflushed und neu beschrieben werden, z.B. um im Falle eines Fehlers auf redundante Systeme auszuweichen. Zum Ausweichen schaltet der BC auf das Redundante System um. Das Konfigurationsregister 200d ist in Fig. 4 nicht dargestellt. Für den BC 201c wird das Konfigurationsregister 200d nur genutzt, um den BC 201c zu aktivieren oder zu deaktivieren. Das FIFO 401 ist 32bit breit. Das jeweils älteste Wort im FIFO liegt aktiv am Ausgang an. Dies ist das Wort, welches als nächstes von dem Timer 201d und/oder von der Zeitüberwachungseinrichtung 201h verarbeitet wird. Dort wird entschieden, ob ein Befehl ausgesendet wird oder ob abgewartet wird. Wenn ein vorhergehender Befehl ausgeführt wurde, wird das aktuelle Wort aus dem FIFO in ein 32bit Register innerhalb des BC 201c geladen und nach dem Ausführen an den Eingang des FIFO rückgekoppelt 404. Das 32bit Register innerhalb des Timers 201d ist in Fig. 4 nicht dargestellt. Die Busliste die in dem Buslistenspeicher 200c gespeichert ist, weist eine Kombination verschiedener Elemente auf, die aus zwei Datenworttypen ausgewählt sein können. Die Datenworttypen stellen den Befehlssatz der Busliste 200c dar. Je nach Bedarf sind die Elemente der Busliste sequentiell in der Busliste 200c gespeichert. Erst durch das Auswerten mittels eines Interpreters 402 werden die Elemente der Busliste 200c in ein entsprechendes Verhalten umgewandelt.

Das Buslisten Befehlswort (Buslist Command Word), das in der Busliste 200c und in dem Loop-back FIFO 401 verwendet wird, ist nicht bereits das endgültige Befehlswort (Command Word, Command) 1100, das der BC 201c an andere Teilnehmer 120, andere Schnittstellenvorrichtungen 103, 107 oder andere RT FSM 201b verschickt. Das endgültige Befehlswort, wird aus den Parametern im 32bit Register samt Adressierung erzeugt. Eine Anordnungsreihenfolge der Bits nach MSB oder LSB existiert in dem Buslisten Befehlswort der Busliste 200c und auch in dem ausgegebenen Befehlswort 1100 am Ausgang 403 des Loop-back FIFOs 401 noch nicht. Das MSB bei einem Befehlswort 1100, das von dem Interpreter 402 erzeugt wird und auf der Datenleitung 403 ausgegeben wird in dem auch die Präambel 512 mit den Werten 001, 010 oder 100 des Befehlswortes 1100 untergebracht ist, ist die Datenleitung der parallelen Verbindung 403 mit dem höchsten Index, beispielsweise bei einer 32 Bit Leitung 403 die Leitung mit dem Index 31 am Interface 403 des Loop-back FIFO 401.

Ein Verzögerungsdatenwort, welches durch ein bestimmtes auf den Zustand high gesetztes Bit des Datenworts gekennzeichnet ist, wird als Verzögerung interpretiert und dem Zeitglied 406 zum Abwarten der in dem Verzögerungsdatenwort vorgegebenen Zeit zugeführt. Das Verzögerungsdatenwort ist das Wort im FIFO. Mit dem Verzögerungsdatenwort kann ein Zeitplan eingehalten werden, wenn die Durchlaufzeit einer Nachricht durch die Schnittstellenvorrichtung geringer ist, als die Zeit zu der eine Antwort erwartet wird.

Ist das bestimmte Bit innerhalb des aktuellen 32 bit Datenwortes im FIFO 401 auf den Zustand low gesetzt, so erzeugt der BC 201c eine Befehlsdatenwort. Das Befehls-Datenwort wird über die Befehlsleitung 403, die ein Teil des Interfaces 208 ist, zwischen der Ressourcenverwaltungseinrichtung 201 und der Seriell-Parallel-Wandeleinrichtung 201a ausgetauscht. Somit wird ein entsprechendes Befehlswort (Command) verschickt, welches ein entferntes RT 107a, 107b, 107c, 107d, 107e, 107f anweist etwas zu tun. Das Befehlswort wird im BC 201c erzeugt. Um eine zyklische Wiederholung des Vorgangs zu gewährleisten, wird das Befehlswort (Command) über die Rückführungsleitung 404 wieder zu dem Loopback FIFO 401 zurückgeführt, so dass ein Ringpuffer realisiert wird. Das Loopback FIFO 401 wird mittels Block-RAM realisiert.

Als "Befehls/Antwort Protokoll über Ethernet" oder "Command/Response over Ethernet Protokoll" mag das Protokoll bezeichnet werden, bei dem ein Befehls/Antwort Protokoll im Wesentlichen auf Schicht 2 und das Ethernet Protokoll im Wesentlichen auf Schicht 1 genutzt wird. Telegramme, die diesem Protokoll entsprechen mögen von der Schnittstellenvorrichtung generiert werden. Das Loopback FIFO 401 ist die Schnittstelle zwischen der Logik 201 für das "Befehls/Antwort über Ethernet Protokoll" und der Hosteinrichtung 106, 108. Die Kombination aus Parallel-Seriell-Wandler 201a und Datenpuffer 200a stellt die Logik für das "Befehls/Antwort über Ethernet Protokoll" dar. Die Daten an der Schnittstelle 104, 109 sind nicht zeitkritisch, wenn es sich bei den Daten um den Ablaufplan für den BC 201c handelt und nicht um Nutzdaten für eine zugehörige Avionikanwendung. Die Abarbeitung des Ablaufplan ist zeitkritisch, nicht aber dessen Konfiguration. Diese Daten für den Ablaufplan haben keine Echtzeit Anforderungen. Der BC 201c erhält und sendet keine Nutzdaten. Die Nutzdaten werden über die RT FSM 201b ausgetauscht. Der Host 106 lädt das Loopback FIFO 401 einmal bei der Initialisierung des Netzwerkes mit den Daten für den Ablaufplan. Danach arbeitet die Programmsteuereinrichtung 420, insbesondere der BC 402, das Programm mit Hilfe des Loopback FIFOs 401 zyklisch ab. Bei einem ungestörten Verhalten "hört" der BC 201c nach dessen Initialisierung nichts mehr von der Hosteinrichtung 106, 108. In anderen Worten ausgedrückt, tritt ein Host mit einem BC im Wesentlichen nur beim Initialisieren und bei einer Fehlerbehebung in Kontakt, beispielsweise bei der Redundanzumschaltung. Somit hat der Host zwar die Möglichkeit die Busliste 200c zu ändern, aber das Ändern der Busliste ist im Wesentlichen nicht echtzeitfähig und könnte auch die Echtzeitfähigkeit des Netzwerkes beeinträchtigen.

Die Programmsteuereinrichtung 420, insbesondere die Loopback FIFO 401, bestimmt das gesamte Zeitverhalten des implementierten Befehls/Antwort Protokolls. Das Loopback FIFO 401 bestimmt mit welchem Intervall jeweils Command Wörter an die RTs 201b gesendet werden. Dazu dient der Timer 406 in der Programmsteuereinrichtung 420. Ein Befehls Wort initiiert jeden Transfer auf dem Netzwerk 102 und gibt Transfer Adressierung und die Transfer Dauer an. Die Messages, die bei einem Transfer übertragen werden können beispielsweise ein Befehl (Command oder CMD), Daten eines Quell-RTs (Sender-Data) oder eine Antwort eines Empfängers (Empfänger-Response) sein. Die Zeiten zwischen den einzelnen Messages eines Transfers sind durch die maximale Antwort Zeit (Response Zeit) festgelegt, die durch die Zeitüberwachungseinrichtung 201d, 201h überwacht werden kann. Die Länge der Messages ist ebenfalls bekannt. Dadurch ist die komplette Länge eines jeden Transfers bekannt, wenn die Busliste initiiert wird. Folglich sind auch die Intervallzeiten zwischen zwei Transfers bei Initiierung bekannt.

Das Loopback FIFO 401 kann als Programmspeicher für den Ablauf der Nachrichten Transfers angesehen werden. Die BC Logik 201c realisiert folglich einen einfachen Prozessor 420, der zwei Befehlsworte kennt. Das erste Befehlswort ist eine Anweisung einen Transfer zu initiieren, indem ein Befehlswort emittiert wird. Das zweite Befehlswort ist eine Anweisung eine vorgegebene Zeit zu warten. Dieser einfache Prozessor 420 nutzt jedoch keinen Instruction Pointer und keine Verzweigungsbefehle (Branch Befehle). Die Befehle werden von dem Loopback FIFO 401 streng sequentiell abgearbeitet und jeder abgearbeitete Befehl wird ans Ende des FIFO geschrieben.

Da das Loopback FIFO 401 eine große Pfadlänge wegen der vielen zu implementierenden Funktionen darstellt, kann das Layout des Loopback FIFO zu Timingproblemen innerhalb der Schnittstellenvorrichtung 103, 107 führen, welche die interne Funktion der Schnittstellenvorrichtung beeinträchtigen können. Solche Timingprobleme können beispielsweise während der FPGA Synthese festgestellt werden, falls die Schnittstellenvorrichtung 103, 107 mittels eines FPGAs realisiert wird. Timingprobleme können jedoch das Echtzeitverhalten stören und sollen daher vermieden werden. Neben dem Zeitverhalten der Messages auf dem Ethernet Bus, sollten von der Schnittstellenvorrichtung 103, 107 auch die internen Anforderungen an das Timing der Digitalschaltung eingehalten und frei von Störungen gehalten werden, um unvorhersehbare Ereignisse zu vermeiden. Das interne Timing wird im Wesentlichen von der Loopback FIFO 401 beeinflusst, wobei Störungen aufgrund des Zeitverhaltens der elektrischen Signale und der Verschaltung der elektrischen Komponenten verursacht werden können, insbesondere, wenn das Loopback FIFO 401 auf einem FPGA realisiert ist. Denn bei der FPGA Entwicklung wird beispielsweise eine zunächst nur abstrakte Logische Schaltung auf die Schaltelemente abgebildet, die auf dem jeweiligen FPGA vorhanden sind. Anschließend werden diese Schaltelemente entsprechend elektrisch verbunden. Diese Verbindungen bilden eine Pfadlänge. Bei der Vergabe dieser Verbindungen wird überprüft, ob die Laufzeiten für Signale, die sich aus der Pfadlänge ergeben, kurz genug sind, um stabile elektrische Verhältnisse in allen beteiligten Schaltelementen zu garantieren bevor ein Signal mit der nächsten Taktflanke in ein Register geschrieben wird. Hierbei können die Pfadlängen zwischen Ausgang oder Output der Hosteinrichtung 106, 108 und Eingang 400 oder Input 400 des Loopback FIFO zu lange werden. Der Ausgang der Hosteinrichtung 106, 108 entspricht der ersten Schnittstelle 104, 109. Bei dem Aufbau der Schnittstellenvorrichtung 103, 107 ist daher darauf zu achten, dass die Pfadlänge, also die Gesamtlänge der Verdrahtung der an der Verbindung beteiligten Komponenten des FPGAs, zwischen erster Schnittstelle 104, 109 und dem Eingang 400 des Loopback FIFOs, eine vorgegebene Länge nicht überschreitet.

Um Timingprobleme zu vermeiden, die durch die lange Verbindung zwischen der ersten Schnittstelle 104, 109 und dem Eingang 400 des Loopback FIFO 401 entstehen könnten, sind an den beiden Endpunkten 104, 109, 400 zusätzliche Register eingefügt. Diese Register spalten die lange Pfadlänge in kürzere Abschnitte auf und verringern somit das Risiko, dass unvorhersehbare instabile Zustände und interne Konflikte oder Kollisionen entstehen können. In anderen Worten entkoppeln die Register mehrere Abschnitte eines gesamt Pfades, so dass die Anforderungen an das Timing in den einzelnen Abschnitten leichter kontrollierbar ist und entspannen so das Zeitverhalten, wobei sie die Wahrscheinlichkeit reduzieren, dass Fehlerzustände auftreten. Diese Maßnahme trägt zu der Gewährleistung der korrekten Funktoinalität des Determinismus der Schnittstellenvorrichtung bei.

Die Schnittstellenvorrichtung mag mit einem FPGA des Typs Xilinx Spartan 6: XC6SLX45T realisiert sein.

Über die an den Enden des Pfades zwischen der ersten Schnittstelle 104, 109 und dem Eingang 400 des Loopback FIFO 401 eingeführten Register laufen die Signale, welche die Hosteinrichtung 106,108 in das Loopback FIFO 401 schreibt. Die Signale, welche von der Hosteinrichtung 106,108 und das Loopback FIFO 401 übertragen werden, dienen der initialen und statischen Konfiguration und die Übertragung wird im fehlerfreien Betrieb nicht wiederholt. Durch die Einführung der Register wird die Übertragung der Signale von der Hosteinrichtung 106, 108 zum Loopback FIFO 401 um ein Vielfaches der Taktzyklen der Systemtaktdomain 701 verzögert. Durch den statischen und initialen Character dieser Übertragung hat diese Verzögerung keine Auswirkung auf die Funktionalität des BC 201c. Der Loopback Puffer 401 oder das Loopback FIFO 401 stellt den Flaschenhals für das Timing der Logikschaltung 201 oder der Ressourcenverwaltungseinrichtung 201 dar. Der Eingang 405 des Loopback FIFO 401 stellt einen kritischen Punkt bei der Flaschenhalsbildung dar. Das Loopback FIFO 401 ist über die Eingangsleitung 400 mit der Hosteinrichtung 106, 108 verbunden und über die Zwischenleitung 421 mit der BC FSM 201c Die BC FSM 201c bildet den Interpreter 402 der Programmsteuereinrichtung. Das Loopback FIFO 401 kann von der Hosteinrichtung 106, 108 bei der Initialisierung beschrieben werden. Die beim Initialisieren erhaltenen Befehle werden von der BC FSM 201c, insbesondere deren Loopback FIFO 401 abgearbeitet. Über die Ausgangsleitung 403 ist die BC FSM 201c mit dem Seriell-Parallel-Wandler 201a und dem Datenpuffer 200a verbunden, welche gemeinsam für das Implementieren eines Befehls/Antwort Protokolls über das Übertragungsmedium zuständig sind. Die von dem BC 201c erzeugten Befehle werden von dem Seriell-Parallel-Wandler 201a und dem Datenpuffer 200a in das "Befehls/Antwort über Ethernet Protokoll" gewandelt.

Das Loopback FIFO 401 befindet sich vollständig, d.h. mit Eingang 400 und Ausgang 403, in der Systemtaktdomain 701 oder der Domain des ersten Taktsignals Der Systemtakt wird aus dem FPGA Takt abgeleitet. Folglich kann dieses Loopback FIFO 401 nicht mit unterschiedlichen Taktsignalen am Eingang 400 und Ausgang 403, also nicht asynchron, betrieben werden. Somit kann das Loopback FIFO 401 auch nicht für einen Ausgleich zwischen dem unterschiedlichen ersten Takt und zweiten Takt sorgen. Das Loopback FIFO 401 selber kann nur mit dem gleichen Takt für Input/Output betrieben werden. Somit werden auf der Eingangsseite eine Vielzahl von sequenziellen bzw. seriellen Registern genutzt, um ein asynchrones Verhalten herzustellen. Das Verwenden der Register mag für die Echtzeitfähigkeit des Terminals eine geringe Rolle spielen. Jedoch kann erst mit diesen Registern die Funktion der FPGA Implementierung als gültige Schaltung erreicht werden. Der Übergang zwischen den verschiedenen Takten erfolgt dadurch, dass in Reihe geschaltete Register mit dem einen Takt beschrieben und mit dem anderen Takt gelesen werden. Wenn der Wert der Register, die aus der Reihenschaltung gebildet werden, in der Reihe gleich sind, dann kann man davon ausgehen, dass die Signalzustände für das Gesamtregister gültig und stabil sind.

Wie bereits dargestellt ist, können sowohl eine im Sendemodus betriebene RT FSM 201b oder eine BC FSM 201c für das Versenden von Daten verantwortlich sein. Während die RT FSM 201b die zeitkritischen Nutzdaten der Avionikanwendungen verschickt, verschickt BC FSM 201c Befehle des Befehls/Antwort Protokolls, um den Zugang zum Medium zu steuern. Die RT bzw. BC stellen über die Ausgänge 304s bzw. 403 die entsprechenden Pakete der Nutzdaten des Befehls/Antwort Protokolls in Rohform zur Verfügung. Diese Rohdaten weisen eine parallele Form und noch nicht die serielle Form auf, die übertragen werden soll. Bei dieser Rohform der Nutzdaten handelt es sich jedoch um Daten, die noch nicht übertragungsfähig sind, da ein entsprechendes Rahmenformat für einen Übertragungsrahmen fehlt. Da die Daten des Ausgangs 403 von dem BC 201c kommen, werden über die Ausgangsleitung 403 lediglich die Rohdaten für das Kommando übertragen. Ein Kommando hat immer das gleiche Format 1100, nämlich Adressierung und Länge der Nachricht. Der Ausgang 403 ist eine parallele Schnittstelle.

Über den Ausgang 403 stellt somit die BC FSM 201c ein Befehlswort 1100 im entsprechenden Format des implementierten Befehls/Antwort Protokolls zur Verfügung, beispielsweise im Format des MILBUS Protokolls oder eines abgewandelten Protokolls, bei dem die ersten 3 Bits 512 eine Typkennung enthalten, jedoch noch ohne gültigen Rahmen. An der Sendeleitung 304s stellt die RT FSM 201b zu übertragende Nutzinformation ebenfalls ohne einem gültigen Rahmenformat zur Verfügung bzw. als unvollständigen Übertragungsrahmen.

Es ist nun eine Aufgabe der Kombination des Parallel-Seriell-Wandlers 201a und des Sende-Empfangspuffers 200a, die entsprechenden fehlenden Informationen für einen gültigen Übertragungsrahmen sowohl des Befehls/Antwort Protokolls als auch des eingesetzten Übertragungsprotokolls zu der bereitgestellten Information hinzuzufügen und gleichzeitig dafür zu sorgen, dass die Verarbeitung der Daten deterministisch erfolgt, ohne im Wesentlichen durch die Anbringung der Rahmenstruktur an die Rohdaten zu große Verzögerungen zu verursachen. Gleichzeitig mit der Fertigstellung des Übertragungsrahmens wird der Taktunterschied zwischen der ersten Schnittstelle 104, 109 und der zweiten Schnittstelle 105, 110 ausgeglichen und das Datenformat gewandelt, beispielsweise von einem 8 Bit parallelen Datenformat zu einem 4 Bit seriellem Datenformat. Die Anpassung des Taktunterschieds wird im asynchronen FIFO des Sende-Empfangspuffers 200a ausgeglichen. Dies geschieht immer wenn eine Schnittstellenvorichtung 103, 107 auf das geteilte Medium 102 zugreift. Daher erfolgt die Anpassung des Taktunterschiedes auch bei einem BC 201c, der keine Nutzdaten über die erste Schnittstelle 104, 109 empfängt.

In anderen Worten nutzt die Schnittstellenvorrichtung aus, dass es, um einen Determinismus in einem Befehls/Antwort Protokoll einzuhalten, während einer Übertragung von Daten immer wieder Zeitpunkte gibt, zu denen der Bus nicht belegt werden kann, zu denen also selbst wenn von einer Quelle Daten geliefert werden, diese nicht übertragen werden können, bevor vorgegebene Randbedingungen erfüllt sind. Eine zu erfüllende Randbedingung kann sein, dass vor einem Verarbeitungsschritt ein Datenpaket vollständig in einem Puffer vorliegen muss. Durch das Einhalten von Randbedingungen kommt es beim Erstellen und Zerlegen von Datenpaketen während des Durchlaufes durch die Schnittstellenvorrichtung zu Stopphasen, in denen der Datenfluss unterbrochen wird. Ein Beispiel für eine Stopphase ist die Berechnung einer Nutzinformationslänge oder einer CRC (Cyclic Redundancy Check) Prüfsumme. Während dieser Stopphasen wird das Paket angehalten. An Stellen, an denen es zu solchen Stopphasen kommt werden Speicher oder Register vorgesehen, um das Paket zwischen zu speichern und um vorausgehende oder nachfolgende Submodule nicht zu blockieren. Die Stopphasen werden aber auch dazu genutzt, um Rahmeninformationen des Übertragungsrahmens zu ermitteln und an die Nutzinformation anzufügen oder zu entfernen, so dass die Stopphasen zu so wenig Verzögerung im Gesamtablauf führen wie möglich. In anderen Worten werden die Stopphasen für den Rahmenaufbau genutzt. Die Schnittstellenvorrichtung nutzt durch das Payload FIFO 200h in dem Submodul des Seriell-/Parallel Wandler 201a die Stopphase, die zu der Paketlängenermittlung und zum Wandeln von parallelen Daten in serielle Daten nötig ist, zum Erstellen des Ethernet Headers. Der Ethernet Header mag an der Stelle des Parallel-/Seriell-Wandlers201a die MAC Zieladresse, die MAC Quelladresse und die Ethernet-Rahmenlänge aufweisen.

In dem Submodul des Sende- und Empfangspuffers 200a entsteht eine Stopphase durch den asynchronen Betrieb der FIFOs 200a1, 200a2 zur Ratenanpassung und durch das Wandeln einer 8 Bit Information in eine 4 Bit Information. Diese Stopphase wird genutzt, um das Datenpaket 506 mit der CRC, dem SDF und der Präambel zu vervollständigen. Die entsprechenden Funktionen sind in diesem Submodul zusammengefasst.

Durch das Ausnutzen der Stopphasen lässt sich der Determinismus für den Datenstrom erreichen, der nötig ist, um Daten mittels eines Befehls/Antwort Protokolls zu übertragen.

An dem Medium unabhängigen Interface 202 an der zweiten Schnittstelle 105 soll ein übertragungsfähiger Rahmen entsprechend dem gewählten Protokollformat des Übertragungsmediums 102 zur Verfügung gestellt werden, der von dem Netzwerkcontroller 204 lediglich in die für das gewählte physikalische Übertragungsmedium vorgesehenen physikalischen Signale entsprechend des Standards des Übertragungsmediums 102 gewandelt werden muss. Durch das Verwenden einer medienunabhängigen Schnittstelle und dem Bereitstellen eins übertragungsfähigen Rahmens muss der Netzwerkcontroller 204 kein weiteres Rahmenformat für die Übertragung erzeugen.

Durch den Einsatz des Parallel-Seriell-Wandlers 201a und des Sende-Empfangspuffers 200a lässt sich die Zusammenstellung des Übertragungspakets als ein zweistufiger Prozess auffassen. Bei diesem Prozess werden parallel die Daten, die in der jeweiligen Prozessstufe verfügbar sind, genutzt, um die Information für das jeweilige Protokoll zu erstellen. Es erfolgt also nicht wie bei einer Verpackung der Information einer höheren Schicht im Protokollrahmen einer darunter liegenden Schicht das Erstellen der jeweiligen Rahmenstruktur durch eine sequenzielle Abarbeitung des gesamten Rahmens der jeweiligen Schicht, sondern es wird parallel der Übertragungsrahmen des Befehls/Antwort Protokoll und des verwendeten Übertragungsprotokolls bearbeitet.

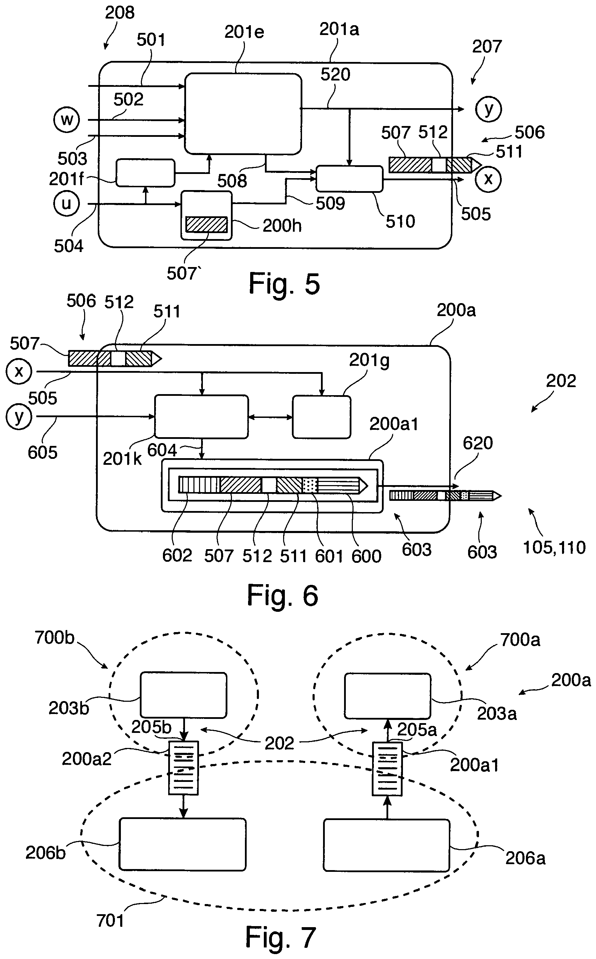

Fig. 5 zeigt den Sendeteil 201e oder die Sende UART FSM 201e eines Seriell-Parallel-Wandlers (UART) 201a als detailliertes Blockschaltbild gemäß einem exemplarischen Ausführungsbeispiel der vorliegenden Erfindung. Von der Schnittstelle 208, die den Parallel-Seriell-Wandler 201a mit der Ressourcenverwaltungseinrichtung 201 verbindet (nicht gezeigt in Fig. 5), sind die Steuerleitung 501 ("Send Control"), die Befehlsleitung 502 oder Command-Leitung 502 oder der Command-Input 502, die Statusleitung 503 oder der Status-Input 503 und die Datenleitung 504 oder der Daten-Input 504 dargestellt. Die Datenleitung 504 ist, falls vorhanden, mit der Datensendeleitung 304s der RT FSM 201b verbunden (nicht gezeigt in Fig. 5). Über die Statusleitung 503 erhält der Parallel-Seriell-Wandler 201a von der Leitung 503 eine Statusinformation, die ein BC von einem RT angefordert hat und von dem RT bereitgestellt wird.

Die Befehlsleitung 502 ist mit der Datenleitung 403 einer BC FSM 201c (nicht gezeigt in Fig. 5) verbunden.

Die Statusleitung 503 des Parallel-Seriell-Wandler 201a erhält die Statusinformation von dem mit "send Status" bezeichneten Ausgang 503a eines RTs 201b. Die Leitungen 503a und 503 sind miteinander verbunden und dienen dem Austausch von Statusinformationen zwischen RT 201b und UART 201e, die ein BC von einem RT angefordert hat und von dem RT bereitgestellt wird. Als Signale werden auf der "send Status" Leitung die Parameter für ein StatusWort übertragen. Ferner sind die RT FSM 201b und der Parallel Seriell-Wandler 201a über eine eine "ready" Leitung verbunden, die in Fig. 3 und Fig. 5 nicht eingezeichnet ist, die aber parallel zu der "send Status" Leitung angeordnet ist. Wenn diese "ready" Leitung auf high geht, dann konstruiert das UART 201e den Datenstrom für das Status Wort.

Ein Datenwortstrom ist eine Folge von Nachrichten des Typs Data 1101, also Nutzdaten. Ein Datenwort ist eine einzelne Nachricht des Typs Data 1101. Ein Statuswort ist eine einzelne Nachricht des Typs Status 1102. Über die Leitung Send Control 501 wird dem UART 201e mitgeteilt, dass es einen Datenwort Datenstrom konstruieren soll und dazu auf die Daten des Dateneingangs 504 zurückgreifen soll. Die Nutzdaten selbst werden über den Dateneingang 504 im Datenpuffer 200h gespeichert. Während die Daten in den Puffer 200h geschrieben werden, wird die Gesamtzahl der Worte von der Logikeinheit 201f gezählt und an das UART 201e weitergeleitet.

Über die Leitung "Timer Control" 310 (in Fig. 4 nicht gezeigt), die mit 201e verbunden ist, wird der Timer 406 gesteuert, um innerhalb des RT 201b die exakte Antwortzeit (Response Time) für Datenworte und/oder Statusworte zu erzeugen. Der Timer wird benutzt, um eine Antwort und ein Statuswort solange im UART festzuhalten, bis die Antwortzeit vom Timer erreicht ist. Befehlswörter werden vom UART direkt und sofort verschickt. Innerhalb der Antwortzeit werden von einem BC die Antworten von den angesprochenen RTs 201b auf die versendeten Pakete erwartet. Es wird zum Einhalten der Antwortzeit innerhalb des RTs 201b eine Vorgabe gemacht, um überprüfen zu können, dass die Antwort auf ein Datenwort 1101 und/oder auf ein Statuswort 1102 auch innerhalb der von dem Ablaufplan erwarteten Zeiten von dem RT 201b an den BC 201c verschickt werden, der das Datenwort oder das Statuswort verschickt hat. Dazu kann die Zeitüberwachungseinrichtung 201d, 201h genutzt werden. Ggf. wird die Antwort innerhalb des RTs 201b verzögert, um den Ablaufplan einzuhalten.

Wird ein UART 201e betrachtet, der in Kombination mit einem BC 201c verwendet wird, also ein UART innerhalb einer als BC verwendeten Schnittstellenvorrichtung 103, 107, dann wird der UART zum Versenden eines Befehlsworts 1100 genutzt. Das Befehlswort 1100 wird sofort versendet. Das Verzögern während der Abarbeitung der Busliste geschieht mit Hilfe von Timer 406. Wenn die Parameter für ein Befehlswort über Send Control bereitgestellt werden, dann konstruiert und verschickt das UART 201e den endgültigen Datenstrom für ein Befehlswort 1100. Der Timer 201d und/oder die Zeitüberwachungseinrichtung 201h dient zum Abstoppen der richtigen Zeit für das Versenden einer Antwort oder eines Status. Die RT FSM 201b startet die "Stoppuhr" 201d, 201h wenn ein Befehl eintrifft. Danach wird die Antwort mit Nutzdaten generiert und solange im UART 201e festgehalten, bis die Stoppuhr den Schwellwert erreicht hat. Gleiches passiert, wenn die RT FSM 201b beim Empfangen einer Nachricht ein Statuswort absetzt. Das Statuswort nach einer Nutzdatennachricht wird auch mittels der Stoppuhr im UART festgehalten. Der Timer 201d, 201h kommt also nur beim Verschicken von einem Befehlswort 1101 und einem Statuswort 1102 zum Einsatz.

Der Ablauf der Verarbeitung von auf der Datenleitung 504 vorhandenen zu übertragenden zeitkritischen Nutzdaten wird innerhalb des Parallel-/Seriell-Wandlers 201a von der Send UART FSM 201e gesteuert. Diese stellt einen Teil der Ressourcenverwaltungseinrichtung 201 dar und ist für die Senderichtung des Parallel-/Seriell-Wandlers 201a verantwortlich. Der Parallel-Seriell-Wandler 201a dient dazu, einen Datenstrom zusammenzusetzen, der schließlich an den Sendepuffer 200a1 des Sende- und Empfangspuffers 200a (nicht gezeigt in Fig. 5) zum Weiterverarbeiten weitergegeben werden kann. Ein Beispiel eines Datenstroms, welcher an der Ausgangsschnittstelle 505 bereitgestellt wird, ist in Form eines Datenpakets 506 angedeutet. Je nach eingenommener Rolle der Schnittstellenvorrichtung kann das Datenpaket 506 ein Befehl 1100, ein Datenwort 1101 oder eine Statusinformation 1102 sein. Die Ausgangsschnittstelle 505 ist ein Teil des Interfaces 207 zwischen dem Parallel-/Seriell-Wandler 201a und dem Empfangs- und Sendepuffer 200a. Neben dem Wandeln eines seriellen Datenstroms in einen parallelen Datenstrom und umgekehrt, erzeugt der Seriell-Parallel-Wandler 201a auch schon einen Teil des Übertragungsrahmens der zu übertragenden Nutzinformation. Dieser unvollständige Teil des Übertragungsrahmens weist Anteile des Befehls/Antwort Protokoll Übertragungsrahmens und Anteile des Übertragungs-Protokoll-Übertragungsrahmen auf, beispielsweise des Ethernet Übertragungsrahmens.

Über den Steuerport 501 erhält die Sende UART FSM 201e ein Signal, das anzeigt, dass an einem der Eingänge 502, 503 oder 504 neue zu übertragende Daten anstehen. Durch dieses Signal wird eine möglicherweise eingehaltene Stopphase beendet und mit der Weiterverarbeitung fortgefahren. Die Stopphase wird zum Einhalten des Ablaufplans genutzt. Folglich kann das Steuersignal 501 die Stopphasen für den Seriell-/Parallelwandler 201a steuern. In Abhängigkeit von den unterschiedlichen Typen von zu übertragenden Daten, also Befehlen (Commands) 1100, Statusinformationen (Status) 1102 und Nutzdaten (Data) 1101 werden die Informationen an den zugehörigen örtlich getrennten Eingängen 502, 503, 504 des Interfaces 208 bereitgestellt. In anderen Worten lässt sich an dem Ort der Bereitstellung der Information schon feststellen, welchem Typ von Daten die zu übertragenden Daten zugeordnet sind. Die Daten werden also örtlich gemultiplext oder ortsabhängig bereitgestellt.

Nutzdaten werden über den Dateneingang 504, Statusinformationen über den Statuseingang 503 und Befehle über den Befehlseingang 502 bereitgestellt. Die Eingangsparameter an dem Befehlseingang 502 bzw. an dem Statuseingang 503 müssen in dem Moment, in dem der Datenstrom 506 erzeugt wird, stabil an der Sende UART FSM 201e anliegen. Der Datenstrom 506 besteht aus den Informationen oder Parametern, die jeweils an 502, 503, 504 anliegen. Diese Parameter müssen an der UART FSM 201e gültig sein oder stabil anliegen, um einen korrekten Datenstrom 506 zu erzeugen. Beispielsweise wird ein Datenstrom für ein Befehlswort 1100 von der FSM 201e erzeugt, wenn das Befehls-Ready Control Signal (nicht gezeigt in Fig. 5) gesetzt wird. In dem Zeitpunkt des Setzens des Signals müssen die Parameter für das Befehlswort an dem Befehlseingang 502 bereits gültig sein.

Die Erzeugung eines Datenstroms aus Befehlen 1100 oder aus Statusinformationen 1102 ist leicht möglich, da konstante und gleichlange Eingangsdaten vorliegen.

Unterschiedlich verhält es sich bei Nutzdaten, die über die Datenleitung 504 bereitgestellt werden. Insbesondere ist die mögliche unterschiedliche Datenlänge der Nutzinformation eine variable Größe, die individuell für jede zu übertragende Nutzinformation zu behandeln ist. Die Länge verhält sich also dynamisch. Die Länge der Nachricht ist während einer Transferoperation stets bekannt und deterministisch. Allerdings muss die UART FSM 201e ausgelegt sein, um diese dynamischen Längen zu verarbeiten. Befehlsworte 1100 und Statusworte 1102 haben immer die gleich Länge und Struktur und können leicht aus den anliegenden Parametern auf den zugehörigen Eingangsleitungen 502, 503 erzeugt werden. Bevor ein Datentransfer von Nutzdaten erfolgen kann, wird das Nutzdaten FIFO (Payload FIFO) 200h, welches ebenfalls der Zwischenspeichereinrichtung 200 zuzuordnen ist, mit der Nutzinformation 507' vorgeladen. Die Nutzinformationen können zeitkritische Nutzdaten von Avionikanwendungen sein, die zu einem bestimmten Zeitpunkt übertragen werden müssen. Das zusätzliche Laden der Nutzdaten 507' in das Payload FIFO 200h oder in dem Nutzdatenpuffer 200h bedeutet dass eine zusätzliche Wartezeit durch einen Zwischenschritt im Vergleich zur Übertragung von deterministischen Befehlen oder deterministischen Statusinformation über die Leitungen 502 oder 503 entsteht.

Das Payload FIFO 200h muss an die Größe der mittels des auf dem Medium 102 benutzten Protokolls maximal zu übertragenden Nutzlast angepasst sein. Im Falle eines Ethernetprotokolls beträgt die minimale Größe für das Payload FIFO 200h 1500 Byte. In einem Beispiel mag keine Segmentierung von Nutzdaten auf eine vorgegebene Länge, z.B. 1500 Byte, nötig sein, da die Nutzdaten kürzer als die vorgegebene Länge sind. In einem anderen Beispiel mag der UART 201e für eine Nachrichtenlänge ausgelegt sein, die der Länge eines Ethernetframes entspricht. Erst nachdem die komplette Nutzlast 507' in das Payload FIFO 200h vollständig geladen ist, kann mit der Übertragung der Nutzdaten (Payload) 507' über den Datenausgang 505 begonnen werden. Hierbei ist zu beachten, dass es zu keiner Kollision der Daten kommt, die von dem Sende UART FSM 201e über den Ausgang 508 des Payload FIFOs 200h dem Datenmultiplexer 510 zur Verfügung gestellt werden, mit den Daten, die über den Ausgang 509 zur Verfügung gestellt werden. Der Datenmultiplexer 510 sorgt dafür, dass zur richtigen Zeit der richtige Datenstrom 506 bereitgestellt wird. Die Auswertung des Steuereingangs 501 sowie das Erstellen eines seriellen Datenstroms 506 aus parallelen Daten 507' wird von der Sende UART FSM 201e bzw. der zentralen FSM 201e gesteuert.

Zur Erzeugung eines Datenstroms 506 aus entweder Befehlen der Leitung 502 oder aus Statusinformationen, die über die Leitung 503 zur Verfügung gestellt werden oder aus Nutzdaten, welche über die Leitung 504 kommen, zuerst ein Header 511 erstellt, der dem Protokoll entspricht, welches für das Übertragungsmedium 102 genutzt wird. Beispielsweise weist der Header bei Verwendung von Ethernet die Ziel MAC Adresse, die Quell MAC Adresse und die Länge des Ethernet-Rahmens auf. Die Längeninformation steckt somit auch im Ethernetframe, beispielsweise im Header 511. In einem Beispiel wird also ein Rahmen nach dem Standard IEEE 802.3 mit einer Längenangabe genutzt. Es wird kein EtherType Identifier verwendet, wie er bei Ethernet Typ II eingesetzt wird. Das verwenden einer einfachen IEEE 802.3 Definition erlaubt es, dass COTS Ethernet Switches genutzt werden können, welche sich die Länge des Frames nicht aus dem Command/Response Layer ableiten können.

Als Ziel-MAC (Media-Access-Control) Adresse wird immer die Broadcastadresse verwendet. Als Quell-MAC Adresse kann irgendeine Adresse verwendet werden, da diese Adresse wegen der Festlegung der Kommunikations-Quelle und Kommunikations-Senke durch den BC nicht verwertet wird. Die Adressen werden nur verwendet um zu Standard Ethernet-Komponenten kompatibel zu sein. Eine Auswertung der Adressen findet nicht statt.

Alternativ zu der Verwendung von Broadcast Ethernet Adressen könnten jedoch in einem anderen Ausführungsbeispiel auch die Befehls/Antwort Adressen auf zugehörige gültige Ethernetadressen abgebildet werden, so dass bereits die Ethernetpakete nur von den gewünschten Zielsystemen empfangen werden.

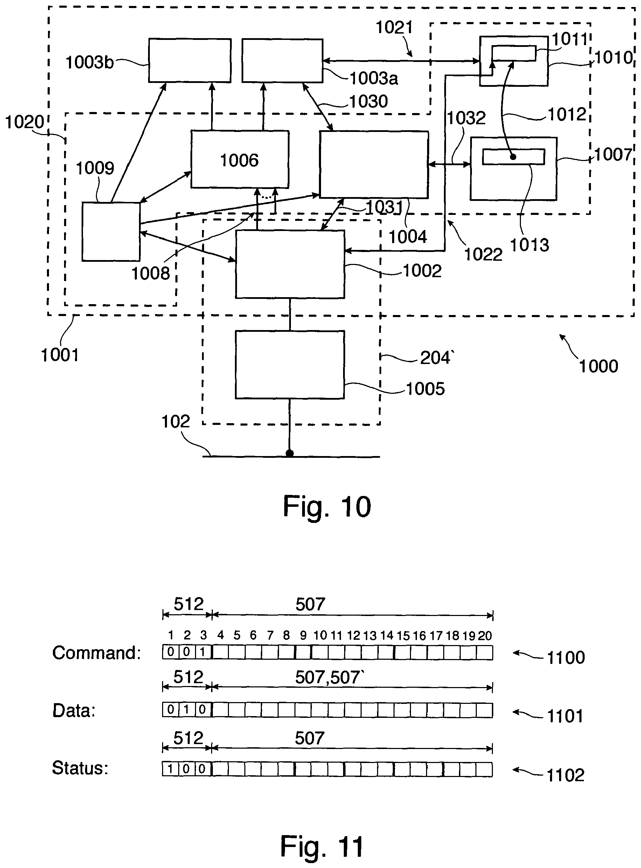

Im Folgenden soll ohne Einschränkung der Allgemeinheit davon ausgegangen werden, dass für das Übertragungsprotokoll das Kollisionserkennungsprotokoll des Ethernets nach dem Standard IEEE 802.3 genutzt wird und für das Befehls/Antwort Protokoll im Wesentlichen der MILBUS Standard MIL-STD-1553B eingesetzt wird. Insbesondere mag eine abgewandelte Rahmenstruktur des MILBUS Standards eingesetzt werden, die in Fig. 11 dargestellt ist. Andere Befehls/Antwort oder Command/Response Protokolle oder Übertragungsprotokolle, beispielsweise Übertragungsprotokolle auf Schicht 2 des OSI-Schichtenmodells, sind denkbar.

Der Header 511 eines Ethernetpakets weist u. a. die MAC Zieladresse auf. Diese wird von der Sende UART FSM 201e mit der allgemeinen Broadcastadresse gefüllt. Da als Adressierung die Adressinformation des Befehls/Antwort Protokolls genutzt wird, ist der Inhalt der MAC Adressen im Wesentlichen unnötig. Die Erreichbarkeit wird auch durch die Broadcastadresse sichergestellt. Die weiter vorgesehene Sende MAC Adresse kann mit einer standardmäßig vorbelegten generellen Information belegt werden, da sie auch nicht ausgewertet wird Während der Entwicklung der Schnittstellenvorrichtung 103, 107, beispielsweise bei der Synthese des FPGA 103, 107, kann die MAC Sendeadresse gesetzt werden. Alternative kann, beispielsweise wenn die Schnittstellenvorrichtung 103, 107 getestet oder vermessen wird, für alle Teilnehmer auf dem geteilten Medium die gleiche Adresse verwendet werden. Durch dieses Vorgehen kann vermieden werden, dass auf die Synthese eines FPGAs gewartet werden muss. In einem anderen Beispiel wird die Sendeadresse nicht verwertet. Wird ein einfacher Ethernet Switch zum Verbinden der Schnittstellenvorrichtungen 103, 107 oder der Terminals 103, 107 verwendet, wertet dieser die Sendeadresse nämlich nicht aus. Es ist jedoch auch denkbar, dass ein komplexerer Switch zum Verbinden der Terminals eingesetzt wird und dass es zu Problemen kommt, wenn der Switch von allen seinen Ports Frames mit der gleichen Sende-MAC-Adresse empfängt. Um Probleme mit einem komplexen Switch zu vermeiden können beispielsweise auch unterschiedliche Sende-MAC Adressen von den Terminals genutzt werden.

Die zu verwendenden Adressen des Headers, die einen Großteil der Headerinformation 511 ausmachen, sind somit in einem Beispiel deterministisch vorbestimmt und können damit schnell in den Header 511 eingetragen werden, ohne Auswerten einer anderen Information. Durch das Nutzen vorbelegter Informationen für die Adressen können Verzögerungszeiten beim Durchlauf von Nutzinformationen durch die Schnittstellenvorrichtung reduziert bzw. ausgenutzt werden können.

Es mag generell eine Idee der vorliegenden Erfindung sein, unnötige Informationen durch Standardinformationen, die in Registern vorbelegt werden, zu füllen, um unnötige Verzögerungen zu vermeiden, die zu Kollisionen bei einem Datendurchlauf durch die Schnittstellenvorrichtung vorkommen können. Da das Befehls/Antwort Protokoll eine individuelle RT Adresse aufweist, mit der das jeweilige Ziel RT angesprochen wird, kann die allgemeine Broadcastadresse verwendet werden, durch die sämtliche an dem Medium 102 angeschlossenen Avionikkomponenten 120a, 120b, 120c, 120d, 120e, 120f reagieren. Diese Avionikkomponenten betrachten nur die RT Adresse des Befehls/Antwort Protokolls, um festzustellen, ob ein ankommendes Paket weiterverarbeitet werden muss.

Das Zusammensetzen eines Datenstroms zur Übertragung eines Kommandos oder einer Statusinformation ist aufgrund der ebenfalls fest vorgegebenen Übertragungslängen leicht zu bewerkstelligen.

Jedoch wird die variable Länge der Nutzinformation 507' mit Hilfe einer Zwischenspeicherung in der Nutzdaten FIFO 200a und mittels der Längenberechnungseinrichtung 201f durchgeführt, die wiederum ein Teil der Ressourcenverwaltungseinrichtung 201 sein kann. Diese berechnete Länge der reinen Nutzlast 507' steht zu einem bestimmten Zeitpunkt vor der Übertragung zur Verfügung.

Die physikalische Schicht wird im Wesentlichen durch das Ethernetprotokoll realisiert und nicht durch das MILBUS Protokoll. Eine Typunterscheidung der Befehls/Antwort Pakete auf physikalische Ebene ist wegen des Einpackens in ein Ethernetpaket nicht wie nach dem ursprünglichen MILBUS Standard durch das Verwenden einer physikalischen Synchronisationsinformation mittels Manchester Codierung und Spannungspegeln möglich. Der Befehls/Antwort Header 512, der von der Sende UART FSM 201e erzeugt wird weist 3 Bits auf, um den Typ des jeweils verwendeten Befehls/Antwort Pakets zu kennzeichnen. Diese Bits stehen erst nach einer Dekodierung zur Verfügung und sind als niederwertigste Bits (Least Significant Bit, LSB) in dem Datenpaket angeordnet. So zeigt die Bitfolge "001" in dem Befehls/Antwort Header 512 an, dass ein Befehl als Nutzdaten in dem Befehls/Antwort Paket enthalten ist. Die Bitfolge "010" zeigt an, dass reine Nutzdaten 507' in dem Nutzdatenfeld 507 vorhanden sind. Die Kombination "100" zeigt an, dass das Nutzdatenfeld 507 Statusinformationen des Eingangsports 503 enthält. Die gegenüber dem MILBUS Standard abgewandelten Datenpakete ergeben sich aus Fig. 11.

Aufgrund der Verwendung und Einpackung des Befehls/Antwort Protokolls in das Ethernetprotokoll müssen keine weiteren Vorkehrungen getroffen werden, um einzelne Datenpakete voneinander auf dem Medium 102 zu unterscheiden, beispielsweise durch besondere Synchronisationsfolgen. Die Längensummierungseinrichtung 201f, Längensummierungs-FSM 201f oder Längenberechnungseinrichtung 201f fügt die feste Länge des 3 Bit langen Befehls/Antwort Headers 512 zu der aus der im Nutzdaten FIFO 200k enthaltenen variablen Länge der Nutzlast 507' hinzu. Die ermittelte Gesamtlänge der Nutzlast 507, 512 wird als Ethernet-Längenfeld in dem Ethernetheader 511 gespeichert. Das Ethernet-Längenfeld des Ethernet-Headers 511 wird aus der Länge der Nutzlast 507' und einem konstanten Wert von 3 Bits für den Command/Response Header 512 ermittelt und zur Längenangabe verwendet. Ein vollständiger Rahmen weist also zwei Längenangeben auf. Eine Längenangabe bezieht sich auf den kompletten Ethernet Frame und ist im Ethernetheader 511 enthalten. Die andere Längenangabe ist in dem Befehls/Antwort Header 511 enthalten und bezieht sich nur auf das Befehls/Antwort Protokoll. Variable Längen des Gesamtframes 603 ergeben sich nur durch variable Längen der Nutzdaten, da sämtliche anderen Felder eine konstante Länge aufweisen. Die beiden Längenangaben in den Ethernetheader 511 und in dem Befehls/Antwort Header 512 haben eine fixe Differenz zu der Nutzdatenlänge. Die Längenberechnungseinrichtung 201f zählt die Länge der Nutzdaten und addiert zu der Länge der Nutzdaten die Differenzen für das Längenfeld des Ethernetheader 511 und das Längenfeld des Befehls/Antwort Header 512 und gibt beide Werte an das UART 201e weiter. In anderen Worten bedeutet das, dass in einem Datenwort 1101 zwei verschiedene Werte für Längen existieren. Es gibt einerseits einen Wert einer Länge des Datenwortes 1101, welcher innerhalb eines Datenwortes 1101 berechnet wird und andererseits gibt es einen Wert für die Länge des Ethernetframes, welcher im Längenfeld für Ethernet gespeichert ist. Der Wert für das Längenfeld des Ethernetpakets ist größer als der Wert der Länge das Datenwortes.

Die Ethernet-Nutzlast 507, 512 kann folglich eine Kombination der 3 Typ-Bits 512 und der reinen Nutzlast 507', 507, der 3 Typ-Bits 512 und eines Befehls 507 und der 3 Typ-Bits 512 und einer Statusinformation 507 sein.

Somit berechnet die Sende UART FSM 201e die 3 Bits des Typ Feldes für den Header 512 des Befehls/Antwort Protokolls und stellt ihn der reinen Nutzlast 507', 507, dem Befehl 507 oder der Statusinformation 507 voran, um die Ethernet-Nutzdaten 507, 512 oder die Übertragungsmedien-Nutzdaten 507, 512 zu erhalten. Das zusammengestellte Datenpaket 506, das allerdings noch nicht die nötige Form hat, um auf dem Übertragungsmedium übertragen zu werden, wird über die Ausgangsleitung 505 an den Sendepuffer 200a1 des Sende- und Empfangspuffers 200a weitergereicht. Während der Ausgabe des Pakets 506 über die Ausgangsleitung 505 überprüft die Sende UART FSM 201, ob die Ethernet-Nutzdaten 507, 512 die von dem Ethernet-Standard geforderte minimale Länge von 46 Byte aufweisen. Ist dies nicht der Fall, fügt die Sende UART FSM 201e während des Versendens, also ohne nochmaliger Zwischenspeicherung, die zusätzlich benötigte Anzahl an Paddinginformationen zu, um eine gültige Nutzlast 507, 512 mit der geforderten Mindestlänge für einen Ethernetrahmen zu erhalten Die Send UART FSM 201e entscheidet, ob die Gesamtlänge eines Datenwortes 506 die Minimallänge eines Ethernetframes 603 unterschreitet. Wenn diese Unterschreitung festgestellt wird, dann fügt die Send UART FSM 201e im Längenfeld für den Ethernetframe 603, insbesondere in dem Längenfeld des Ethernetheader 511, den festen Wert für die Minimallänge ein. Bei Command Paketen 1100 und Status Paketen 1102 wird immer Padding durchgeführt.

Bei dem Datenstrom 506, der aus dem Ausgang 505 herausgegeben wird, ist zu beachten, dass er zwar einen Ethernet Header 511 und einen Header 512 des Befehls/Antwort Protokolls sowie die Nutzdaten 507 aufweist, jedoch beim Verlassen des Parallel-Seriell-Wandlers 201a noch keine Endinformation des Ethernetrahmens aufweist. Folglich fehlt das Paketende des Protokolls des Übertragungsmediums 102. Das Befehls/Antwort Protokoll besitzt kein besonderes Ende wie beispielsweise eine CRC Prüfsumme.

Da das Befehls/Antwort Protokoll definierte minimale und auch maximale Antwortzeiten verlangt, wird der Sendeprozess in dem Parallel-Seriell-Wandler 201a mittels einer Auswahl von Timern aus der Vielzahl von Timern 201d, 201h überwacht. Dies gilt insbesondere für hereinkommende Anfragen. Ein Timer teilt der Sende UART FSM 201e mit, wann sie über die Steuer-Ausgangsleitung 520 und die Steuereingangsleitung 605 den Sendepuffer 200a1 triggern kann, um den Datenstrom 511 zu empfangen (Sendepuffer 200a1 ist in Fig. 5 nicht gezeigt). Bei jedem eintreffenden Befehlswort 1100 in einer Schnittstellenvorrichtung, die als RT konfiguriert ist, wird von der RT FSM 201b ein Timer gestartet. Wenn ein Terminal 103, 107 oder eine Schnittstellenvorrichtung 103, 107 erkennt, dass die Kombination aus Sendeadresse und Empfangsadresse eines ankommenden Befehlswort 1100 oder einer anderen Nachricht von dem Terminal nicht bedient wird, wird die jeweilige Nachricht als nicht relevant für das Terminal erkannt. Wenn sich innerhalb der zu dem Terminal gehörenden RT FSM 201b herausstellt, dass das empfangene Befehlswort 1100 für die jeweilige RT FSM 201b nicht relevant ist, dann stoppt die RT FSM 201b diesen Timer wieder.

Sollte das Befehlswort 1100 oder eine andere Nachricht relevant für das das Terminal sein, dann Läuft der Timer weiter bis zum dem maximal vorgegebenen Schwellwert, welcher die Responsetime repräsentiert. In der Zwischenzeit stellt die RT FSM 201b das Datenwort bereit, um es an das UART 201e weiterzugeben. Die RT FSM 201b liefert die Rohdaten und diese werden vom UART 201e in das richtige Format gebracht. Bei Erreichen des Schwellwertes, löst der abgelaufene Timer 201d, 201h die Übertragung der Daten aus, die in dem Seriell-Parallel-Wandler 201a bereit gestellt wurden. Das entsprechende Verhalten gilt für ein Statuswort 1102 nachdem ein Datenwort 1101 empfangen wurde. Die gesamte Logik 201 ist derart eingerichtet, eine Nachricht innerhalb der vorgegebenen Responsetime zur Verfügung zu stellen, um die Daten, die übertragen werden sollen, bis zum Ablauf des Timers gültig vorliegen zu haben. Die Responsetime wird durch den Ablaufplan vorgegeben und die Sicherstellung des Einhaltens der Responsezeit trägt zu dem Determinismus der Schnittellenvorrichtung bei. In anderen Worten wird durch die Garantie die Daten innerhalb der Response Zeit zur Verfügung zu stellen die "Echtzeit" abgebildet. Es wird beim Design der Schnittstellenvorrichtung davon ausgegangen, dass die Responsezeit eingehalten wird, indem das Design vorsieht, unvorhersehbare Ereignisse abzublocken und zu vermeiden. Sollte dennoch eine Responsezeit nicht eingehalten werden, dann würde die Schnittstelleneinrichtung 103,107 ein Datenwort 1101 oder ein Statuswort 1102 erst dann verschicken, wenn es zur Verfügung steht, d.h. also so schnell wie möglich. Dieses Abweichen von dem Ablaufplan könnte jedoch als Fehlverhalten ausgelegt werden und das Umschalten auf redundante Komponenten auslösen.

Fig. 6 zeigt ein detailliertes Blockdiagramm eines Sendepuffers 200a1 gemäß einem exemplarischen Ausführungsbeispiel der vorliegenden Erfindung. Der Datenstrom 506 aus dem Seriell-Parallel-Wandler 201a (nicht gezeigt in Fig. 6) erreicht über die Leitung 505 den Sendepuffer 200a1. Bevor nun die Schnittstellenvorrichtung 103, 107 den Datenstrom 506 über die Ausgangsleitung 620 des medienunabhängigen Interfaces 202 der zweiten Schnittstelle 105, 110 ausgeben kann, um sie an das Übertragungsmedium 102 weiterzugeben, wird der Datenstrom 506 in dem Sendepuffer 200a1 zwischengespeichert. Der Sendepuffer stellt in der Übertragungsrichtung von zu übertragenden Nutzdaten 507' im Wesentlichen die letzte Logikeinheit des FPGAs dar, bevor der Datenstrom 506 oder das Datenwort 603 in einem Datenstrom 603 an das medienunabhängige Interface (Media Independent Interface, MII) 202 übergeben wird. Der empfangene Datenstrom 506 enthält bereits sämtliche MAC Adressierung in dem MAC Header 511, das Ethernet-Längenfeld, den Befehls/Antwort Header 512 des Befehls/Antwort Protokolls und die zu übertragende Nutzdaten 507. Unabhängig von Befehls-, Daten- oder Statuswort enthält der Datenstrom 506 bereits alle Informationen für das Befehls/Antwort Protokoll. Innerhalb des Sendepuffers 200a1 erwirkt die Sendepuffersteuer-FSM 201k, welche ebenfalls der Ressourcenverwaltungseinrichtung 201 zugeordnet ist, dass die noch fehlende Information 600, 601, 602 für ein vollständiges übertragbares Ethernetpaket hinzugefügt wird. Um ein vollständiges Ethernetpaket zu erstellen, muss noch eine Ethernet-Präambel 600 und ein SFD (Start of Frame Delimiter) 601 dem Paket 506 vorangestellt werden. Außerdem muss noch eine Prüfsumme 602 an das Ende gehängt werden, um das Ethernetpaket 603 korrekt abzuschließen. Bei dem Befehls/Antwort Protokoll ist keine Prüfsumme vorgesehen.

Da es sich bei der Präambel 600 und dem SFD 601 um einen fest vorgegeben binären Werte handelt, mit immer der gleichen Bitfolge, unabhängig vom Inhalt des Pakets 506, kann die Präambel 600 und der SFD 601 in dem Sendepuffer 200a1 bereits vorbelegt oder vorgeladen werden. Dieses Vorladen kann auch zum Erreichen des Echtzeitverhaltens beitragen. Das Vorbelegen kann erfolgen bevor der ankommende Datenstrom 506 bestehend aus MAC Header 511, Typkennzeichner 512 des Befehls/Antwort Protokolls und Nutzlast 507 an die vorgeladene Präambel 600, 601 angefügt wird. Während des Vorladens des Datenpuffers mit der Präambel 600 und dem SFD (Start of Frame Delimiter) 601 wird eine CRC Berechnungseinrichtung 201g initialisiert und berechnet die für das Ethernetpaket notwendige Prüfsumme 602 zum Abschließen des zu übertragenden Pakets 603. Die Länge der Präambel, des SFD und der CRC Prüfsumme werden nicht zu der Ethernet Nutzlastlänge hinzugerechnet.

Der Sendepuffer 200a1 ist als FIFO realisiert, der zwei Ports 604 und 620 aufweist. Nachdem das fertige Datenpaket 603 komplett in dem Datenpuffer 200a1 vorliegt, kann das Datenpaket 603 über den Ausgang 620 über die MII Schnittstelle an den Netzwerkcontroller 204 (nicht gezeigt in Fig. 6) zur Datenübertragung weitergegeben werden. Die Weitergabe wird durch ein Signal auf der Steuerleitung 605 ausgelöst, die mit dem Steuerausgang 520 des UART 201e verbunden ist. Der Steuerausgang 520 und die Steuerleitung 605 sind als ein Leitungsbündel mit einer Vielzahl von einzelnen Leitungen ausgebildet. Der Inhalt des Sendepuffer 200a1 wird dann über die Ausgangsleitung 620 auf den Bus102 (nicht gezeigt in Fig. 6) gegeben. Zuvor wird überprüft, ob der Inhalt, also das Datenpaket 603, komplett ist und ob das UART 201e über eine Signalleitung der Vielzahl an Leitungen des Steuerausgang 520 die Nachricht nach Ablauf der Response Zeit freigibt. Zur Überprüfung des Ablaufs der Response Zeit wird der zugehörige Timer genutzt.

Während die Daten über die Eingangsleitung 505 und Datenleitung 604 in einem 8 Bit-Format vorliegen, weisen die Daten auf der Ausgangsleitung 620 lediglich ein 4 Bit Format auf. In anderen Worten ist die Ausgangsleitung 620 aus 4 parallel verlaufenden Leitungen zusammengesetzt. Diese 4 Bit Verarbeitung ist von der physikalischen Schicht des Ethernet Protokolls vorgegeben welches auf der anderen Seite des MII sitzt. Die CRC Prüfsumme 602 wird für den gesamten Datenrahmen 603 ohne die Länge des SFD 601 berechnet. Folglich wird die CRC Prüfsumme 602 nur für die MAC Adresse in dem Ethernet Header 511, den Typindikator 512 und die Nutzlast 507 berechnet. Die CRC Berechnungseinrichtung 201g berechnet die CRC Prüfsumme 602 rekursiv.Die Prüfsumme wird nach der Ethernet IEEE802.3 Spezifikation berechnet, um das Datenpaket 603 an eine Standard Ethernet Übertragungsinfrastruktur anzupassen. Bei dieser Berechnung werden einige Werte für die Berechnung der Prüfsumme invertiert. Die CRC Prüfsumme 602 ist die einzige Fehlerüberprüfung, die während der gesamten Übertragung stattfindet. Hierdurch kann auch Rechenzeit eingespart werden.

Im Folgenden wird der Empfang von Nutzdaten 507, 507' beschrieben.

Der Empfang eines Nachrichtenpakets 1100 vom gemeinsamen Medium 102 verläuft entsprechend dem in den Figuren Fig. 5 und 6 beschriebenen Senden des Nachrichtenpakets 603 in umgekehrter Reihenfolge.

In einem einfachen Fall werden die MAC Adressen des Ethernet Headers 511 nicht ausgewertet, da sie lediglich mit den Broadcastadressen belegt sind, um die Weiterverarbeitung in einem externen Switch zu gewährleisten, der womöglich in dem Medium 102 eingesetzt wird. Eine Auswertung der Adressen findet innerhalb der Schnittstellenvorrichtung 103, 107 nicht statt und die Schnittstellenvorrichtung 103, 107 reagiert auf alle ankommenden Nachrichten, ohne die Adressen anzusehen. In einem anderen Fall, bei dem die MAC Adressen des Ethernet Headers 511 mit echten Adressen belegt sind, werden diese Adressen ausgewertet, so dass jeweils nur die adressierte Schnittstellenvorrichtung 103, 107 reagiert.

Ein Datenstrom wird folglich entweder immer an die Schnittstellenvorrichtung weitergeleitet oder deshalb, weil eine Übereinstimmung der Adressen festgestellt wurde. Wenn ein Datenstrom über den Ethernetbus 102 ankommt und an die Schnittstellenvorrichtung 103, 107 weitergereicht wird, erreicht er zunächst den Übertragungsregister 203. Das Vorhandensein eines Datenpakets wird an den Sende- und Empfangspuffer 200a signalisiert und ein empfangenes Datenpaket wird in den Empfangspuffer 200a2 eingeschrieben. Der Empfangspuffer 200a2 ist mit der medienunabhängigen Schnittstelle 202 verbunden. Der Empfangspuffer 200a2 ist die erste Einheit der Schnittstellenvorrichtung 103, 107, die mit der empfangenen Nachricht in Kontakt kommt. Die empfangene Nachricht enthält entsprechend dem Datenpaket 603 eine Präambel 600 des Ethernetprotokolls und eine SFD des Ethernetprotokolls, welche der Empfangspuffer 200a2 entfernt, bevor der Rest der Nachricht, d.h. die MAC Adressen, die CRC Prüfsumme, das Typfeld 512 des Befehls/Antwort Protokolls und die Nutzdaten in den Empfangspuffer 200a2 geschrieben werden. Die Ethernet-Präambel 600 wird im Wesentlichen während des Empfangs entfernt und das erste Wort, das in den Empfangspuffer 200a2 gelangt, ist die MAC Zieladresse aus dem Ethernetheader 511.

Der Empfangspuffer 200a2 ist als Puffer FIFO mittels eines BRAMs oder Block-RAMs realisiert. Der Empfangspuffer 200a2 weist eine Größe auf, die geeignet ist, das gesamte Ethernetpaket ohne Ethernet-Präambel 600 und ohne SFD zu speichern und dabei die maximal mögliche Gesamtlänge des Ethernetpakets zu berücksichtigen. Die Größe des Empfangspuffer 200a2 beträgt in einem Beispiel 2 kByte und unterscheidet sich damit nicht von der Größe des Sendpuffers 200a1. Beide Speicher 200a1, 200a2 sind für Ethernetpakete überdimensioniert. Auf einem FPGA ist meist der BRAM Speicher reichlich vorhanden. Der Empfangspuffer 200a2 arbeitet wie der Sendepuffer 200a1 asynchron. Ein asynchrones Verhalten kann durch ein BRAM abgebildet werden. Auf einem FPGA ist BRAM im Wesentlichen der einzige Massenspeicher, der effektiv genutzt werden kann. Daher werden auch für die Realisierung der asynchron betriebenen Speicher 200a1, 200a2 für die Taktanpassung die BRAMs des FPGA genutzt.

Der Empfangspuffer 200a2 wird, ähnlich wie der Sendepuffer 200a1 von dem Sendetakt 700a betrieben wird, von dem Empfangstakt 700b angetrieben, der von der zweiten Schnittstelle 105, 110 abgeleitet wird. Der Sendetakt 700a und der Empfangstakt 700b können als zweiter Takt 700a, 700b bezeichnet werden. Das bedeutet, dass die Daten, die von dem Bus 102 kommen, mit dem Bustakt 700a in den Empfangspuffer 200a2 geschrieben werden. Das Auslesen des Puffers 200a2 erfolgt jedoch mit dem Systemtakt 701 der Schnittstellenvorrichtung 103, 107, der dem Takt der Hosteinrichtung 106, 108 entsprechen mag und eine höhere Frequenz als der Bustakt 700a aufweisen mag.

Der Empfangspuffer 200a2 wird mit dem Systemtakt 701 ausgelesen. Da Eingang und Ausgang des Speichers 200a2 mit unterschiedlichen Taktraten betrieben werden, wird die Form des Betriebs des Datenpuffers als asynchroner Betrieb bezeichnet. Auch werden Daten in den Empfangspuffer 200a2 mit einer Breite von 4 Bit geschrieben, während die Daten aus dem Empfangspuffer in Richtung Seriell-Parallel-Wandler 201a mit 8 Bit ausgelesen werden. Die Daten werden von dem Medium 102, d.h. auf der Medienseite des MII 220, seriell empfangen und in vier Bit breite parallele Daten gewandelt und an die MII oder GMII Schnittstelle 202 weitergegeben. Die MII oder GMII Schnittstelle 202 puffert allerdings die vier Bit breiten Daten nicht und daher gehen 4 Bit Worte automatisch verloren, die nicht vom Empfangspuffer 200a2 aufgenommen werden.

Der Systemtakt bzw. der erste Takt 701 der ersten Schnittstelle 104, 109 ist der Takt, mit dem auch die Steuerlogik 201 oder die Ressourcenverwaltungseinrichtung 201 betrieben wird. Auch der Empfangspuffer 200a2 wird von einer FSM betrieben, die speziell für den Betrieb des Empfangspuffers 200a2 eingerichtet ist. Die FSM des Empfangspuffers ist auch ein Teil der Ressourcenverwaltungseinrichtung 201. Diese Steuer FSM des Empfangspuffers empfängt eine Mitteilung von der MII Schnittstelle 202, ein sog. Write Enable Flag, womit die MII Schnittstelle 202 dem Empfangspuffer 200a2 bzw. der FSM, die den Empfangspuffer verwaltet, mitteilt, dass eine Nachricht aus dem Übertragungsregister 203 abgeholt werden kann. Es wird nicht nur die Präambel, sondern auch das SFD abgewartet, bevor das bereitgestellte oder empfangene Datenpaket bzw. das empfangene Datenpaket, von dem die Präambel 600 und der SFD 601 entfernt wurde, in den Empfangspuffer 200a2 geschrieben wird. In anderen Worten werden die Präambel 600 und der SFD 601 vor dem Empfang abgeschnitten.

Das in dem Empfangspuffer 200a2 abgelegte Datenpaket weist somit nur noch die MAC Adressierung, die Ethernetlänge des Pakets, die CRC Prüfsumme und die Nutzdaten auf. Sobald die FSM, die für die Steuerung des Empfangspuffers 200a2 zuständig ist, den Empfang des SFD innerhalb des gerade geschriebenen Datenstroms erkennt, aktiviert sie einen Timer aus der Vielzahl der Timer 201d, 201h. Ferner wird von dem empfangenen Datenpaket der CRC Wert berechnet und mit dem mitgeschickten CRC Wert des Datenpakets verglichen. Der CRC Wert des Datenpakets ist an die Ethernetnutzlast angehängt. Werden Fehler bei der Prüfsummenüberprüfung erkannt, so wird dies mit externen Triggern an Stellen außerhalb des FPGAs 103, 107, beispielsweise an einem Hostcontroller oder an einer Hosteinrichtung 106, 108, signalisiert. Es wird im Fehlerfall das gesamte Paket verworfen und die bereits in Gang gesetzten Trigger werden gestoppt. Es werden jedoch keine Pakete wiederholt. In einem Fehlerfall wird ein Fehlerbit im Statuswort 1102 des Empfängers gesetzt, mit dem dem BC die Fehlersituation mitgeteilt wird Die Prüfsumme einer eingehenden Nachricht wird gleichfalls wie die Prüfsumme einer ausgehenden Nachricht mit einer CRC Einrichtung berechnet, welche in Fig. 6 nicht dargestellt ist. Die CRC Einrichtung 201g für den Sendepuffer und die CRC Einrichtung für den Empfangspuffer benutzen den gleichen Code. Für die Empfangsrichtung und die Sendeeinrichtung sind jedoch eigene exklusive Instanzen vorgesehen, um Blockierungen und Doppelbelegungen zu vermeiden.

Sobald die MII Schnittstelle 202 beispielsweise über einen Low-Pegel eines Write Enable Signals signalisiert, dass das gesamte Paket in den Empfangspuffer 200a2 geschrieben wurde, sorgt die FSM, die für die Verwaltung des Empfangspuffers 200a2 vorgesehen ist, dafür, dass der Empfangspuffer 200a2 von der nächsten Stufe oder von dem nächsten Submodul ausgelesen wird. Durch das Auslesen wird der Empfangspuffer 200a2 gelehrt, um so Platz für weitere Empfangspakete im Empfangspuffer 200a2 zu schaffen. Die CRC Prüfsumme wird noch ausgelesen aber von dem Empfangs-UART, das parallel zu dem Sende-UART 201e arbeitet, nicht weiter verwendet. Die Verzögerung, die durch das Auslesen entsteht, ist wegen der weitaus höheren Taktfrequenz des ersten Takts 701 gegenüber der Taktfrequenz des zweiten Takts 700a, 700b vernachlässigbar klein. Um den Timer für die Antwortzeit zu starten, muss eine Logik erst ein Befehlswort 1100 als solches erkennen. Bevor das Identifikations Byte, d.h. der 3 bit breite Typidentifier 512, ausgelesen werden kann vergeht eine zeitliche Differenz, welche vom Schwellwert des Response Timers berücksichtig ist. Es muss jedoch nicht immer die komplette Präambel 512 oder der komplette Header 512 für das Befehls/Antwort Verfahren weitergegeben werden. D.h. dass die fixe Differenz im Timer nicht immer korrekt ist. Daher kann es sein, dass der Response Timer die Antwort bis zu 20ns zu spät emittiert. Das ist bei einer Response Zeit von 4-12 µs tolerabel, die in Avionikanwendungen vorgegeben ist.

Die Response Zeit 4-12µs oder ein Timeout von 14µs mag dem Zeitverhalten in einem MILBUS gerecht werden, bei EFEX könnte die Responsezeit aus dem Bereich von 6-9 µs gewählt werden. Es können aber auch deutlich kürzere Responsezeiten eingehalten werden.

Fig. 7 zeigt ein vergrößertes Blockschaltbild des Sende-/Empfangspuffers 200a gemäß einem exemplarischen Ausführungsbeispiel der vorliegenden Erfindung. Der Empfangsport 205b des Empfangspuffers 200a2 ist mit einem Empfangs-Konvertierungsport 203b des Übertragungsregister 203 und der Sendeport 205a des Sendepuffers 200a1 ist mit dem Sende-Konvertierungsport 203a des Übertragungsregisters 203 verbunden. Der Sende-Konvertierungsport 203a und Empfangs-Konvertierungsport 203b sind für die 4bit/8bit Konvertierung zwischen dem Medium und der Schnittstellenvorrichtung zuständig. Außerdem schneidet der Empfangs-Konvertierungsport 203b die Präambel 600 und den SFD 601 bei einkommenden Nachrichten ab. Der Sende-Konvertierungsport 203a und der Empfangs-Konvertierungsport 203b sind Teil der medienunabhängigen Schnittstelle 202 a. Die FIFOs 200a1, 200a2 sind Dual Port Speicher.

Die Senderate der medienunabhängigen Schnittstelle 202 beträgt ebenso wie die Empfangsrate einen Wert von 100 Mbit/s und erlaubt es der Schnittstellenvorrichtung 103, 107, den Sendetakt 700a oder den Empfangstakt 700b von der medienunabhängigen Schnittstelle 202 abzuleiten. Als medienunabhängige Schnittstelle 202 ist meist eine GMII 202 vorhanden. Allerdings wird diese Schnittstelle 202 im Wesentlichen nur mit 100 Mbit/s betrieben. Soll die medienunabhängige Schnittstelle 202 als wirkliche GMII Schnittstelle mit einer höheren Taktrate betrieben werden, muss der zweite Takt 700a, 700b von der Schnittstellenvorrichtung 103, 107 speziell erzeugt werden und kann nicht von der physikalischen Schicht des Ethernet, insbesondere kann er nicht von dem Netzwerkcontroller 204 abgeleitet werden. Für den Betrieb an einer wirklichen GMII Schnittstelle 202 weist daher die Schnittstellenvorrichtung 103, 107 eine Takterzeugungseinrichtung auf.

Das Übertragungsregister 203, 203a, 203b kann beispielsweise auch auf dem Netzwerkcontroller 204 implementiert sein. Der Netzwerkcontroller kann als IC (Integrierten Schaltkreis) realisiert sein und die physikalische Schicht des Übertragungsbus 102 treiben. Dieser IC und insbesondere die medienunabhängige Schnittstelle 202 samt Übertragungsregister 203, 203a, 203b arbeiten mit 4 Bit Befehlen. Der Sendeport 203b und der Empfangsport 203a der medienunabhängigen Schnittstelle 202 befinden sich in einer gemeinsamen Taktdomain 700a, 700b ebenso wie sich der Sendeport 206b des Empfangspuffers 200a2 und der Empfangsport 206a des Sendepuffers 200a1 auf einer gemeinsamen Taktdomain 701 befinden. Die unterschiedlichen Taktdomains sind in Fig. 7 als die Netzwerkcontroller Taktdomain 700a, 700b und die Systemtaktdomain 701 dargestellt. Die beiden Taktdomains 700a, 700b einerseits und 701 andererseits werden durch den Sendepuffer 200a1 bzw. durch den Empfangspuffer 200a2 voneinander getrennt.

An die Sende- und Empfangspuffer 200a1, 200a2 und die Ports 203a, 203b des medienunabhängigen Interfaces 202 werden harte Echtzeitbedingungen (hard Real-Time) gestellt, um zu vermeiden, dass Daten verloren gehen. In anderen Worten kann die physikalische Schicht des Ethernet die empfangenen Datenworte zwar über die (G)MII Schnittstelle 202 weitergeben, jedoch findet bei der Weitergabe keine Kontrolle statt, ob das System 103, 107 auf der anderen Seite des GMII 202 bereit ist, die Daten anzunehmen. Sollte keine ausreichende Kapazität für die Daten vorhanden sein, gehen die Daten verloren. Es muss daher gewährleistet werden, dass die FPGA Logik 201 alle Datenworte in Empfang nehmen kann, die ihr von dem GMII 202 angeboten werden. Wenn ein einzieges der 4 Bit Worte eines Empfangsstroms verloren geht, ist wegen der ungültigen CRC, die über mehrere der 4 Bit Worte berechnet ist, der ganze Empfangsrahmen zerstört. Dies gilt auch für Padding Bytes ohne Entropie. Sollte ein 4 Bit Wort eines Datenpakets verloren gehen, so müsste die gesamte Nachricht aufgrund des falschen CRC Wertes verworfen werden.

Zur Sicherstellung des Echtzeitverhaltens sollte daher ein Überlauf des Empfangspuffers 200a2 oder des Empfangs FIFOs 200a2 vermieden werden. Um einen Überlauf zu vermeiden, wird die Größe dieses Puffers 200a2 zumindest so groß gewählt, dass in Empfangsrichtung einem gesamten Ethernetpaket, ohne Präambel und ohne SFD, Platz geboten werden kann.

Da beim Senden die Präambel 600 und SFD 601 bereits im FIFO vorhanden ist, könnte der Sendepuffer 200a1 entsprechend kleiner gewählt werden. Jedoch kann in einem Beispiel der Sendepuffer 200a1 gleich groß wie der Empfangspuffer 200a2 gewählt werden. In einem anderen Beispiel können der Sendepuffer 200a1 und der Empfangspuffer 200a2 so angelegt sein, dass mehr als der minimal geforderte Speicherplatz zur Verfügung steht. Der Sendepuffer 200a1 und der Empfangspuffer 200a2 werden als Block-RAM realisiert, um ausreichend Platz zu bieten.

Da auf einem FPGA eine Vielzahl von Block-RAMs (BRAM) vorhanden sind, welche für einen asynchronen Betrieb konfiguriert werden können, werden für die meisten Speicher der Zwischenspeichereinrichtung 200 Dual Port asynchrone Block-RAMs verwendet.

Ein gültiges empfangenes Ethernetpaket wird in dem Empfangspuffer 200a2 von der zugehörigen FSM erkannt und über den Port 206, 206a, 206b des Seriell-Parallel-Wandler 201a weitergeleitet, der an dem Sende- und Empfangspuffer 200a angeschlossenen ist. Die Steuerdaten, z.B. Daten für die Adressierung eines Befehlswortes 1100 oder Daten, die die Länge eines Datenwortes angeben, werden zur Identifizierung parallelisiert. Wenn nötig, werden danach Nutzdaten Byte für Byte weiterverarbeite. Es wird jedoch nicht die gesamte Ethernetnachricht parallelisiert.

Auch der Seriell-/Parallel-Wandler 201a bzw. Sende- und Empfangswandler 201a ist in einen Sendeteil und einen Empfangsteil aufgespalten. Der Empfangsteil des Seriell-Parallel-Wandlers 201a filtert die von dem Sende-/Empfangspuffer bereitgestellten Datenpakete. Bei dem Filtervorgang wird der Identifier eines empfangenen Pakets untersucht, der mit dem Identifier 512 eines zu sendenden Pakets vergleichbar ist, und es wird erkannt, ob der Inhalt des empfangenen Pakets auch tatsächlich ein Befehls/Antwort Paket ist. Sollte es sich bei dem Paketinhalt um kein gültiges Befehls/Antwort Paket handeln, werden diese ungültigen Pakete aus Performancegründen verworfen. Es kann beispielsweise zu ungültigen Paketen kommen, weil sich auf einem Bus auch andere Ethernetpakete verbreiten können, welche dann auch innerhalb des FPGAs 103, 107 weitergereicht werden. Ungültige Pakete können entstehen, wenn die Schnittstellenvorrichtung 103, 107 an einem Medium betrieben wird, an dem auch andere Geräte wie Netzknoten oder Switche betrieben werden. Diese tauschen oft Data Link Layer Nachrichten aus, d.h. Nachrichten auf Schicht 2.

Die Nachrichten, die als zu einem Befehls/Antwort Protokoll zugehörig erkannt wurden, werden anhand des Typidentifiers 512 in die entsprechende Kategorie als Befehl 1100, Statusinformation 1102 oder Daten 1101 aufgeteilt. Befehle und Statusnachrichten werden in dem empfangsseitigen Seriell-Parallel-Wandler parallelisiert. Diese Steuerdaten werden Byte für Byte in ein paralleles Register geschrieben. Wenn alle Bytes eines Befehlswortes empfangen worden sind, wird der komplette Befehlsrahmen 1100 ausgewertet und der Inhalt wird an höher gelegene Logikeinheiten weitergeleitet, die außerhalb des Seriell-/Parallelwandlers 201a liegen. In diesem Zusammenhang mag eine höhere Logikeinheit bedeuten, eine Logikeinheit oder FSM, welche sich in Empfangsrichtung hinter dem Seriell-Parallel-Wandler befindet, also beispielsweise eine BC FSM 201c oder RT FSM 201b. Zum Weiterleiten eines empfangen Pakets an ein RT und zum Bereitstellen der Nutzinformation an eine Hosteinrichtung 106, 108 ist der Empfangsteil des Seriell-/Parallelwandlers 201a beispielsweise über die in Fig. 3 dargestellte Schnittstelle 208a, 208 mit der RT FSM 201b verbunden. Auf den Empfang von Nutzinformation wurde teilweise bereits bei der Beschreibung der Fig. 3 eingegangen.

Der Empfang einer Nachricht eines bestimmten Nachrichtentyps wird an höher gelegene Schichten durch zugeordnete Flags weitergeleitet. Solche Flags können beispielsweise über den Steuerport 305 an ein RT 201b signalisiert werden. Abhängig vom erkannten Typ der Nachricht 1100, 1101, 1102 werden verschiedene Leitungen zum Übermitteln verwendet. So empfängt die RT FSM 201b Nutzdaten über die Leitung 304r und Befehle über den Befehlseingang 303. Der Befehlseingang 303 und die Datenleitung 304r sind örtlich getrennt.

Das Vorhandensein einer Nachricht im Seriell-/Parallel-Wandler 200a kann nach dem Empfang der vollständigen Nachricht erfolgen. Der Seriell/Parallel-Wandler 200a liest die CRC Prüfsumme aus, nutzt sie aber nicht mehr. Der Seriell/Parallel-Wandler 200a liest die CRC Prüfsumme im Wesentlichen nur aus, um das FIFO 200a2 zu leeren. Im Falle von Befehlen oder Statusnachrichten des Befehls/Antwort Protokolls kann das Vorhandensein eines Pakets bereits vor dem Ende des kompletten Ethernetrahmens gemeldet werden. Bei sehr kurzen Nachrichten ist das auch möglich. Das Datenfeld eines Ethernetrahmens enthält, wie zu Fig. 6 beschrieben, als Nutzdaten das Typfeld 512 und das zu übertragende Paket 507, also entweder einen Befehl 1100, Statusinformation 1102 oder die reinen Nutzdaten 1101. Ein Befehl 1100 und Statusinformationen 1102 haben eine feste Länge von 20 Bit, einschließlich dem Typfeld 512. Ein Ethernet Datenfeld hat jedoch mindestens eine Länge von 46 Byte, so dass im Falle von einem Befehl 1100, einer Statusinformation 1102 oder von sehr kurzen Nutzdaten 1101, 507' ein großer Teil der Ethernetdaten mit Padding Informationen belegt sind, also nicht weiter benutzte Informationen enthalten. Kurze Nutzdaten sind beispielsweise Nutzdaten, die kürzer als etwa 46 byte sind. Es muss folglich beim Empfang von kurzen Nutzdaten, insbesondere beim Empfang von Statusinformationen 1102 oder Befehlen 1100 nicht gewartet werden, bis die gesamten Ethernetdaten angekommen sind. Vielmehr kann sobald lediglich Padding Informationen empfangen werden vor dem Ende der Ethernetdaten, das empfangene Paket an das nächste Submodul, beispielsweise die RT FSM 201b oder die BC FSM 201c weitergegeben werden.

Mit dem Empfangen der Daten kann parallel zu dem Weitergeben des bereits empfangenen vorausgehenden Befehls/Antwort Pakets fortgefahren werden. Der Empfangsvorgang kann aber auch abgebrochen werden. Es kann also reagiert werden, bevor sämtliche Padding-Informationen eines Kommandowortes 1100 empfangen wurden. Es könnten in einem Beispiel somit auch kürzere Ethernetrahmen erzeugt werden, insbesondere, wenn Statusinformationen oder Befehle übertragen werden. Auf diese Weise könnten die Padding-Informationen vermieden werden, die einen Overhead erzeugen. Jedoch könnte beim Einsatz von kurzen Ethernetrahmen möglicherweise keine COTS Kompatibilität mit bestehender Hardware herrschen. Zu kurze Ethernetrahmen werden von einem COTS Switch verworfen. Auch bei der Nutzung eines COTS Hubs könnte innerhalb des Hubs eine Kollision hervorrufen werden, weil der Anfang von einem Datenwort 1101 auf das Ende von einem Befehl treffen könnte. In einer entsprechend angepassten Infrastruktur und insbesondere bei der Verwendung von Switchen oder Hubs, die auch an die kurzen Pakete angepasst sind, könnte ein zusätzlicher Performancegewinn erzielt werden.

Es muss also nicht erst der gesamte Ethernetrahmen samt Paddinginformationen in den Seriell-/Parallel-Wandler 201a eingeschrieben werden bevor das Vorhandensein des Pakets signalisiert wird. Durch die frühzeitige Weitergabe lässt sich die Antwortzeit für Befehle und Statusinformationen reduzieren gegenüber einer Lösung, bei der auch die Padding Information ausgewertet würde. Allgemein reagiert das gesamte System auf ankommende Nachrichten bevor alle Paddingbits empfangen wurden. Die jeweilige Antwort, beispielsweise als Datenwort auf ein Befehlswort oder als Statuswort auf ein Datenwort, wird in den Sendepuffer 200a1 geschrieben und dort so festgehalten bis die Response Zeit erreicht wird, beispielsweise bis die Response Zeit für einen MILBUS und/oder für ein EFEx Netz erreicht wird. Durch die vorgeschlagene Implementierung der Schnittstellenvorrichtung mit FPGA Logik 201 lassen sich die von dem MILBUS oder EFEx Standard geforderte Antwortzeiten um ein Vielfaches unterschreitet.

Die Datennachrichten werden von dem Empfangspuffer 200a2 über ein natives FIFO Interface 206a weitergeleitet. In der entgegengesetzten Richtung werden Daten, die in den Sendepuffer 200a1 geschrieben werden, über das native FIFO Interface 206 empfangen. Ein "natives FIFO Interface" soll das einfachste FIFO Interface bezeichnen, das auf einem FPGA vorhanden ist. Ein natives FIFO Interface weist als Eingang einen parallelen Datenpfad, ein Signal für die Gültigkeit der Daten und einen Takt auf. Als Ausgang weist ein natives FIFO ein Signal auf, welches anzeigt, dass das FIFO bereit ist, neue Daten aufzunehmen.

Durch das Vorsehen von einem separaten Sendepuffer 200a1 und Empfangspuffer 200a2 bzw. von einem Sende Seriell-/Parallelwandler und einem Empfangs Seriell-/Parallelwandler, die jeweils von eigenen unabhängig arbeitenden FSMs der Resourcenverwaltungseinrichtung 201 betrieben werden, können Kollisionen von zeitkritischen Nutzdaten vermieden werden, die sich in unterschiedlichen Richtungen durch den Sende- und Empfangspuffer 200a und/oder durch den Seriell-/Parallelwandler 201a bewegen.

In der Schnittstellenvorrichtung 103, 107 ist durch das deterministische Design somit vorgesehen, dass es weder zu Kollisionen von unterschiedlichen zeitkritischen Nutzdaten kommt, die sich in der gleichen Richtung bewegen. Noch dass es zu Kollisionen von unterschiedlichen zeitkritischen Nutzdaten kommt, die sich in entgegengesetzten Richtungen bewegen.

Der Empfangsteil und der Sendeteil 201e des Seriell-Parallel-Wandlers 201a nutzen jeweils eine sequenzielle eindimensionale FSM. Durch das Verwenden einer eindimensionalen FSM unterscheidet sich die Sende UART FSM 201e oder Sendeteil 201e von den anderen Submodulen der Ressourcenverwaltungseinrichtung 201. Das Verwenden einer FSM an dieser Stelle statt eines Speichers schafft eine Homogenität des Aufbaus des FPGAs 103,107.

Wenn der FPGA 103, 107 an einer Businfrastruktur betrieben wird, so werden von der Schnittstelle 205, 205a, 205b auch Nachrichten empfangen, die von COTS Ethernet Knoten und Switchen ausgetauscht werden. Diese Pakete stellen gültige Ethernetpakete dar. Um Kollisionen mit den Nutzdaten zu vermeiden, werden MAC Adressfilter eingesetzt, um durch das Filtern von MAC Adressen nicht auf jedes beliebige Paket zu reagieren. Dieses Filtern der MAC Adressen findet in der für die Empfangsrichtung zuständigen FSM innerhalb des Seriell-Parallel-Wandlers 201a statt. Es wird dann die Länge der empfangenen Nachricht ausgewertet. Das erste Byte der Nutzlast, insbesondere die ersten 3 Bits, enthält den Typ der Nachricht, wobei das Bitmuster 001 für einen Befehl, das Bitmuster 010 für Daten und das Bitmuster 100 für Statusinformationen steht. Wenn eine Nachricht keinen dieser drei Nachrichtentypen aufweist, wird die Nachricht verworfen, um nicht unnötige Zeit mit dem Auswerten eines nicht zu den Befehls/Antwort Protokollen gehörenden Pakets zu verschwenden.

Wird jedoch eine Nachricht erfolgreich empfangen, wird sie einer der drei Nachrichtenkategorien Befehlswort, Statusnachricht oder Daten zugeordnet. Nach dem Erkennen einer vollständigen Nachricht kann das Ereignis, dass eine gültige Nachricht in dem Empfangs-Seriell-/Parallel-Wandler des Seriell-/Parallel-Wandlers 201a vorliegt, einer höher liegenden Schicht öder einer in Empfangsrichtung nachfolgenden Schicht, wie beispielsweise einer BC FSM 201c oder einer RT FSM 201b über ein natives FIFO Interface mitgeteilt werden.

Diese als gültig empfangene Nachricht wird dann in Abhängigkeit von dem Typ weitergeleitet. Eine gültige Datennachricht 1101 wird über die Empfangsleitung 304r an die RT FSM 201b und dann an den Nachrichtenpuffer 200b und die Hosteinrichtung 106, 108 weitergeleitet.

Ein gültiger Befehl 1100 wird an den Befehlseingang 303 der RT FSM 201b weitergeleitet.

Ein RT erkennt einen Übertragungsfehler, beispielsweise weil keine Daten empfangen werden, weil die Daten unterbrochen sind oder weil das physikalische Bitmuster gestört ist, also die CRC Prüfsumme nicht stimmt.

Wird innerhalb einer erwarteten Antwortzeit kein Statuswort empfangen, kann der BC feststellen, dass der Datentransfer nicht funktioniert.

Wird das Statuswort empfangen, bestätigt der Empfang auch, dass das beteiligte RT oder Gerät, insbesondere die Avionikkomponente 120, grundsätzlich in der Lage ist korrekte Daten zu senden oder zu empfangen.

Ein Statuswort 1102 enthält einige Flags oder Bits, die auf Fehlerzustände des Gerätes hinweisen. Fehlerzustände des Datenbus 102 werden von dem Statuswort 1102 jedoch im Wesentlichen nicht signalisiert. Ein Beispiel für ein Flag des Statusworts ist das Flag "Busy", das übermittelt wird, um zu signalisieren, dass ein Gerät beispielsweise nach dem Einschalten oder nach einem Reset noch keine gültigen Daten bereitstellen kann. Sollten jedoch Defekte in der Avionikkomponente 120 vorliegen und daher die übermittelten Daten nicht zu verwenden sein, wird das Flag "Subsystem" benutzt. Ein solcher Fall kann eintreten, wenn in einer Avionikkomponente beispielsweise ein Sensor, wie ein Höhenmesser defekt ist.

Fig. 8 zeigt ein Blockschaltbild für eine Speicherzugangs-Steuereinrichtung gemäß einem exemplarischen Ausführungsbeispiel der vorliegenden Erfindung. Immer wenn auf einen Single-Port Speicher mit zwei unabhängigen Aktoren zugegriffen werden soll stellt sich die Frage nach der Zugriffsvorschrift. Ein Single-Port Speicher weist nur einen einzigen Port 803 auf, über welchen Schreibzugriffe und Lesezugriffe erfolgen. Eine solche Speicherzugangs-Steuereinrichtung 802 kommt bei einem Zugriff auf den Nachrichtenpuffer 200b oder auf den Erweiterungsspeicher 200e vor. Physisch ist im Wesentlichen jeder Speicher ein Single Port Speicher. Die Logik, die in Fig. 8 dargestellt ist, multiplexed zwei Akteure, die an dem Echtzeitanschluss 801 und an dem Hostanschluss 800 angeschlossen sind. Der Akteur an dem Echtzeitanschluss 801 mag höhere Anforderungen an die maximale Reaktionszeit haben als der andere Akteur an dem Hostanschluss 800. Diese Akteure können beispielsweise eine Hosteinrichtung 106, 108 und eine Command/Response Logik 201 (beide nicht in Fig. 8 dargestellt) sein, die auf einen einzelnen Speicher 200e zugreifen möchten. Wegen der Möglichkeit des gemeinsamen Speicherzugriffs, muss dieser Zugriff synchronisiert werden, um Kollisionen zu vermeiden. Die Speicherzugangs-Steuereinrichtung 802, die Teil der Resourcenverwaltungseinrichtung 201 sein kann, verwaltet den exklusiven Zugang zu dem Speicher 200e, wenn beide Komponenten 106, 201 von zwei Seiten gleichzeitig auf das DDR 3 RAM 200e zugreifen möchten. Die Speicherzugangs-Steuereinrichtung 802 segmentiert die Zugriffe von außen, beispielsweise von dem Hostanschluss 800, auf den Speicher 200e. Die Hosteinrichtung 106 mag keine harten Echtzeitanforderungen einhalten müssen. Insbesondere mag die Hosteinrichtung 106 harte Echtzeitanforderungen einhalten müssen, die jedoch größere zulässigen Reaktionszeiten erlauben, als die Reaktionszeiten, die die Command/Response Logik 201 oder Befehls/Antwort Logik 201 einhalten muss. Die Hosteinrichtung 106 ist an der Hostanschlussleitung 800 angeschlossen. Die Command/Response Logik 201, beispielsweise die RT FSM 201b, muss Echtzeitanforderungen erfüllen und ist an dem Echtzeitanschluss 801 angeschlossen. Die Speicherzugangs-Steuereinrichtung 802 sorgt dafür, dass der einzelne Speicher 200e von den beiden Seiten 800 und 801 zugreifbar ist.

Bei einem Speicherzugriff müssen zwei Größen unterschieden werden. Einerseits die Latency für den Zugriff und andererseits die Bandbreite. Die Latency gibt hierbei an, wie schnell Daten nach einer Anfrage bereitgestellt werden. Die Bandbreite gibt dabei an, wie viel Daten pro Zeiteinheit zur Verfügung gestellt werden. Die Latency ist mit einer Reaktionszeit des Speichers auf ein Schreib-/Lese-Signal verknüpft und ist ein Maß für die Trägheit des Speichers. Der Single Port Speicher 200e kann ein DDR 3 RAM sein. Ein DDR 3 RAM hat eine recht hohe Latency, d. h. es reagiert recht träge auf Anfragebefehle. Jedoch bietet ein DDR 3 RAM eine große Übertragungsbandbreite, wenn einmal der Zugang gewährt ist.

Werden zwei Lesezugriffe von den beiden Seiten 800, 801, also beispielsweise von einer Hosteinrichtung und der Befehls/Antwort Logik 201, auf den Speicher 200e durchgeführt, erhält die Echtzeitabfrage auf der Seite 801 den Vorrang. An den Hostanschluss 800 werden keine hohen Echtzeitanforderungen gestellt. Die maximalen Latenzen auf der Seite des Echtzeitanschlusses 801, d.h. in Richtung der Befehls/Antwort Logik 201, sind geringer als die Latenzen auf der Seite 800 der Hostingeinrichtung. Die Hosteinrichtung muss nicht zwangsläufig echtzeitkritisch sein. Das RT der Befehls/Antwort Logik 201 an dem Echtzeitanschluss 801 ist jedoch zeitkritisch. Die maximale Reaktionszeit, die an dem Echtzeitanschluss 801 von der Befehls/Antwort Logik 201 eingehalten werden muss, liegt in der Gößenordnung von 4-12 µs. Typische Avionik Systeme können sich Wiederholzeiten oder Zykluszeiten in der Größenordnung von zweistelligen ms leisten. Die Zykluszeit wird von der Reaktionszeit beeinflusst, wenn die Grenzen der vordefinierten Reaktionszeit bzw. des Timeouts nicht eingehalten werden. Auch wenn diese Schranke wesentlich weiter ist, so handelt es sich auch hier um ein hartes Echtzeitsystem. Das Überschreiten der max. Zykluszeit- auch wenn diese vergleichsweise hoch ist - ist mit dem Ausfall oder zumindest einer Störung des Avioniksystems gleichzusetzen. Eine entsprechend der Erfindung ausgelegte Schnittstellenvorrichtung mag solch einen Störfall verhindern. Trotz der großen Zeitbereiche für die Zykluszeiten der Avionikkomponenten existieren die beschriebenen strengen Grenzen für die Responsezeit der Schnittstellenvorrichtung, weil innerhalb der Zykluszeit viele weitere Datentransfers erfolgen können, beispielsweise für andere Geräte.

Wenn einmal die Priorität für die Echtzeitabfragen auf der Seite des Echtzeitanschlusses 801 festgelegt ist, muss möglichst die hohe Übertragungsbandbreite der Speicherübertragung genutzt werden und die vorhandenen Daten müssen aus dem Speicher eingelesen werden, obwohl sie vielleicht nicht unbedingt direkt nach der Abfrage weiterverarbeitet werden können. Um das Zwischenspeichern der abgefragten Daten zu ermöglichen, werden die Echtzeitpuffer 200i für die Zwischenspeicherung genutzt. Diese Echtzeitspeicher 200i werden nacheinander gefüllt, bis der Zugang abgeschlossen ist. Sobald die Echtzeitspeicher 200i gefüllt sind, wird der Hosteinrichtung auf der Host-Seite 800 der Zugriff auf den Speicher ermöglicht, um zu verhindern, dass die Hosteinrichtung "verhungert" ("Starving"). In diesem Zusammenhang mag "nicht verhungern" bedeuten, dass die Hosteinrichtung, die über den Hostanschluss 800 an der Speicherzugangskontrolleinrichtung 802 angeschlossen ist, auch bei längeren Zugriffen des höher prioren Zugangs der Befehls/Antwort Logik über den Echtzeitanschluss 801, nicht vollständig von dem Datenstrom abgetrennt wird. "Verhungern" kann beim Multiplexen mit unterschiedlichen Prioritäten auftreten.

Die zwei Akteure 106, 201, die an der Speicherzugangs-Steuereinrichtung 802 angeschlossen sind, weisen eine unterschiedliche aber dennoch echtzeitkritische Latenz auf, mit der sie auf die gemeinsame Speicherkomponente 200e zugreifen. Auf der Seite des Echtzeitanschlusses 801 ist eine FPGA Logik 201 angeschlossen, deren Latenz im Bereich von 6 µs liegt. Auf der anderen Seite, d.h. auf der Seite des Hostanschlusses 800, sind Systeme 106 angeschlossen, deren maximale Echtzeitlatenzen um mehr als das 1000 fache darüberliegen oder die keine Echtzeitanforderungen aufweisen. Diese Systeme sind über den Hostanschluss 800 und die erste Schnittstelle 104, 109 (nicht gezeigt in Fig. 8) mit der Speicherzugangs-Steuereinrichtung 802 verbunden. Für die Hostschnittstelle 800 soll das Multiplexverfahren dafür sorgen, dass der störende Einfluss durch einen Zugriff von dem Echtzeitschluss 801 auf die Zugriffsbandbreite das Systems an dem Hostanschluss möglichst gering ist.

Mittels der in Fig. 8 dargestellten Architektur kann das Bedürfnis des Echtzeitanschlusses 801 nach Daten bereits dann schon befriedigt werden kann, wenn nur einer der Teilpuffer 200i gefüllt worden ist. Das Befriedigen des Bedürfnisses nach Daten aus dem Teilpuffer 200i senkt sowohl die Zugriffszeit seitens des Echtzeitanschlusses 801 als auch die Wartezeit, die ein Zugriff über den Hostanschluss 800 erfährt.

Insbesondere für Simulationszwecke kann es sinnvoll sein, eine Vielzahl von BCs und/oder RTs auf ein und demselben FPGA 103, 107 zu realisieren, d.h. eine Schnittstellenvorrichtung 103, 107 mit einer Vielzahl BCs und/oder RTs zu schaffen.

Da jedoch in einem Ethernet-Netzwerk 102 Daten, die über eine Ausgangsschnittstelle 202 ausgesandt wurden nicht wieder an die selbe Ausgangsschnittstelle 202 zurückgespiegelt werden, können die ausgesandten Daten nicht mehr von einer anderen Komponente empfangen werden, die an der selben Ausgangsschnittstelle 202 angeschlossen sind. Um dennoch die gewünschte Simulation mit mehreren Command/Response Komponenten 201b, 201c durchführen zu können, ist eine besondere Vorkehrung für das Senden und Empfangen von Daten vorzusehen. Zum Rückspiegeln der Daten kann eine Loopbackeinrichtung oder ein Loopbackpuffer 200j genutzt werden.

Fig. 9 zeigt ein Blockschaltbild einer Protokoll-Verarbeitungseinrichtung 201a, 201b, 201c mit einem Loopbackpuffer 200j gemäß einem exemplarischen Ausführungsbeispiel der vorliegenden Erfindung. Als eine Protokoll-Verarbeitungseinrichtung 201a, 201b, 201c wird eine Komponente der Resourcenverwaltungseinrichtung 201 bezeichnet, die an der Verarbeitung des Übertragungsprotokolls und/oder des Befehls/Antwort Protokolls beteiligt ist. Der Empfangspuffer 200a2 wird direkt von dem MII Interface 202 des Ethernetcontroller 204 gespeist. Der Loopbackpuffer 200j, ist an der zweiten Schnittstelle 105, 110 der Schnittstellenvorrichtung 103, 107 angeschlossen. Insbesondere ist der Loopbackpuffer 200j an das Sende FIFO 200a1 und an das Empfangs FIFO 200a2 angebunden. Der Loopbackpuffer 200j ist an den nativen FIFO Ports 206a, 206b angeschlossen, die beide zu der Systemtaktdomaine 701 gehören. Im Gegensatz zu dem Empfangspuffer 200a2 und dem Sendepuffer 200a1 muss das Loopback-FIFO 200j keine Daten zwischen unterschiedlichen Taktdomains 700a, 700b, 701 überführen. Daher kann ein synchrones FIFO 200j für die Realisierung des Loopbackpuffers 200j eingesetzt werden. Das Loopbackpuffer 200j ist ein Teil der Schnittstellenvorrichtung 103, 107 und beispielsweise auf einer gemeinsamen Platine oder auf einem gemeinsamen FPGA implementiert. Das Loopbackpuffer 200j teilt sich die FIFO Ports 206a, 206b mit den Empfangspuffer 200a2 bzw. mit dem Sendepuffer 200a1. Wird eine Nachricht in den Emfpangspuffer 200a2 geschrieben, wird diese automatisch an den Empfangs Seriell/Parallelwandler (nicht gezeigt in Fig. 8) weitergeleitet.

Die Protokolllogik 201a, 201b, 201c wird von einer einzelnen Taktquelle betrieben. Auf Sendeseite 200a1 ist das Anbringen einfach, da die Ausgangsdaten lediglich zusätzlich zum Übertragen auf den Bus 102 auch noch an den Loopbackpuffer 200j weitergereicht werden müssen. Wenn eine neue Nachricht von der protokollverarbeitenden Logik 201a, 201b, 201c, die im Wesentlichen den Seriell-/Parallel-Wandler 201a, die RT FSM 201b und die BC FSM 201 c aufweist, über den Sendepuffer 200a1 an das Übertragungsmedium 102 verschickt wird, werden die Signale von der nativen FIFO Schnittstelle 206a in den Loopbackpuffer 200j kopiert. Zum Kopieren doppelt der FIFO Port 206a die Signale. Eine Instanz geht an den Sendepuffer 200a1, die anderen Instanz geht an das Loopbackpuffer 200j. Das Loopback FIFO 200j besitzt eine ausreichende Größe, um ein gesamtes Ethernetpaket einschließlich Präambel 600 und SDF 601 aufzunehmen.

Da es zu ungewünschten Kollisionen kommen kann, wenn gleichzeitig Daten über den Loopbackpuffer 200j und den Empfangspuffer 200a2 empfangen werden, stellt sich auf der Empfangsseite 200a2 die Aufgabe, eine Lösung zu schaffen, die mit einer solchen Situation umgehen kann . Die Daten werden von der Ethernetschnittstelle asynchron und somit nicht vorhersagbar bereitgestellt, während der Loopbackpuffer 200j eine lokale Nachricht in die Protokolllogik 201a, 201b, 201c zurückführt. Um die möglicherweise entstehenden Kollisionen aufzulösen, werden der Loopbackpuffer 200j und der Sendepuffer 200a2 nacheinander aktiviert. Durch dieses abwechselnde Aktivieren kann gewährleistet werden, dass beide Puffer, der Loopbackpuffer 200j und der Empfangspuffer 200a2, Daten vorhandener Nachrichten empfangen.

Die Signale aus dem Loopbackpuffer 200j und dem Empfangspuffer 200a2 werden über eine ODER-Logik geführt und in dem FIFO Port 206b zusammengeführt. Bei dem Zusammenführen wird der Loopbackpuffer 200j ebenso wie der Empfangspuffer 200a2 durch den UART 201e gestartet, sobald der Antwort Timer für das Versenden einer Nachricht abgelaufen ist. Da jedoch durch das verzögerte Versenden der Nachrichten und aufgrund der Struktur des Befehls/Antwort Protokolls, also aufgrund des Zeitverhaltens des Befehls/Antwort Protokolls, die Nachrichten auch zu unterschiedlichen Zeitpunkten eintreffen, werden Kollision von Nachrichten verhindert, die aus dem Loopbackpuffer 200j und aus dem Empfangspuffer 200a2 kommen. Im fehlerfreien Fall werden Kollisionen vermieden.

Das verzögerte Versenden der Nachrichten führt zu einem abwechselnden Empfang. Bei dem abwechselnden Empfang wird die Regel angewendet, dass dasjenige FIFO 200j, 200a2 bedient wird, welches als erstes eine vorhandene Nachricht signalisiert. Wenn der ungewöhnliche Fall auftreten sollte, dass beide FIFOs 200j, 200a2 tatsächlich gleichzeitig eine gültige Nachricht zur Verfügung stellen können, z. B. bei derselben Taktflanke, wird das Loopback FIFO 200j vor dem Empfangspuffer 200a2 bedient. Die durch das zeitlich versetzte Abarbeiten entstehende Zeitstrafe fällt gering aus, da das Loopback FIFO 200j mit einer höheren Taktrate, dem Systemtakt 701, als der Eingang 205b des Empfangspuffers 200a2 arbeitet, der mit dem Netztakt 700a, 700b betrieben wir. Bei dem gleichzeitigen Auftreten von Nachrichten handelt es sich jedoch um einen theoretischen Fall, da mittels des Befehls/Antwort Protokolls und des Buscontrollers dafür gesorgt wird, dass deterministisch nur eine geplante Kommunikation zwischen den einzelnen Teilnehmern stattfinden kann.

Die Schnittstellenvorrichtung 103, 107 weist eine Loopback-Zuschalteinrichtung auf, mit der das der Loopbackpuffer 200j ein- und ausgeschaltet werden kann. In einem Beispiel wirkt diese Loopback-Zuschalteinrichtung auf das Kopieren der Ausgangsdaten ein. Als Loopback-Zuschalteinrichtung kann ein mechanischer Schalter vorgesehen sein. Die Loopback-Zuschalteinrichtung kann alternativ auch über das Konfigurationsregister 200d geschaltet werden, mit dem auch die Konfiguration der Anzahl der simulierten BCs und/oder RTs bestimmt wird.

Ein PLB Bus (Prozessor Local Bus) oder ein PCIe Bus (Peripheral Component Interconnect Express), die auf einem FPGA vorhanden sind, könnte verwendet werden um die Hosteinrichtung 106, 108 über die erste Schnittstelle 104,109 zu verbinden. In anderen Worten kann die erste Schnittstelle 104, 109 als PLB Bus oder als PCIe Bus ausgebildet sein.

Die Fig. 10 zeigt ein Blockdiagramm einer Schnittstellenvorrichtung mit einer Ereignisauswerteeinrichtung gemäß einem exemplarischen Ausführungsbeispiel der vorliegenden Erfindung.

Eine Avionik-Komponente 1000 kann auf einem einzigen Multicore-Mikrocontroller Board 1001 realisiert sein. Das Multicore-Mikrocontroller Board 1001 weist einen Ethernet-Controller 204' und eine Vielzahl von Recheneinrichtungen 1003a, 1003b auf. Bei dem Ethernet- Controller 204' kann es sich um einen auf dem Multicore-Mikrocontroller Board 1001 für die Konfiguration der Avionik-Komponente 1000 vorgesehenen Zugang handeln, beispielsweise einen Managementport. Der Ethernet-Controller 204' kann aber auch nur deshalb vorhanden sein, weil der verwendete (Multi-Core-) Microcontroller einen oder mehrere Ethernet-Controller standardmäßig on-Chip bereithält und diese von der Avionik-Applikation nicht verwendet werden. Der Ethernetcontroller 204' weist eine Ereigniserzeugungseinrichtung 1002 oder eine Interrupterzeugungseinrichtung 1002 und einen Physical Layer 1005 auf.

Die Avionik-Komponente erbringt eine spezifische Avionikfunktion, die von einer Avioniksoftware ausgeführt wird. Die Avioniksoftware ist auf eine oder auf eine Vielzahl der Recheneinrichtungen 1003a, 1003b geladen. Eine Avionikkomponente 1000 ist eine für den Betrieb eines Flugzeuges benötigte Komponente, die auch Teil eines Untersystems in einem Flugzeug sein kann. Beispielsweise kann die Avionikkomponente ein GPS (Global Positioning System), ein Radar oder sonstige Sensoren sein, die in einem Freund/Feind - Erkennungssystem des Flugzeugs agieren. Die Avionikkomponente erbringt dann ihre spezifische Funktion innerhalb der Avionik. Weitere mögliche Funktionen aus dem Bereich der Flugsteuerung sind Triebwerks- und Ruder-Steuerungen. Weniger zeitkritisch ist z.B. eine Klimafunktion

Die eigentliche Funktion der Avionikkomponente 1000 wird somit hauptsächlich durch die auf die Recheneinrichtungen 1003a, 1003b oder die Prozessoren 1003a, 1003b geladene anwendungsspezifische Software bestimmt. Diese Applikationssoftware sorgt dafür, dass die Avionikkomponente 1000 die ihr zugedachte Avionikfunktion erbringen kann. Zum Ausführen der Applikationssoftware, kann die Avionikkomponente Hardware - in Form von einem einzelnen oder einer beliebigen Anzahl von den Recheneinrichtungen 1003a, 1003b - und Systemsoftware nutzen, wie z.B. Kommunikationssoftware. Die gewählte Anzahl von Recheneinrichtungen 1003a, 1003b hängt meist von der benötigten Rechenleistung oder den Zuverlässigkeitsanforderungen an die Avionikkomponente ab.

Um die Avioniksoftware auf die Avionik-Komponente laden zu können oder um die Avionikkomponente zu konfigurieren und auf Konfigurationsdaten reagieren zu können, sind die Recheneinrichtungen 1003a, 1003b oder die Rechenkerne 1003a, 1003b mit der Ereigniserzeugungseinrichtung 1002 des Ethernet-Controllers 204' über einen internen Bus 1004 verbunden, beispielsweise über einen Systembus 1004 oder einen Cross Bar Switch 1004. Der Ethernet-Controller 204' ist auch Bestandteil des Multicore-Mikrocontroller Boards 1001. Erreichen Daten oder Nachrichten von dem Medium 102 über die Signalanpassungseinrichtung 1005 oder den Physical Layer 1005 den Ethernet-Controller 204' wird dieses Vorliegen einer Nachricht als ein Ereignis an die Ereignissteuerung 1006 oder die Ereignissteuereinrichtung 1006 weitergereicht.

Nachdem der Ethernet-Controller 204' eine Nachricht oder einen Frame empfangen und dessen Nutzdaten in der Speichereinrichtung 1007 abgelegt hat, generiert er mit der Ereigniserzeugungseinrichtung 1002 ein Ereignissignal 1008 oder einen Interrupt 1008, mit dem das Ereignis des Ablegens der Nutzdaten in der Speichereinrichtung signalisiert wird. Diese Ereignissignale werden von der Ereignissteuerung 1006 empfangen und können auch der Komponente zugeordnet werden, die das Ereignis erzeugt hat.

Ebenfalls kann die Avioniksoftware via dem internen Bus 1004 dem Ethernet-Controller 204' mitteilen, dass sie Daten in der Speichereinrichtung 1007 abgelegt hat, welche an andere Komponenten des Avioniksystems zu übertragen sind, z.B. an eine andere Schnitstellenvorrichtung.

Beim Konfigurieren der Avionikkomponente werden die zu übermittelnden Konfigurationsdaten, beispielsweise die Konfigurationen oder die Avioniksoftware selbst in den Speicher 1011, den Arbeitsspeicher 1011 oder den Zwischenspeicher 1011 abgelegt. Von dort aus kann die Konfiguration oder die Avioniksoftware auf die entsprechenden Ziele verteilt werden.

Bei einer Konfiguration kommt es im Wesentlichen nicht auf die Echt-Zeitfähigkeit der beteiligten Komponenten an. Es genügt folglich, die an dem Konfigurationsprozess beteiligten Komponenten von dem Vorliegen geänderter Daten im Arbeitsspeicher 1010 zu informieren.

Anders sieht es aus, wenn Daten oder Nutzdaten, die von einer auf einem oder einer Vielzahl der Recheneinrichtungen 1003a, 1003b ablaufenden Avioniksoftware erzeugt werden oder von ihr benötigt werden, mit beispielsweise einer anderen Avionikkomponente ausgetauscht werden sollen und dazu das Übertragungsmedium 102 genutzt werden soll. Wenn solch ein Datenaustausch durchgeführt werden soll, kommt es auf die Echtzeitfähigkeit des Mikrocontroller-Boards 1001 an.

Zur Erfüllung von Echtzeitbedingungen, beispielsweise um harte Echtzeitbedingungen erfüllen zu können, wird das Vorliegen zeitkritischer Nutzdaten von einer Ereignisauswerteeinrichtung 1009 erkannt. Diese mag eine dedizierte Software-Komponente sein, welche auf einer der vorhandenen Recheneinrichtungen 1003a, 1003b abläuft. In einem Beispiel kann die Ereignisauswerteeinrichtung 1009 eine spezifische Unterbrechungsbehandlungsroutine oder eine Interrupt Service Routine sein, welche auf einer der Recheneinrichtungen 1003a, 1003b läuft. Für die Ereignisauswerteeinrichtung 1009 kann in einem Beispiel, wie in Fig. 10 gezeigt, eine der Recheneinrichtungen 1003a, 1003b exklusiv reserviert sein, so dass sie nur für das Erkennen und Bearbeiten von Ereignissen zuständig ist. Die Interrupt Service Routine kann aber auch auf einer geteilten Recheneinrichtung 1003a, 1003b ablaufen, die auch noch eine andere Funktion erfüllt. In diesem Fall ist zu analysieren, ob die Worst Case - Interrupt-Latenz bekannt und - gemessen an den Anforderungen des Befehls/Antwort-Protokolls - hinreichend klein ist. Ebenso ist zu berücksichtigen, dass in diesem Fall die Cache-Speicher der Recheneinrichtung, insbesondere der Daten-, Instruktions- und Adressumsetzungs-Cache, nicht mit den für das Befehl/Antwort-Protokoll benötigten Informationen gefüllt sind, um eine Verschlechterung der Worst-Case - Ausführungszeit zu vermeiden. In Fig. 10 ist die Ereignisauswerteeinrichtung 1009 als eine dedizierte und exklusiv genutzte Komponente dargestellt.

Durch die spezifische Initialisierung der Ereignissteuerung 1006 oder des Interrupt-Controllers 1006, die bestimmt, wie bei dem Vorliegen eines Ereignisses des Ethernet-Controllers vorzugehen ist, wird die Ereignisauswerteeinrichtung 1009 aktiviert und von dem Ereignis informiert. Die Ereignissteuerung 1006 steuert die Recheneinrichtungen 1003a, 1003b so an, dass eine der Recheneinrichtungen alle von ihr ausgeführten Aufgaben oder Rechenoperationen abbricht, beispielsweise Aufgaben, die die Ausführung der Avioniksoftware betreffen. Es wird ausgeschlossen, dass die hierfür vorgesehene Recheneinrichtungen 1003a, 1003b durch die Behandlung anderer als die für die Bearbeitung des Befehls/Antwort-Protokolls notwendigen Unterbrechungen belegt ist. Die vorgesehenen Recheneinrichtungen 1003a, 1003b bearbeiten also ausschließlich die Ereignisse des Befehls/Antwort- Protokolls. Somit wird gewährleistet, dass für die Ereignisauswerteeinrichtung 1009 nach dem Auftreten eines Ereignisses des Ethernet-Controllers innerhalb einer begrenzten und hinreichend kleinen Interrupt-Latenzzeit zumindest eine Recheneinrichtungen 1003a, 1003b vollständig zur Verfügung steht. Die Recheneinrichtung 1003a, 1003b kann sich dann exklusiv um die Übertragungsaufgabe kümmern, ohne selbst Gefahr zu laufen unterbrochen zu werden.

Die Ereignisauswerteeinrichtung 1009 kann eine speziell konfigurierte Software sein, welche die Übertragung der Nutzdaten organisiert. Die Ereignisauswerteeinrichtung 1009 ist Teil einer Schnittstellenvorrichtung 1020, die eine spezifische Baugruppe auf der Avionikkomponente 1000 bilden kann. In einem anderen Beispiel, kann die Ereignisauswerteeinrichtung 1009 jedoch auch außerhalb der Schnittstellenvorrichtung 1020 liegen.

Die Schnittstellenvorrichtung 1020 kann Daten zwischen einer ersten Schnittstelle 1021 und einer zweiten Schnittstelle 1022 austauschen. Die erste Schnittstelle 1021 und die zweite Schnittstelle 1022 können dieselben oder unterschiedliche Ports eines Speichers 1010 sein und den Speicher 1010 oder einen Speicherbereich 1011 aufweisen. Die Schnittstellenvorrichtung 1020 weist neben der Ereignisauswerteeinrichtung 1009 die Ereignissteuerung 1006 und den Bus oder Crossbarswitch 1004 auf. Die Schnittstellenvorrichtung 1020 kann durch eine spezifische Konfiguration des Mikrocontroller-Boards 1001 gebildet werden, insbesondere durch das Verschalten von Komponenten des Mikrocontroller-Boards 1001.

Nachdem die Ereignisauswerteeinrichtung 1009 zumindest eine Recheneinrichtung 1003a, 1003b und/oder weitere Komponenten des Mikrocontroller-Boards 1001, die zum unterbrechungsfreien Transport der Nutzdaten durch die Schnittstellenvorrichtung 1020 nötig sind, exklusiv für die Nutzdatenübertragung reserviert hat, wird mit der Ereignisbehandlung begonnen. Die freie Recheneinrichtung 1003a, 1003b kann dann alleine das Ereignis der Ereigniserzeugungseinrichtung 1002 behandeln, ohne sich um weitere Aufgaben kümmern zu müssen. Die Ereignisauswerteeinrichtung 1009 blockt auch Versuche anderer Komponenten ab, währendem die Nutzdatenübertragung durchgeführt wird, auf die reservierten Resourcen zu zugreifen. Da die Recheneinrichtung 1003a, 1003b durch das Interruptsignal 1008 der Ereigniserzeugungseinrichtung 1002 des Ethernet-Controllers 204' alleine der Ereignisauswerteeinrichtung 1009 zugeordnet ist, behandelt diese zugeordnete Recheneinrichtung 1003a, 1003b nur diesen Interrupt des Ethernet-Controllers 204' und kann nicht von anderen Ereignissen 1008 unterbrochen werden. In anderen Worten sorgt die Ereignisauswerteeinrichtung 1009 dafür, dass es mindestens eine Recheneinrichtung 1003a, 1003b gibt, die sich im Wesentlichen nur um die Behandlung von Ereignissen des Ethernet-Controllers 204' und die dadurch ausgelösten Aktionen kümmert, die im Zusammenhang mit dem Austausch von zeitkritischen Nutzdaten zwischen der Avioniksoftware, die parallel auf einem anderen als der der Ereigniserzeugungseinrichtung 1002 des Ethernet-Controllers 204' zugeordneten Recheneinrichtung 1003a, 1003b läuft, und dem Medium 102 auftreten.

Da durch die Ereignisauswerteeinrichtung 1009 die Ressourcen exklusiv reserviert sind kann auf der dedizierten Recheneinrichtung 1003a, 1003b ein Befehls/Antwort Protokoll zeitlich deterministisch abgearbeitet werden. Es kann davon ausgegangen werden, dass die reservierten Ressourcen das Einhalten der Antwortzeiten garantieren. Dazu werden zumindest die Komponenten reserviert, die für die Abarbeitung des Befehls/Antwort Protokolls genutzt werden, wie z.B. Speicherbereiche, Prozessor-interne Betriebsmittel, wie z.B. Caches, Einträge in der Speicherverwaltung zur Adressumsetzung oder Rechner-Interne Kommunikationspfade, z.B. Bussysteme. Zum Ausführen des Befehls/Antwort-Protokolls wird auf die dedizierte Recheneinrichtung ein Programmcode geladen, z.B. die Software für einen BC und/oder für einen oder mehrere RTs. In einer "Cache Warming" Phase der Initialisierung wird der für die Ausführung der zeitkritischen Funktionen notwendige Programmcode in die Caches geladen. Danach werden die hierfür notwendigen Teile des Caches eingefroren, sodass der Programmcode nicht mehr ausgelagert werden kann. Um den Zugriff auf die Daten zu gewährleisten und um Probleme beim Zugriff auf die Daten zu vermeiden, können die verwendeten Adressbereiche, beispielsweise Adressbereiche für die Nachrichten-Puffer, außerhalb eines vorhandenen Caches eingelagert werden, um zu verhindern, dass die Adressbebereiche in den Cache eingelagert und nur dort modifiziert werden (Cache inhibited). Auf die Verwendung eines Bus-Snoopers mag dann verzichtet werden, um die durch ihn induzierte Reduktion des zeitlichen Determinismus zu vermeiden. Um zu verhindern, dass Adressumsetzinformation in der Speicherverwaltung (MMU: Memory Management Unit) fehlt und dass durch das Fehlen der Adressumsetzungsinformation ein aufwendiges Nachladen notwendig wird, kann die Ereignisauswerteeinrichtung 1009 eingerichtet sein, dass sie bereits auf physikalischen Adressen arbeitet. Das Nutzen von physikalischen Adressen vermeidet eine Adressumsetzung. Eine weitere Möglichkeit den zeitlichen Determinismus bei der Adressumsetzung zu verbessern besteht darin, die entsprechenden Einträge in der MMU in Form von Block Address Translation Registern oder Page Table Entries statisch der Ereignisauswerteeinrichtung 1009 zuzuweisen. Wenn eine dynamische Sprungvorhersage in den Recheneinrichtungen 1003a, 1003b vorhanden ist, kann die dynamische Sprungvorhersage deaktiviert werden, wohingegen die statische Sprungvorhersage aktiviert bleibt oder aktiviert wird. Die tatsächlich eingesetzten Maßnahmen können eine beliebige Kombination der verschiedenen Maßnahmen zur Gewährleistung des zeitlichen Determinismus beim Zugriff auf Daten und Instruktionen sein.

Weder die Kommunikationspfade 1030,1031 zwischen den Recheneinrichtungen 1003a, 1003b und dem Ethernetcontroller 1002 noch die Kommunikationspfade 1021,1022, 1032 für den Zugriff auf die Speichermodule 1007, 1010 können in üblichen Rechnerarchitekturen exklusiv reserviert werden. Es sind daher Maßnahmen notwendig, die eine hinreichend kurze Worst-Case-Zugriffszeit für Zugriffe sowohl von den Recheneinrichtungen auf den Ethernetcontroller und auf den Speicher als auch von dem Ethernetcontroller auf den Speicher gewährleisten.

Der Handlungsbedarf steigt beim Einsatz mehrerer Recheneinrichtungen sowie bei der Verwendung von DMA (Direct Memory Access) - Mechanismen.

Mögliche Maßnahmen mögen Verwendung eines Crossbar - Switches, Verwendung hinreichend schneller Bussysteme, Verwenden eines Split Transaction Busprotokolls, Vorsichtige Verwendung von Write-Posting - Mechanismen, Priorisierung kritischer Bustransfers und Limitierung der DMA-Burst-Länge sein:
Bei der Verwendung eines Crossbar - Switches anstelle eines Bus-Systems können mehrere Recheneinrichtungen gleichzeitig auf verschiedene Speichereinrichtungen oder den Ethernetcontroller zugreifen. Ein Datentransfer innerhalb des Rechnersystems blockiert nicht zwangsläufig alle anderen.

Bei der Verwendung hinreichend schneller Bussysteme können erhöhte Zugriffszeiten vermieden werden, wenn ein Bussystem in der Lage ist, die von allen Recheneinrichtungen gemeinsam produzierbare maximale Summendatenrate zu übertragen..

Die Verwendung von Split Transaction Busprotokoll kann vermeiden, dass ein Bus blockiert und auch nicht für andere Transfers verfügbar ist. Denn hohe Wartezeiten können bei einem Lesezugriff induziert werden, wenn der angesprochene Slave (z.B. Speicher oder Ethernetcontroller) nicht schnell genug das angeforderte Datum bereitstellen kann. In dieser Zeit ist der Bus blockiert und auch nicht für andere Transfers verfügbar. Dies kann vermieden werden, wenn ein Lesezugriff in zwei Bus-Transaktionen - einem Read-Request und einer Read-Response - aufgespalten wird. Zwischen diesen Transaktionen können andere Recheneinrichtungen den Bus verwenden.

Die vorsichtige Verwendung von Write-Posting - Mechanismen mag bedeuten, dass wenn- z.B. um den mittleren Durchsatz zu erhöhen - Schreibbefehle zwischengepuffert werden, z.B. in der Bus-Schnittstelle einer Recheneinrichtung, so müssen vor einem konfliktbehafteten Lesezugriff (z.B. auf den gleichen Adressbereich) alle gespeicherten Schreibtransaktionen ausgeführt werden. Dieser Mechanismus kann vereinzelt sehr hohe Transferzeiten induzieren.

Bei der Priorisierung kritischer Bustransfers wird berücksichtigt, dass exklusiv zu nutzende Betriebsmittel wie Bussysteme den verschiedenen Anforderern (Recheneinrichtungen und Ethernetcontroller) im Rahmen eines Arbitrierungsprozesses zugewiesen werden müssen. Stehen mehrere Anforderungen gleichzeitig an, so hat der Arbiter mittels eines geeigneten Protokolls, z.B. mittels eines auf Prioritäten-basierenden Protokolls, zu entscheiden, welche Anforderung zuerst bedient werden soll. Den von den zeitkritischen Komponenten des Befehls/Antwort Protokolls generierten Bus-Zugriffen ist eine geeignete Priorität zuzuweisen.

Bei der Limitierung der DMA-Burst-Länge wird nicht nur in den Anwenderprogrammen, sondern z.B. auch in der Treiber-Software sicher gestellt, dass die DMA-Burst-Länge in einer geeigneten Relation zur Transferzeit und zur Bus-Bandbreite steht. Denn werden große Datenbereiche in nicht unterbrechbaren DMA-Bursts oder kontinuierlichen DMA-Bursts übertragen, so werden andere potentielle Nutzer des Bussystems lange ausgesperrt und erfahren somit lange Buszugriffszeiten.

Im Folgenden wird angenommen, dass das empfangene Paket für einen BC bestimmt ist, beispielsweise wenn eine Statusinformation empfangen worden ist. Es wird also die BC Software auf die dedizierte Recheneinrichtung 1003a, 1003b geladen. Die Abarbeitung der BC Software, die das BC Protokoll implementiert erfolgt im Interrupt-Kontext, der sich insbesondere dadurch auszeichnet, dass er ohne die Scheduling-Funktionen des Betriebssystems betreten werden kann und weitere Interrupt-Anforderungen nicht bedient werden, d.h., dass der Interrupt-Kontext weitere Interrupt-Anforderungen sperrt. In diesem Beispiel mag die Reaktionszeit die Zeit sein, die vergeht vom Eintreffen des Pakets am Ethernet-Controller bis zu dem Zeitpunkt, an dem eine Recheneinrichtung exklusiv der Bearbeitung des Pakets zugeteilt worden ist. Die Reaktionszeit auf eintreffende Nachrichten, im gewählten Beispiel die eintreffende Statusinformation, hängt also im Wesentlichen nur von der Behandlung der Nachricht durch die Hardware des Ethernet-Controllers 204', von der konstanten Hardware-Laufzeit des Interruptsignals 1008 von der Ereigniserzeugungseinrichtung 1002 zu der Ereignissteuerung 1006, sowie von der Ausführungszeit der Ereignisauswerteeinrichtung 1009 ab. Folglich ist das Zeitverhalten bis zur exklusiven Belegung der Ereignisauswerteeinrichtung 1009 im Wesentlichen deterministisch.

Nach der exklusiven Zuteilung der Ereignisauswerteeinrichtung 1009 erfolgt die Abarbeitung der Kommunikations-Software, also entsprechend die Abarbeitung der BC Software, die Abarbeitung der RT Software oder die Abarbeitung der Software eines Busmonitors. Auch die deterministische Abarbeitung der Kommunikations-Software im Kontext von der Ereignisauswerteeinrichtung 1009, in dem Beispiel das BC Protokoll oder die BC Software, wird gewährleistet. Dazu stellt die Ereignisauswerteeinrichtung 1009 sicher, dass die Abarbeitung des BC nicht durch andere Ereignisse 1008 unterbrochen werden kann. Ein Zugriff des BC auf benötigte Ressourcen, z.B. auf den Pufferspeicher 1013 in dem Arbeitsspeicher 1007 und/oder auf den Pufferspeicher 1011 in dem Arbeitsspeicher 1010, ist innerhalb einer deterministischen und hinreichend kleinen Zeitspanne möglich. Die Kommunikations-Software ist eingerichtet, dass die Einhaltung von maximalen Zeitvorgaben möglich ist. Für das Einhalten einer Zeitvorgabe können Programmiertechniken eingesetzt werden, die im Wesentlichen Schleifen mit einer unbestimmten Anzahl von Iterationen vermeiden.

Die Avionik-Applikationssoftware, welche die zu sendenden Nutzdaten über die erste Schnittstelle 1021 bereitstellt, hat diese Daten bereits in Sendepuffern 1011 oder in dem Nutzdatenspeicher eines Anwendungsspeichers 1010 abgelegt. Mittels Wechselpuffer-Mechanismen wird die Datenkonsistenz auch bei einem gleichzeitigen Lese/Schreib - Zugriff (Producer/Consumer-Problem). sichergestellt.

Verschiedene Implementierungen eines Ethernet-Controllers 204', insbesondere der Ereigniserzeugungseinrichtung 1002 des Ethernet-Controllers 204', können einen Deskriptor-Ring für die Empfangs- und Sende-Puffer verwenden. Die Ereignisauswerteeinrichtung 1009 muss nun nicht die von der Avionik-Applikationssoftware in den Sendepuffern 1011 bereitgestellten Nutzdaten kopieren. Vielmehr legt sie in einem freien Deskriptor-Eintrag 1013 einen Zeiger 1012 auf den Sendepuffer 1011 ab und zeigt mittels Metadaten im Deskriptor und Steuerregistern im Ethernet-Controller an, dass eine neue Nachricht zum Senden ansteht. Der Ethernet-Controller liest dann selbstständig mittels effizienter DMA-Mechanismen die Nutzdaten aus dem Sendepuffer 1011. Ist die Datenübertragung abgeschlossen, so wird der verwendete Deskriptor-Eintrag als frei markiert. Der Ethernet-Treiber des Ethernetcontroller 204' ist derart eingerichtet, dass der Datenpuffer nicht frei gegeben wird sondern in seiner Bestimmung als Sendepuffer verbleibt und weiterhin der Avionik-Applikation zur Verfügung steht. Ein existierender Ethernetcontroller, mag mit einer zusätzlichen Stuereinrichtung versehen oder entsprechend programmiert werden, um diese Funktionalität zu erfüllen.

Das BC Protokoll kann somit, ohne die Nutzdaten aus dem Sendepuffer 1011 selbst zu kopieren, den Zeiger 1012 an die Ereigniserzeugungseinrichtung 1002 des Ethernet-Controllers204' übergeben. Somit können zeitaufwendige Kopiervorgänge vermieden werden. Der DMA (Direct Memory access) Mechanismus der Ereigniserzeugungseinrichtung 1002 des Ethernet-Controllers 204' entnimmt die Nutzdaten aus dem Sendepuffer 1011 über die zweite Schnittstelle 1022 oder den netzwerkseitigen Speicherport 1022 und übergibt sie der Sende-Hardware 1005 oder dem Physical Layer 1005.

Nachdem eine exklusive Zuteilung der Ressourcen innerhalb der Schnittstellenvorrichtung 1020 sichergestellt ist, erzielt das eingesetzte Befehls/Antwort-Protokoll eine Störungsresistenz auf dem Übertragungsmedium. Bei einem Konfigurationsvorgang spielen Kollisionen auf dem Medium 102 keine wesentliche Rolle. Bei der Übertragung von zeitkritischen Nutzdaten bringen die Kollisionen einen Unsicherheitsfaktor, der ein deterministisches Verhalten verhindert.

Da durch den Einsatz des Befehls/Antwort-Protokolls Kollisionen ausgeschlossen werden können, ergibt sich eine einfache Struktur des Physical Layers, also der physikalischen Komponenten, die für die tatsächliche Signalübertragung sorgen. Dieser Physical Layer benötigt nun keine Kollisionserkennung mehr und weist im Wesentlichen nur Treiber und Empfänger Bausteine auf, welche störungsresistent ausgelegt werden können, um sie für Flugzeuge einsetzen können. Somit ist bei moderaten Übertragungsraten auch die vorhandene Verkabelung in einem Flugzeug nutzbar.

Der Einsatz des Befehls/Antwort Protokoll hat somit ein mit handelsüblicher Hardware realisierbares "Collision Detection" (CSMA-CD) - Protokoll in ein deterministisches "Collision Avoidance" - Protokoll transformiert.

Werden Switche, die ein Routing zwischen den kommunizierenden Teilnehmern nutzen, eingesetzt, erfolgt virtuell ein Separieren eines Gesamtnetzes. Solche Switche werden eingesetzt, um die Bandbreite durch die gleichzeitige Nutzung mehrerer Kommunikationspfade zu erhöhen und um die beispielsweise bei Ethernetnetzen auftretenden Kollisionen zu vermeiden. Durch diese virtuelle Trennung ist jedoch eine Testbarkeit des Gesamtsystems nicht mehr möglich, da im Rahmen der Testbarkeit gefordert wird, dass der gesamte Verkehr an einem Punkt beobachtet werden kann.

Bei dem Einsatz eines Befehls/Antwort Protokolls wird sichergestellt, dass zu einem geplanten Zeitpunkt immer nur genau eine Station sendet, beispielsweise eine Avionik-Komponente 1000. Somit kann das Protokoll verlustfrei auf einer busbasierten Architektur 102 betrieben werden. Auch der Einsatz von Hubs, die die Informationen auf andere Netzsegmente spiegeln ist möglich. Sowohl in einer Bus- Architektur als auch beim Einsatz eines Hubs ist ein Beobachten des gesamten Verkehrs möglich.

Fig. 11 zeigt die Struktur von drei Nachrichtentypen eines Befehls/Antwort Protokolls gemäß einem exemplarischen Ausführungsbeispiel der vorliegenden Erfindung.

Datenpakete weisen eine Folge von Bits auf, mit denen Informationen übertragen werden. Diese Bits werden entsprechend des gewählten Physical Layers des Netzwerkcontrollers 204, 204' in eine Signalfolge gewandelt, die über ein Medium 102 übertragen werden kann.

Ein Befehl 1100 oder ein Command 1100 des eingesetzten Befehls/Antwort Protokolls, mit dem ein BC ein RT auffordert tätig zu werden, hat im Beispiel eine Bitlänge von 20 bits. Die 3 niederwertigsten Bits 512 enthalten eine Kennzeichnung der folgenden 17 Bits 507 als Befehlsnachricht. Beispielsweise kennzeichnet die Bitbelegung "001" der ersten drei Bits einen Befehl. Die Bits 4 bis 20 können beispielsweise den Bits 4 bis 20 gemäß MIL-STD-1553B für einen Befehl entsprechen.

Ein Nutzdatenpaket 1101 oder Data 1101 des eingesetzten Befehls/Antwort Protokolls, mit dem ein RT an ein anderes RT Nutzdaten überträgt, hat eine Bitlänge von 20 bits. Die 3 niederwertigsten Bits 512 enthalten eine Kennzeichnung der folgenden 17 Bits 507 als Nutzdaten. Beispielsweise kennzeichnet die Bitbelegung "010" der ersten drei Bits Nutzdaten. Die Bits 4 bis 20 können beispielsweise den Bits 4 bis 20 gemäß MIL-STD-1553B für Nutzdaten entsprechen.

Ein Statuspaket 1102 oder Status 1102 des eingesetzten Befehls/Antwort Protokolls, mit dem ein RT an ein BC Ergebnisse einer Datenübertragung überträgt, hat eine Bitlänge von 20 bits. Die 3 niederwertigsten Bits 512 enthalten eine Kennzeichnung der folgenden 17 Bits 507 als Statusinformation. Beispielsweise kennzeichnet die Bitbelegung "100" der ersten drei Bits Statusinformationen. Die Bits 4 bis 20 können beispielsweise den Bits 4 bis 20 gemäß MIL-STD-1553B für Statusinformationen entsprechen.

Fig. 11 orientiert sich entsprechend an der Struktur von MIL-STD-1553B. In einer weiteren Ausgestaltung kann jedoch vorgesehen sein, die Verarbeitung vor allem im RT 201b dadurch zu vereinfachen, dass in dem FPGA für jedes Feld eines Pakets gemäß dem MIL-STD-1553B Protokoll ein volles Byte im Ethernetframe reserviert wird. D.h. auch wenn z.B. die Empfangsadresse (Destinationaddress) nach MIL-STD-1553B nur fünf Bit breit ist, füllt sie dennoch ein Byte im Ethernetrahmen aus. Da bei der Konstruktion eines Befehls- und Statuswortes die minimale Ethernetlänge durch Padding erreicht wird, hätte diese Form der Anpassung im Wesentlichen keine Auswirkung auf die Gesamtlänge. Der Rahmenaufbau von Datenpaketen weist jedoch immer die Präambel 512 oder die Typkennzeichnung 512 mit einer Länge von 3 Bit und die nachfolgenden Nutzdaten 507, 507' auf.

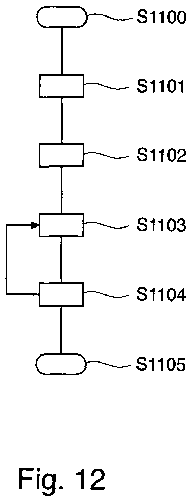

Fig. 12 zeigt ein Flussdiagramm für ein Verfahren zum Austauschen von Nutzdaten gemäß einem exemplarischen Ausführungsbeispiel der vorliegenden Erfindung.

### Das Verfahren beginnt in einem Startzustand S 1100

In Schritt S 1101 wird eine erste Schnittstelle einer Schnittstellenvorrichtung mit einem ersten Takt betrieben und unabhängig davon wird eine zweite Schnittstelle der Schnittstellenvorrichtung mit einem zweiten Takt betrieben, der sich vom ersten Takt unterscheidet.

In Schritt S1102 werden die erste Schnittstelle und die zweite Schnittstelle mit einer Zwischenspeichereinrichtung verbunden, um im Schritt S 1103 unterschiedliche zeitkritische Nutzdaten zwischen der ersten Schnittstelle und der zweiten Schnittstelle über die Zwischenspeichereinrichtung auszutauschen. Dieser Austausch der unterschiedlichen zeitkritischen Nutzdaten zwischen der ersten Schnittstelle und der zweiten Schnittstelle wird derart mittels einer Resourcensteuereinrichtung gesteuert, dass Kollisionen der unterschiedlichen zeitkritischen Nutzdaten innerhalb der Schnittstellenvorrichtung und/oder auf einem an der Schnittstellenvorrichtung angeschlossenen geteilten Medium vermieden werden, um ein deterministisches Verhalten beim Austauschen der unterschiedlichen zeitkritischen Nutzdaten zu ermöglichen.

Im Schritt S1104 werden die unterschiedlichen zeitkritischen Nutzdaten derart zwischengespeichert, dass ein Taktunterschied zwischen dem ersten Takt und dem zweiten Takt ausgeglichen wird.

Wenn noch nicht alle Nutzdatenübertragen sind, kann der Schritt S1103 und S1104 solange wiederholt werden, bis alle Nutzdaten übertragen sind.

Danach endet das Verfahren in Schritt S1105.

Ergänzend ist darauf hinzuweisen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Schnittstellenvorrichtung (103, 107, 1020) zum Austauschen von unterschiedlichen zeitkritischen Nutzdaten (507, 507') zwischen einer Hosteinrichtung (106, 108, 1003a, 1003b) und einem geteilten Medium (102), aufweisend:
eine erste Schnittstelle (104, 109, 1021) zum Austauschen der unterschiedlichen zeitkritischen Nutzdaten (507, 507') mit der Hosteinrichtung (106, 108, 1003a, 1003b);
eine zweite Schnittstelle (105, 110, 1022) zum Austauschen der unterschiedlichen zeitkritischen Nutzdaten (507, 507') mit dem geteilten Medium (102);
eine Ressourcenverwaltungseinrichtung (201),
eine Zwischenspeichereinrichtung (200, 1010);
wobei die erste Schnittstelle (104, 109, 1021) mit einem ersten Takt (701) arbeitet;
wobei die zweite Schnittstelle (105, 110, 1022) mit einem zweiten Takt (700a, 700b) arbeitet, der sich vom ersten Takt (701) unterscheidet;
wobei die erste Schnittstelle (104, 109, 1021) und die zweite Schnittstelle (105, 110, 1022) mit der Zwischenspeichereinrichtung (200, 1010) verbunden sind, um über die Zwischenspeichereinrichtung (200, 1010) den Austausch der unterschiedlichen zeitkritischen Nutzdaten (507, 507') zwischen der ersten Schnittstelle (104, 109, 1021) und der zweiten Schnittstelle (105, 110, 1022) zu ermöglichen;
wobei die Ressourcenverwaltungseinrichtung (201) eingerichtet ist, den Austausch der unterschiedlichen zeitkritischen Nutzdaten (507, 507') zwischen der ersten Schnittstelle (104, 109, 1021) und der zweiten Schnittstelle (105, 110, 1022) derart zu steuern, dass Kollisionen der unterschiedlichen zeitkritischen Nutzdaten (507, 507') innerhalb der Schnittstellenvorrichtung (103, 107, 1020) und auf dem geteilten Medium (102) vermieden werden, um ein deterministisches Verhalten beim Austauschen der unterschiedlichen zeitkritischen Nutzdaten (507, 507') zu ermöglichen; und
wobei die Ressourcenverwaltungseinrichtung (201) ferner eingerichtet ist die Zwischenspeichereinrichtung (200, 1010) derart anzusteuern, dass die unterschiedlichen zeitkritischen Nutzdaten (507, 507') mit Hilfe der Zwischenspeichereinrichtung (200, 1010) derart zwischengespeichert werden können, dass ein Taktunterschied zwischen dem ersten Takt (701) und dem zweiten Takt (700a, 700b) ausgeglichen wird;
wobei in der Schnittstellenvorrichtung ein Übertragungsrahmen eines Kollisionserkennungsprotokoll erzeugt wird, bei dem die Funktionalität der Schicht 2 des OSI Modells durch ein Befehls/Antwort Protokoll angereichert ist.

2. Schnittstellenvorrichtung (103, 107, 1020) nach Anspruch 1, weiter aufweisend,
eine Zeitüberwachungseinrichtung (201h);
wobei die Zeitüberwachungseinrichtung (201e) eingerichtet ist, das Zeitverhalten des Befehls/Antwort Protokolls so zu überwachen, dass das Zeitverhalten des Befehls/Antwort Protokolls eingehalten wird.

3. Schnittstellenvorrichtung (103, 107, 1020) nach Anspruch 1 oder 2, wobei die Ressourcenverwaltungseinrichtung eingerichtet ist, zumindest eine Funktion des Befehls/Antwort Protokolls zu erfüllen, wobei die Gruppe der Funktionen aus
dem Abarbeiten einer Busliste (200c);
dem Erkennen einer Befehlsnachricht (1100);
dem Erkennen einer Präambel in einem Datenpaket;
dem Auswerten einer Präambel eines Datenpakets;
dem Erzeugen einer Präambel eines Datenpakets;
dem Erzeugen einer Statusnachricht (1102);
dem Erzeugen einer Datennachricht (1101);
dem Erzeugen eines Typenfeldes (512); und
dem Überwachen des geteilten Mediums (102) besteht.

4. Schnittstellenvorrichtung (103, 107, 1020) nach einem der Ansprüche 1 bis 3, wobei die Ressourcenverwaltungseinrichtung (201) eingerichtet ist, zumindest ein Befehls/Antwort Protokoll ausgewählt aus der Protokollfamilie MILBUS Protokoll, MIL-STD-1553B, EFABUS (European Fighter Aircraft Bus Protokoll) und EFEx (European Fighter Aircraft Bus Express Protokoll) ist zu realisieren.

5. Schnittstellenvorrichtung (103, 107, 1020) nach einem der Ansprüche 1 bis 4, wobei die erste Schnittstelle (104, 109, 1021) einen Nutzdatenspeicher (200f) und/oder die zweite Schnittstelle (105, 110, 1022) ein Übertragungsregister (203) aufweist.

6. Schnittstellenvorrichtung (103, 107, 1020) nach einem der Ansprüche 1 bis 5, wobei die Resourcenverwaltungseinrichtung (201) eingerichtet ist, zumindest einen Teil der Zwischenspeichereinrichtung als First In First Out Speicher anzusteuern.

7. Schnittstellenvorrichtung (103, 107, 1020) nach Anspruch 5 oder 6, wobei zumindest zwei Speicher aus der Gruppe der Speicher bestehend aus dem Zwischenspeicher, dem Nutzdatenspeicher und dem Übertragungsspeicher Teilbereiche eines gemeinsamen Speichers sind.

8. Schnittstellenvorrichtung (103, 107, 1020) nach einem der Ansprüche 1 bis 7, wobei die Ressourcenverwaltungseinrichtung (201) eingerichtet ist, den Austausch der unterschiedlichen zeitkritischen Nutzdaten (507, 507') zwischen der ersten Schnittstelle (104, 109, 1021) und der zweiten Schnittstelle (105, 110, 1022) durch das Verwalten eines Zeigers (1012) auf die erste Schnittstelle (104, 109, 1021) und/oder auf die zweite Schnittstelle (105, 110, 1022) zu steuern.

9. Schnittstellenvorrichtung (103, 107, 1020) nach einem der Anspruch 1 bis 8, wobei die Ressourcenverwaltungseinrichtung (201) eine Ereignisauswerteeinrichtung (1009) aufweist, welche ein Ereignis (1008) an der ersten Schnittstelle (104, 109, 1021) und/oder ein Ereignis an der zweiten Schnittstelle (105, 110, 1022) erkennen kann und zumindest einen Teil einer Ressource (1003a, 1003b) exklusiv für das Austauschen von unterschiedlichen zeitkritischen Nutzdaten (507, 507') zuweisen kann.

10. Schnittstellenvorrichtung (103, 107, 1020) nach einem der Ansprüche 1 bis 9, ferner aufweisend:
eine Umschalteinrichtung (200d);
wobei die Umschalteinrichtung (200d) eingerichtet ist, die Ressourcenverwaltungseinrichtung (201) so einzustellen, dass sie als zumindest eine Komponente des Befehls/Antwort Protokolls arbeitet, wobei die Gruppe möglicher Komponenten aus:
einem Buscontroller (201c);
einem Remote Terminal (201b); und
einem Busmonitor besteht.

11. Avionikkomponente (101, 120a, 120b, 120c, 120d, 120e, 120f, 1000), aufweisend:
eine Hosteinrichtung (106, 108, 1003a, 1003b);
eine Schnittstellenvorrichtung (103, 107, 1020) nach einem der Ansprüche 1 bis 10;
eine Medienverbindeeinrichtung (204, 204', 1005);
wobei die Hosteinrichtung (106, 108, 1003a, 1003b) zum Ausführen einer Avionik-Anwendung eingerichtet ist;
wobei die Avionik Anwendung Nutzdaten (507, 507') generiert und/oder auswertet;
wobei die Hosteinrichtung (106, 108, 1003a, 1003b) zum Austauschen der Nutzdaten (507, 507') mit der Schnittstellenvorrichtung (103, 107, 1020) verbunden ist;
wobei die Schnittstellenvorrichtung (103, 107, 1020) zum Austauschen der Nutzdaten (507, 507') mit der Medienverbindeeinrichtung (204, 204', 1005) verbunden ist.

12. Kollisionsvermeidungssystem, aufweisend:
zumindest zwei Schnittstellenvorrichtungen (103, 107, 1020) nach einem der Ansprüche 1 bis 10;
zumindest zwei Medienverbindeeinrichtungen (204, 204', 1005), welche die zumindest zwei Schnittstellenvorrichtungen (103, 107, 1020) über ein geteiltes Medium (102) verbinden und welche jeweils mit dem Kollisionserkennungsprotokoll arbeiten;
wobei die zumindest zwei Schnittstellenvorrichtungen (103, 107, 1020) das Befehls/Antwort Protokoll nutzen und mittels einer Zeitüberwachungseinrichtung (201h) das Zeitverhalten des Befehls/Antwort Protokolls so überwachen, dass das Zeitverhalten des Befehls/Antwort Protokolls eingehalten wird, um Kollisionen des Kollisionserkennungsprotokolls zu vermeiden.

13. Verfahren zum Austauschen von unterschiedlichen zeitkritischen Nutzdaten zwischen einer Hosteinrichtung und einem geteilten Medium, aufweisend
Betreiben einer ersten Schnittstelle einer Schnittstellenvorrichtung mit einem ersten Takt;
Betreiben einer zweiten Schnittstelle der Schnittstellenvorrichtung mit einem zweiten Takt, der sich vom ersten Takt unterscheiden kann;
Verbinden der ersten Schnittstelle und der zweiten Schnittstelle mit einer Zwischenspeichereinrichtung;
Austauschen der unterschiedlichen zeitkritischen Nutzdaten zwischen der ersten Schnittstelle und der zweiten Schnittstelle über die Zwischenspeichereinrichtung;
Steuern des Austauschs der unterschiedlichen zeitkritischen Nutzdaten zwischen der ersten Schnittstelle und der zweiten Schnittstelle derart mittels einer Ressourcensteuereinrichtung, dass Kollisionen der unterschiedlichen zeitkritischen Nutzdaten innerhalb der Schnittstellenvorrichtung und auf einem an der Schnittstellenvorrichtung angeschlossenen geteilten Medium vermieden werden, um ein deterministisches Verhalten beim Austauschen der unterschiedlichen zeitkritischen Nutzdaten zu ermöglichen; und
Zwischenspeichern der unterschiedlichen zeitkritischen Nutzdaten derart, dass ein Taktunterschied zwischen dem ersten Takt und dem zweiten Takt ausgeglichen wird;
Erzeugen eines Übertragungsrahmens eines Kollisionserkennungsprotokoll, bei dem die Funktionalität der Schicht 2 des OSI Modells durch ein Befehls/Antwort Protokoll angereichert ist.

14. Speichermedium, in dem ein Programm gespeichert ist, welches, wenn es von einem Prozessor ausgeführt wird, das Verfahren nach Anspruch 13 ausführt.

## Claims

1. Interface apparatus (103, 107, 1020) for exchanging different time-critical useful data (507, 507') between a host device (106, 108, 1003a, 1003b) and a shared medium (102), having:
a first interface (104, 109, 1021) for exchanging the different time-critical useful data (507, 507') with the host device (106, 108, 1003a, 1003b);
a second interface (105, 110, 1022) for exchanging the different time-critical useful data (507, 507') with the shared medium (102);
a resource management device (201),
a buffering device (200, 1010);
wherein the first interface (104, 109, 1021) operates with a first clock pulse (701);
wherein the second interface (105, 110, 1022) operates with a second clock pulse (700a, 700b), which differs from the first clock pulse (701);
wherein the first interface (104, 109, 1021) and the second interface (105, 110, 1022) are connected to the buffering device (200, 1010) in order to permit the exchange of the different time-critical useful data (507, 507') between the first interface (104, 109, 1021) and the second interface (105, 110, 1022) via the buffering device (200, 1010);
wherein the resource management device (201) is configured to control the exchange of the different time-critical useful data (507, 507') between the first interface (104, 109, 1021) and the second interface (105, 110, 1022) in such a way that collisions of the different time-critical useful data (507, 507') within the interface apparatus (103, 107, 1020) and on the shared medium (102) are avoided, in order to permit a deterministic behaviour during the exchange of the different time-critical useful data (507, 507'); and
wherein the resource management device (201) is further configured to control the buffering device (200, 1010) in such a way that the different time-critical useful data (507, 507') can be temporarily stored with the aid of the buffering device (200, 1010) in such a way that a clock pulse difference between the first clock pulse (701) and the second clock pulse (700a, 700b) is balanced out;
wherein, in the interface apparatus, a transmission frame of a collision detection protocol is generated, in which the functionality of layer 2 of the OSI model is extended by a command/response protocol.

2. Interface apparatus (103, 107, 1020) according to Claim 1, also having
a time monitoring device (201h);
wherein the time monitoring device (201e) is configured to monitor the time bheaviour of the command/response protocol such that the time behaviour of the command/response protocol is adhered to.

3. Interface apparatus (103, 107, 1020) according to Claim 1 or 2, wherein the resource management device is configured to fulfil at least one function of the command/response protocol, wherein the group of functions comprises
the processing of a bus list (200c);
the detection of a command message (1100);
the detection of a preamble in a data packet;
the evaluation of a preamble of a data packet;
the generation of a preamble of data packet;
the generation of a status message (1102);
the generation of a data message (1101);
the generation of a type field (512); and
the monitoring of the shared medium (102).

4. Interface apparatus (103, 107, 1020) according to one of Claims 1 to 3, wherein the resource management device (201) is configured to implement at least one command/response protocol selected from the protocol family MILBUS protocol, MIL-STD-1553B, EFABUS (European Fighter Aircraft Bus Protocol) and EFEx (European Fighter Aircraft Bus Express Protocol).

5. Interface apparatus (103, 107, 1020) according to one of Claims 1 to 4, wherein the first interface (104, 109, 1021) has a useful-data memory (200f) and/or the second interface (105, 110, 1022) has a transmission register (203).

6. Interface apparatus (103, 107, 1020) according to one of Claims 1 to 5, wherein the resource management device (201) is configured to control at least part of the buffering device as a first-in-first-out memory.

7. Interface apparatus (103, 107, 1020) according to Claim 5 or 6, wherein at least two memories from the group of memories comprising the intermediate memory, the useful-data memory and the transmission memory are partial regions of a common memory.

8. Interface apparatus (103, 107, 1020) according to one of Claims 1 to 7, wherein the resource management device (201) is configured to control the exchange of the different time-critical useful data (507, 507') between the first interface (104, 109, 1021) and the second interface (105, 110, 1022) by managing a pointer (1012) to the first interface (104, 109, 1021) and/or to the second interface (105, 110, 1022).

9. Interface apparatus (103, 107, 1020) according to one of Claims 1 to 8, wherein the resource management device (201) has an event evaluation device (1009), which can detect an event (1008) on the first interface (104, 109, 1021) and/or an event on the second interface (105, 110, 1022), and can allocate at least part of a resource (1003a, 1003b) exclusively for the exchange of different time-critical useful data (507, 507').

10. Interface apparatus (103, 107, 1020) according to one of Claims 1 to 9, further having:
a change-over device (200d);
wherein the change-over device (200d) is configured to adjust the resource management device (201) such that it operates as at least one component of the command/response protocol, wherein the group comprises possible components from:
a bus controller (201c);
a remote terminal (201b); and
a bus monitor.

11. Avionics component (101, 120a, 120b, 120c, 120d, 120e, 120f, 1000), having:
a host device (106, 108, 1003a, 1003b);
an interface apparatus (103, 107, 1020) according to one of Claims 1 to 10;
a media connection device (204, 204', 1005);
wherein the host device (106, 108, 1003a, 1003b) is configured to carry out an avionics application,
wherein the avionics application generates and/or evaluates useful data (507, 507');
wherein the host device (106, 108, 1003a, 1003b) is connected to the interface apparatus (103, 107, 1020) to exchange useful data (507, 507');
wherein the interface apparatus (103, 107, 1020) is connected to the media connection device (204, 204', 1005) to exchange the useful data (507, 507').

12. Collision avoidance system, having:
at least two interface apparatuses (103, 107, 1020) according to one of Claims 1 to 10;
at least two media connection devices (204, 204', 1005) which connect the at least two interface apparatuses (103, 107, 1020) via a shared medium (102) and which each operate with the collision detection protocol;
wherein the at least two interface apparatuses (103, 107, 1020) use the command/response protocol and, by means of a time monitoring device (201h), monitor the time behaviour of the command/response protocol such that the time behaviour of the command/response protocol is adhered to, in order to avoid collisions of the collision detection protocol.

13. Method for exchanging different time-critical useful data between a host device and a shared medium, having
operating a first interface of an interface apparatus with a first clock pulse;
operating a second interface of the interface apparatus with a second clock pulse, which can differ from the first clock pulse;
connecting the first interface and the second interface to a buffering device;
exchanging the different time-critical useful data between the first interface and the second interface via the buffering device;
controlling the exchange of the different time-critical useful data between the first interface and the second interface by means of a resource control device in such a way that collisions of the different time-critical useful data within the interface apparatus and on a shared medium connected to the interface apparatus are avoided, in order to permit a deterministic behaviour during the exchange of the different time-critical useful data; and
temporarily storing the different time-critical useful data in such a way that a clock pulse difference between the first clock pulse and the second clock pulse is balanced out;
generating a transmission frame of a collision detection protocol, in which the functionality of layer 2 of the OSI model is extended by a command/response protocol.

14. Storage medium, in which there is stored a program which, when it is executed by a processor, carries out the method according to Claim 13.

## Revendications

1. Dispositif d'interface (103, 107, 1020) servant à l'échange de différentes données utiles critiques en temps (507, 507') entre un dispositif hôte (106, 108, 1003a, 1003b) et un support partagé (102), comportant :
une première interface (104, 109, 1021) servant à l'échange des différentes données utiles critiques en temps (507, 507') avec le dispositif hôte (106, 108, 1003a, 1003b) ;
une deuxième interface (105, 110, 1022) servant à l'échange des différentes données utiles critiques en temps (507, 507') avec le support partagé (102) ;
un dispositif de gestion de ressources (201),
un dispositif de stockage intermédiaire (200, 1010) ;
dans lequel la première interface (104, 109, 1021) fonctionne selon une première horloge (701) ;
dans lequel la deuxième interface (105, 110, 1022) fonctionne selon une deuxième horloge (700a, 700b) différente de la première horloge (701) ;
dans lequel la première interface (104, 109, 1021) et la deuxième interface (105, 110, 1022) sont connectées au dispositif de stockage intermédiaire (200, 1010) afin de permettre l'échange des différentes données utiles critiques en temps (507, 507') entre la première interface (104, 109, 1021) et la deuxième interface (105, 110, 1022) par l'intermédiaire du dispositif de stockage intermédiaire (200, 1010) ;
dans lequel le dispositif de gestion de ressources (201) est conçu pour commander l'échange des différentes données utiles critiques en temps (507, 507') entre la première interface (104, 109, 1021) et la deuxième interface (105, 110, 1022) de manière à éviter des collisions entre les différentes données utiles critiques en temps (507, 507') dans le dispositif d'interface (103, 107, 1020) et sur le support partagé (102), afin de permettre un comportement déterministe lors de l'échange des différentes données utiles critiques en temps (507, 507') ; et
dans lequel le dispositif de gestion de ressources (201) est en outre conçu pour commander le dispositif de stockage intermédiaire (200, 1010) de manière à ce que les différentes données utiles critiques en temps (507, 507') puissent être stockées de manière intermédiaire à l'aide du dispositif de stockage intermédiaire (200, 1010) afin de compenser une différence d'horloge entre la première horloge (701) et la deuxième horloge (700a, 700b) ;
dans lequel une trame de transmission d'un protocole de détection de collisions est générée dans le dispositif d'interface, dans lequel la fonctionnalité de la couche 2 du modèle OSI est enrichie par un protocole à instruction/réponse.

2. Dispositif d'interface (103, 107, 1020) selon la revendication 1, comportant en outre
un dispositif de surveillance temporelle (201h) ;
dans lequel le dispositif de surveillance temporelle (201e) est conçu pour surveiller le comportement dans le temps du protocole à instruction/réponse de manière à préserver le comportement dans le temps du protocole à instruction/réponse.

3. Dispositif d'interface (103, 107, 1020) selon la revendication 1 ou 2, dans lequel le dispositif de gestion de ressources est conçu pour exécuter au moins une fonction du protocole à instruction/réponse, dans lequel le groupe de fonctions comprend
le traitement d'une liste de bus (200c) ;
la reconnaissance d'un message de commande (1100) ;
la reconnaissance d'un préambule dans un paquet de données ;
l'évaluation d'un préambule d'un paquet de données ;
la génération d'un préambule d'un paquet de données ;
la génération d'un message d'état (1102) ;
la génération d'un message de données (1101) ;
la génération d'un champ de type (512) ; et
la surveillance du support partagé (102).

4. Dispositif d'interface (103, 107, 1020) selon l'une des revendications 1 à 3, dans lequel le dispositif de gestion de ressources (201) est conçu pour mettre en oeuvre au moins un protocole à instruction/réponse choisi dans la famille des protocoles MILBUS, MIL-STD-1553B, EFABUS (European Fighter Aircraft Bus Protocol) et EFEx (European Fighter Aircraft Bus Express Protocol).

5. Dispositif d'interface (103, 107, 1020) selon l'une des revendications 1 à 4, dans lequel la première interface (104, 109, 1021) comporte une mémoire de données utiles (200f) et/ou la deuxième interface (105, 110, 1022) comporte un registre de transmission (203).

6. Dispositif d'interface (103, 107, 1020) selon l'une des revendications 1 à 5, dans lequel le dispositif de gestion de ressources (201) est conçu pour commander au moins une partie du dispositif de stockage intermédiaire sous la forme d'une mémoire du type premier entré premier sorti.

7. Dispositif d'interface (103, 107, 1020) selon la revendication 5 ou 6, dans lequel au moins deux mémoires du groupe constitué par la mémoire intermédiaire, la mémoire de données utiles et la mémoire de transfert sont des zones partielles d'une mémoire partagée.

8. Dispositif d'interface (103, 107, 1020) selon l'une des revendications 1 à 7, dans lequel le dispositif de gestion de ressources (201) est conçu pour commander l'échange des différentes données utiles critiques en temps (507, 507') entre la première interface (104, 109, 1021) et la deuxième interface (105, 110, 1022) par gestion d'un indicateur (1012) sur la première interface (104, 109, 1021) et/ou sur la deuxième interface (105, 110, 1022).

9. Dispositif d'interface (103, 107, 1020) selon l'une des revendications 1 à 8, dans lequel le dispositif de gestion de ressources (201) comporte un dispositif d'évaluation d'événement (1009) qui peut reconnaître un événement (1008) au niveau de la première interface (104, 109, 1021) et/ou un événement au niveau de la deuxième interface (105, 110, 1022), et peut allouer au moins une partie d'une ressource (1003a, 1003b) exclusivement à l'échange de différentes données utiles critiques en temps (507, 507').

10. Dispositif d'interface (103, 107, 1020) selon l'une des revendications 1 à 9, comprenant en outre :
un dispositif de commutation (200d) ;
dans lequel le dispositif de commutation (200d) est conçu pour régler le dispositif de gestion des ressources (201) afin qu'il fonctionne en tant qu'au moins un composant du protocole à instruction/réponse, dans lequel le groupe de composants possibles comprend :
un contrôleur de bus (201c) ;
un terminal distant (201b) ; et
un moniteur de bus.

11. Composant d'avionique (101, 120a, 120b, 120c, 120d, 120e, 120f, 1000), comportant :
un dispositif hôte (106, 108, 1003a, 1003b) ;
un dispositif d'interface (103, 107, 1020) selon l'une des revendications 1 à 10 ;
un dispositif de connexion de support (204, 204', 1005) ;
dans lequel le dispositif hôte (106, 108, 1003a, 1003b) est conçu pour exécuter une application d'avionique ;
dans lequel l'application d'avionique génère et/ou évalue des données utiles (507, 507') ;
dans lequel le dispositif hôte (106, 108, 1003a, 1003b) est connecté au dispositif d'interface (103, 107, 1020) pour l'échange des données utiles (507, 507') ;
dans lequel le dispositif d'interface (103, 107, 1020) est connecté au dispositif de connexion de support (204, 204', 1005) pour l'échange des données utiles (507, 507').

12. Système d'évitement de collisions, comprenant :
au moins deux dispositifs d'interface (103, 107, 1020) selon l'une des revendications 1 à 10 ;
au moins deux dispositifs de connexion de support (204, 204', 1005) connectant lesdits au moins deux dispositifs d'interface (103, 107, 1020) par l'intermédiaire d'un support partagé (102) et fonctionnant respectivement conformément au protocole de détection de collisions ;
dans lequel lesdits au moins deux dispositifs d'interface (103, 107, 1020) utilisent le protocole à instruction/réponse et surveillent le comportement dans le temps du protocole à instruction/réponse au moyen d'un dispositif de surveillance temporelle (201h) de manière à préserver le comportement dans le temps du protocole à instruction/réponse afin d'éviter des collisions du protocole de détection de collisions.

13. Procédé d'échange de différentes données utiles critiques en temps entre un dispositif hôte et un support partagé, consistant à
exploiter une première interface d'un dispositif d'interface selon une première horloge ;
exploiter une deuxième interface du dispositif d'interface selon une deuxième horloge qui peut être différente de la première horloge ;
connecter la première interface et la deuxième interface à un dispositif de stockage intermédiaire ;
échanger les différentes données utiles critiques en temps entre la première interface et la deuxième interface par l'intermédiaire du dispositif de stockage intermédiaire ;
commander l'échange des différentes données utiles critiques en temps entre la première interface et la deuxième interface au moyen d'un dispositif de commande de ressources de manière à éviter des collisions entre les différentes données utiles critiques en temps dans le dispositif d'interface et sur un support partagé connecté au dispositif d'interface afin de permettre un comportement déterministe lors de l'échange des différentes données utiles critiques en temps ; et stocker de manière intermédiaire les différentes données utiles critiques en temps de manière à compenser une différence d'horloge entre la première horloge et la deuxième horloge ;
générer une trame de transmission d'un protocole de détection de collisions dans lequel la fonctionnalité de la couche 2 du modèle OSI est enrichie par un protocole à instruction/réponse.

14. Support de stockage stockant un programme qui, lorsqu'il est exécuté par un processeur, met en oeuvre le procédé selon la revendication 13.
